(19) Europäisches Patentamt
European Patent Office
Office européen des brevets

(11) EP 1 675 126 B1

(12) **EUROPEAN PATENT SPECIFICATION**

(45) Date of publication and mention of the grant of the patent:
**30.07.2008 Bulletin 2008/31**

(51) Int Cl.:
***G11B 27/10*** *(2006.01)* ***G11B 27/34*** *(2006.01)*
***G11B 27/32*** *(2006.01)* ***G11B 20/00*** *(2006.01)*

(21) Application number: **05110332.3**

(22) Date of filing: **04.11.2005**

(54) **Information storage medium, information recording method, information playback method, information recording apparatus, and information playback apparatus**

Medium zur Speicherung von Informationen, Methode zur Aufzeichnung von Informationen, Methode zur Wiedergabe von Informationen, Gerät zur Aufzeichnung von Informationen und Gerät zur Wiedergabe von Informationen

Medium pour le stockage de l'information, méthode pour l'enregistrement de l'information, méthode pour la reproduction de l'information, appareil pour l'enregistrement de l'information et appareil pour la reproduction de l'information

(84) Designated Contracting States:
**DE FR GB**

(30) Priority: **06.12.2004 JP 2004353392**

(43) Date of publication of application:
**28.06.2006 Bulletin 2006/26**

(73) Proprietor: **KABUSHIKI KAISHA TOSHIBA**
**Tokyo 105-8001 (JP)**

(72) Inventors:
- **Kikuchi, Shinichi**
**Toshiba Corporation**
**Minato-ku**
**Tokyo, 105-8001 (JP)**
- **Nakashika, Masahiro**
**Toshiba Corporation**
**Minato-ku**
**Tokyo, 105-8001 (JP)**
- **Yoshida, Hitoshi**
**Toshiba Corporation**
**Minato-ku**
**Tokyo, 105-8001 (JP)**

(74) Representative: **Henkel, Feiler & Hänzel**
**Patentanwälte**
**Maximiliansplatz 21**
**80333 München (DE)**

(56) References cited:
**EP-A- 0 814 619** **EP-A- 0 903 744**
**EP-A- 1 150 504** **EP-A- 1 367 587**
**EP-A- 1 473 945** **US-A- 5 859 660**
**US-A1- 2001 036 355** **US-A1- 2003 058 948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The invention relates to an information storage medium (or data structure), an information recording/ playback method, and an information recording/playback apparatus, which are suited to record/play back a digital stream signal used in digital TV broadcast or the like.

In recent years, TV broadcasting has entered the era of digital broadcasts having Hi-Vision programs (programs of high-definition AV information) as principal broadcast contents. The current digital broadcast (and forthcoming terrestrial digital broadcast) adopts an MPEG2 transport stream (to be abbreviated as MPEG-TS hereinafter). In the field of digital broadcast using moving pictures, MPEG-TS will be used as a standard format in the future. At the start of such digital TV broadcasting, market needs for a streamer that can directly record digital TV broadcast contents are increasing.

As an example of a streamer that utilizes an optical disc such as a DVD-RAM or the like, "A recording/playback apparatus" (Jpn. Pat. Appln. KOKAI Publication No. 2002-84479) is known.

For example, when a long music program in which a short news program is inserted (NHK Red & White Year-end Song Festival BS digital broadcasted on the new year eve) is stream-recorded in a news cut mode (video recording is paused at the news part), a stream object of a recorded program is divided into two stream objects at the news cut part. In such case, the two stream objects are normally continuously recorded at physically neighboring locations. However, these stream objects may be discontinuously recorded at physically separate locations. In this example, the playback times of the contents of the two stream objects are logically continuous independently of whether or not the two stream objects are physically continuous. The same applies to a case wherein one movie in which CMs are inserted is stream-recorded in a CM cut mode. Even when physical discontinuity occurs among a plurality of stream objects at CM cut parts, the playback times as a series of movie contents are logically continuous.

On the other hand, when program A of channel X is stream-recorded, and program B of channel Y is then stream-recorded, the playback times of the contents of stream objects of programs A and B are not continuous (logically discontinuous) even when their recording locations are physically continuous.

In this manner, when stream video recording is made by a plurality of stream objects, whether or not neighboring stream objects have logical continuity (continuity of playback times in a single program) in place of physical continuity influences the decoding process (setting process of system time clock STC and the like) upon playback. More specifically, when the STC setting is inappropriately made (STC reset, etc.) without recognizing continuity of playback times, a wait time by means of still picture display may be generated for a relatively long period of time when playback shifts from the end of the former stream object of a single program to the head of the latter stream object.

EP-A-1 367 587 discloses a data recording apparatus capable of properly managing contents of data and reproduction information even if a portion of the data is deleted. If a portion of clip is deleted so that an ATC-sequence becomes discontinuous, the value of offset_STC_id for an STC-sequence at the beginning of the ATC-sequence is set so that the value of stc_id of each STC-sequence following the ATC discontinuity does not change. stc_id of an STC-sequence is an ID for identifying the STC-sequence.

Furthermore US-A-5 859 660 discloses a method and an apparatus for non-seamless splicing of audio-video transport streams configured in accordance with MPEG-2 or other suitable techniques. A first transport stream is to be spliced with a second transport stream at a splice point. The first stream is configured such that the final first stream frame to be displayed will be a black frame or will have another suitable characteristic. Null packets are then delivered in place of the first stream transport packets for a predetermined period of time after the splice point. The predetermined time is generally greater than the sum of the splice decoding delay associated with the splice point and the maximum frame duration in the first stream. The transport packets of the second stream are then delivered. Null packets may be again delivered for a period of time sufficient to allow the final frame of the second stream to be displayed. The final first stream frame can be guaranteed to be a black frame by directing a digital stream insertion device to insert a black I-frame followed by an end-of-sequence code into the first stream.

It is an object of the invention to provide a scheme which can indicate whether or not a plurality of objects have logical continuity when there are a plurality of objects recorded by stream recording such as MPEG-TS or the like.

According to the present invention the above object is achieved by an information storage medium according to claim 1, a recording method according to claim 2, a playback method according to claim 3, a recording apparatus according to claim 4 and a playback apparatus according to claim 5.

The invention can be more fully understood from the following detailed description when taken in conjunction with the accompanying drawings, in which:

FIG. 1 is a view for explaining the data structure according to an embodiment of the invention;
FIG. 2 is a view for explaining the relationship among a playback management information layer, object management information layer, and object layer in the data structure according to the embodiment of the invention;
FIG. 3 is a view for explaining the file structure according to the embodiment of the invention;
FIG. 4 is a view for explaining an example of the configuration of a field (HDVR_MGI) of management information recorded on AV data management information recording area 130;
FIG. 5 is a view for explaining a practical example of DISC_RSM_MRKI;
FIG. 6 is a view for explaining a practical example of EX_DISC_REP_PICI;
FIG. 7 is a view for explaining a practical example of EX_PL_SRPT;
FIG. 8 is a view for explaining an example of the configuration of another field (EX_M_AVFIT) of one management information (HDVR_MG) in the data structure according to the embodiment of the invention;
FIG. 9 is a view for explaining a practical example of EVOB_TMAP_GI;
FIG. 10 is a view for explaining an example of the configuration of ESTR_FI;
FIG. 11 is a view for explaining a practical example of HR_SFIxx.IFO;
FIG. 12 is a view for explaining an example of the configuration of ESOBI_GI;
FIG. 13 is a view for explaining various kinds of information included in the ESOBI_GI;
FIG. 14 is a view for explaining an example of the configuration of ESOB_ESI;
FIG. 15 is a view for explaining an example of the configuration of ESOB V ESI and an example of the configuration of video attribute V_ATTR included in this ESOB_V_ESI;
FIG. 16 is a view for explaining an example of the configuration of ESOB_A_ESI and an example of the configuration of audio attribute AUDIO_ATTR included in this ESOB_A_ESI;
FIG. 17 is a view for explaining an example of the configuration of ESOB_OTHER_ESI;
FIG. 18 is a view for explaining an example of the configuration of copy control information (copyright protection information) CP_CTL_INFO;
FIG. 19 is a view for explaining a practical example of ESOB_DCNI;
FIG. 20 is a view for explaining an example of the configuration of ESOB_GPI;
FIG. 21 is a view for explaining an example of the configuration of ESOB_GPI_GI, GPI_SRP#, and GPI#;
FIG. 22 is a view for explaining an example of the configuration of ESOB_SMLI;
FIG. 23 is a view for explaining an example of the configuration of ESOB_TMAP (type A);
FIG. 24 is a view for explaining an example of the configuration of ESOB_TMAP (type B);
FIG. 25 is a view for explaining an example of the configuration of HR_VTMAP.IFO and HR_STMAPx.IFO included in the DVD_HDVR directory;
FIG. 26 is a view for explaining an example of the configuration of EX_VTMAPTI, each EX_VTMAP_SRP#, and each EX_VTMAPI;
FIG. 27 is a view for explaining an example of the configuration of the contents of each EVOBU_ENT#;
FIG. 28 is a view for explaining an example of the configuration of various kinds of information included in STMAPT (type A);
FIG. 29 is a view for explaining an example of the configuration of various kinds of information included in STMAPT (type B);
FIG. 30 is a view for explaining an example of information stored in ETMAPI_GI and ETMAPI#;
FIG. 31 is a view for explaining an example (example of type A) of the configuration of the contents of ESOBU_ENT#;
FIG. 32 is a view for explaining an example (example of type B) of the configuration of the contents of AT_ESOBU_ENT#;
FIG. 33 is a view for explaining an example of the configuration of PGC information (EX_ORG_PGC information and EX_playlist information/EX_UD_PGC information) included in HDVR_VMG;
FIG. 34 is a view for explaining an example of the configuration of EX_PGC information;
FIG. 35 is a view for explaining a practical example of EX_CI:
FIG. 36 is a view for explaining a practical example of C_EPI;
FIG. 37 is a view for explaining an example of the configuration of PTM of ESOB (or EVOB);
FIG. 38 is a view for explaining an example of the configuration of a data unit (ESOBU) for a stream object;
FIG. 39 is a view for explaining a practical example of PKT_GRP_GI;
FIG. 40 is a view for explaining an example of the configuration of copy control information CCI# included in a packet group header;
FIG. 41 is a view for explaining an example of the configuration of FIRST_PATS_EXT;
FIG. 42 is a view for explaining a practical example of MNI;
FIG. 43 is a block diagram for explaining an example of an apparatus for recording and playing back AV information (digital TV broadcast program and the like) on and from an information storage medium (optical disc, hard disc, or the like) using the data structure according to the embodiment of the invention;
FIG. 44 is a flowchart (overall operation process flow) for explaining an example of the overall operation of the apparatus shown in FIG. 43;
FIG. 45 is a flowchart (edit operation process flow) for explaining an example of an edit process (ST28);
FIG. 46 is a flowchart for explaining an example of a video recording operation (part 1);
FIG. 47 is a flowchart for explaining an example of a video recording operation (part 2);

FIG. 48 is a flowchart (ESOB delimitation process flow) for explaining an example of an ESOB segmentation process (ST160);
FIG. 49 is a flowchart (buffer fetch process flow) for explaining an example of a buffer fetch process (ST130);
FIG. 50 is a flowchart (buffer fetch process flow) for explaining another example of FIG. 49;
FIG. 51 is a flowchart (PKT_GRP_GI setting process flow) for explaining an example of a packet group general information setting process (ST1340);
FIG. 52 is a flowchart (ESI setting process flow) for explaining a stream information (ESI) generation process (ST120);
FIG. 53 is a flowchart for explaining an example of a stream file information (ESTR_FI) generation process in a video recording end process (ST150);
FIG. 54 is a flowchart for explaining an example GPI setting process. ST1530;
FIG. 55 is a flowchart for explaining an example TMAP setting process ST1540;
FIG. 56 is a flowchart for explaining EVOB/ESOB structure setting process ST15400;
FIG. 57 is a flowchart for explaining CP_CTL_INFO (COI) generation process ST1220;
FIG. 58 is a flowchart (program setting process flow) for explaining an example of a program chain (PGC) generation process (including a program setting process) in the video recording end process (ST150);
FIG. 59 is a flowchart (overall playback operation flow) for explaining an example of a playback operation;
FIG. 60 is a flowchart for explaining a decoder setting process (ST217);
FIG. 61 is a flowchart for explaining an example of a process upon cell playback;
FIG. 62 is a flowchart for explaining an ESOB continuity check process (ST2201);
FIG. 63 is a flowchart for explaining an example of a data transfer process from a buffer RAM to a decoder;
FIG. 64 is a flowchart for explaining an example of a GP switching setting process;
FIG. 65 is a flowchart for explaining an example of a discontinuity process; and
FIG. 66 is a flowchart for explaining an example of a skip process.

Various embodiments of the invention will be described hereinafter with reference to the accompanying drawings. An MPEG-TS scheme as a basic format common to broadcast schemes which broadcast (distribute) compressed moving picture data such as a digital TV broadcast, or a broadcast that uses a wired network such as the Internet or the like, and so on is divided into a packet management data field and payload.

The payload includes data to be played back in a scrambled state. According to ARIB, a PAT (Program Association Table), PMT (Program Map Table), and SI (Service Information) are not scrambled. Also, various kinds of management information are generated using the PMT and SI (SDT: Service Description Table, EIT: Event Information Table, BAT: Bouquet Association Table).

The contents to be played back include MPEG video data, Dolby AC3 audio data, MPEG audio data, data broadcast data, and the like. Also, the contents include information required upon playback (e.g., PAT, PMT, SI, and the like) although they are not directly related to the contents to be played back. The PAT includes the PID (Packet Identification) of the PMT for each program, and the PMT records the PIDs of video data and audio data.

A normal playback sequence of an STB is as follows. That is, when the user determines a program based on EPG information, the PAT is loaded at the start time of the target program. The PID of a PMT, which belongs to the desired program, is determined on the basis of that data, and the target PMT is read out in accordance with that PID. Then, the PIDs of video and audio packets to be played back, which are included in the PMT, are determined. Video and audio attributes are read out based on the PMT and SI and are set in respective decoders. The video and audio data are extracted and played back in accordance with their PIDs. Note that the PAT, PMT, SI, and the like are transmitted at intervals of several 100 ms since they are also used during playback.

Different digital broadcast schemes are adopted in respective countries and broadcast stations: for example, DVB (Digital Video Broadcasting) in Europe; ATSC (Advanced Television Systems Committee) in U.S.A.; and ARIB (Association of Radio Industries and Businesses) in Japan.

In DVB, the video format is MPEG2, the resolutions are 1152*1440i, 1080*1920(i, p), 1035*1920, 720*1280, (576, 480)*(720, 544, 480, 352), and (288, 240)*352, the frame frequencies are 30 Hz and 25 Hz, the audio format includes MPEG-1 audio and MPEG-2 Audio, and the sampling frequencies are 32 kHz, 44.1 kHz, and 48 kHz.

In ATSC, the video format is MPEG2, the resolutions are 1080*1920(i, p), 720*1280p, 480*704(i, p), and 480*640(i, p), the frame frequencies are 23.976 Hz, 24 Hz, 29.97 Hz, 30 Hz, 59.94 Hz, and 60 Hz, the audio format includes MPEG1 Audio Layer 1 & 2 (DirecTV) and AC3 Layer 1 & 2 (Primstar), and the sampling frequencies are 48 kHz, 44.1 kHz, and 32 kHz.

In ARIB, the video format is MPEG2, the resolutions are 1080i, 720p, 480i, and 480p, the frame rates are 29.97 Hz and 59.94 Hz, the audio format includes AAC (MPEG-2 Advanced Audio Coding), and the sampling frequencies are 48 kHz, 44.1 kHz, 32 kHz, 24 kHz, 22.05 kHz, and 16 kHz.

In this manner, digital broadcast schemes are different in different countries, and may be different for respective broadcast stations. For this reason, a recorder must record objects as one or a plurality of files in accordance with each individual scheme to be used. For this reason, files to be further added to the existing VR file configuration are configured to allow the presence of a plurality of "x"s in the file names HR_SFIx.IFO and HR_SFIx.bup, as shown in FIG. 3. One or more files with such configuration are added for respective broadcast schemes. For example, when "x" = 00, such files can be used when the broadcast scheme is unknown or the recorder does not support that broadcast scheme. In this case, a stream whose broadcast scheme is unknown or a stream which is not supported by the recorder can be saved as a stream (SOB_STRB) of TYPE B. Hence, since ESTR_FI as management information for digital broadcast is changed for each broadcast station (or each broadcast scheme), a plurality of pieces of ESTR_FI exist.

FIG. 10 is a view for explaining an example of the configuration of ESTR_FIT. In this configuration, one or more pieces of file search pointer information ESTR_FI__SRP exist so as to designate ESTR_FI files to be used. As shown in FIG. 10, the structure of each ESTR_FI_SRP includes file name ESTR_FI_FN of ESTR_FI, update date information ESTR_FI_LAST_MOD_TM of the ESTR_FI file, ESTR_FI file size ESTR_FI_SZ, AP_FORMAT_1 as broadcast scheme information, country code Count_code, packet type PKT_TY, the number ESOBI_Ns of pieces of ESOBI, and the like. Note that the update date information is also set in the ESTR_FI file. When ESTR_FI is changed upon editing, that value is updated. Upon playback, the updated value is compared with the value in the ESTR_FI file. If the two values are the same, playback is permitted. The number of pieces of ESTR_FI is seven or less, and the number of pieces of ESOBI is 999 or less. A part "nn" of ESTR_FI file name: HR_SFInn.IFO is reflected in File Name: HR_STMnn.IFO of an STMAP, thus determining the file name of the STMAP.

FIG. 11 is a view for explaining a practical example of HR_SFIxx.IFO. The ESTR_FI file (HR_SFIxx.IFO) has the same configuration as that of normal ESTR_FI, as shown in FIG. 11. Furthermore, in case of a cognizable stream (STRA of TYPE A), a TMAP can be generated on the PTM base. However, in case of a non-cognizable stream (when data cannot be descrambled or when data of a scheme different from the assumed broadcast station is input: STRB of TYPE B), the TMAP may be generated in a reception time (PATS) base in place of PTM base. However, since the PATS is not a playback time, special playback or the like which is accurate in terms of time cannot be made, but rough special playback (fastforwarding playback, rewinding playback, or the like which allows the user to roughly confirm the recorded contents) can be made.

In FIG. 11, PATS_SS includes a value indicating the accuracy of the PATS. For example, when an apparatus shown in FIG. 43 to be described later fetches data itself of a network, IEEE1394, or the like, the PATS includes 4 bytes or is a dummy in some cases. In order to cope with such case, PATS_SS values "00 = both PATS and FIRST_PATS_EXT (see FIG. 41) are valid: accuracy 6 bytes)", "01 = only PATS is valid: accuracy 4 bytes", and "10 = both PATS and FIRST_PATS_EXT are invalid: no accuracy" are prepared.

As one of the features of digital broadcasting, for example, multi-view broadcast is known. In multi-view broadcast, a plurality of video data are broadcasted at the same time (by time sharing), and the user can play back one of these video data of his or her choice. In this manner, the user can select one of a plurality of contents according to his or her favor or the like. For example, when a recorder receives, as one TS, streams X, Y, and Z as multi-view broadcast and stream U as rain attenuation broadcast, the control must be made to allow the user to select and play back a required stream upon playback, and to freely switch among streams using a key. To cope with this, grouping information (GPI) is added to achieve this object.

Furthermore, a DVD recorder normally has TMAPI as VOB management information. This information is used to divide VOB/SOB for each VOBU/SOBU and to implement playback, special playback, and the like for that unit, and a maximum of one information is required per 0.5s. For this reason, if the disc size increases in the future or a compression method with high compression efficiency is adopted, the number of pieces of TMAPI increases, and complex management is required when performing editing or the like. If TMAPI is stored in IFO, management data in other non-related fields must be moved or rewritten every time TMAPI is changed, resulting in poor efficiency. In order to improve such situation, TMAPI is recorded in an independent field.

Moreover, a video recorder may have unique functions which are not described in the DVD format, depending on the manufacturer and model, and may be differentiated from other manufacturers. In this case, manufacturer unique information must be embedded in object data. Hence, in the embodiment of the invention, MNFI (Manufacturer's Information) is assured in a packet group header as its field.

FIG. 1 is a view for explaining the data structure according to an embodiment of the invention. As shown in FIG. 1, data in a DVD disc include a volume/file structure information area that stores a file system, and a data area that actually records data files. The file system includes information indicating the recording locations of files. The data area is divided into areas that record general computer data, and an area that records AV data. The AV data recording area includes an AV data management information area that stores a VMG file used to manage AV data, a VR object group recording area that records object data (EVOBS) files (VRO files) complying with the video recording standard, and a recording area that records stream object data (ESOBS: Extended Stream Object Set) files (SRO files) which record objects (ESOBS) compatible to digital broadcast. Note that different directories are prepared in correspondence with formats (e.g., VIDEO-TS for DVD-Video (ROM Video) and DVD-RTAV for DVD-RTR (recordable/reproducible DVD), and the digital broadcast compatible DVD standard to be described below is recorded in, e.g., a DVD_HOVR directory.

FIG. 2 is a view for explaining the relationship among a playback management information layer, object management information layer, and object layer in the data structure according to the embodiment of the invention. That is, a DVD_HDVR directory (to be described later with reference to FIG. 3) records a VMG file used to manage data, VRO files as object files for analog recording of analog broadcast data, line-in data, and the like, and an SRO file as a digital broadcast object. The SRO file records an SOBS (Stream Object Set). As shown in FIG. 2, management data is recorded in the VMG file common to VR, and undergoes control common to VR. The management data is linked for each cell, and the playback location is designated for each playback time. This management data is called VR_MANGER.IFO. When a TMAPT is recorded as an independent file, HR_VTMAP.IFO and HR_STMAP.IFO, and HR_VTMAP.BUP and HR_STMAP.BUP as their backup files are added, as shown in FIG. 3.

The structure of each ESOBU includes one or more ESOB data. Each ESOB corresponds to, e.g., one program. The ESOB includes one or more ESOBUs (Extended Stream object units), each of which corresponds to object data for a given time interval (which changes depending on the value of ESOBU_PB_TM_RNG) or one or more GOP data. When the transfer rate is low, one GOP data cannot often be sent within 1s (1 second) (VR can freely set the data unit configuration since it adopts internal encoding, but a digital broadcast cannot specify the next incoming data since encoding is done by a broadcast station). On the other hand, the transfer rate may be high, and 1-picture data may be sent frequently. In such case, the ESOBU is delimited frequently, and ESOBU management information increases accordingly, thus ballooning the whole management information. For this reason, it is appropriate to delimit ESOBUs by a given time interval (a minimum limitation is to delimit ESOBUs by picture data except for the last ESOBU of the ESOB: the delimitation unit corresponds to an 1-picture (e.g., for each sec)) or by one or more GOP data. When management information is formed on the PATS base in case of a non-cognizable stream, the ESOBUs are delimited at time intervals indicated by SOBU_PATS_TM_RNG. There are two types of SOBU_PATS_TM_RNG: it is designated in seconds or by a 27-MHz count value.

In this embodiment, one ESOBU includes one or more packet groups, each of which can correspond to 16 (or 32) logical blocks (1 LB = 2048 bytes; 16 LBs = 32640 bytes). Each packet group includes a packet group header and (170) TS packets. The arrival time of each TS packet can be expressed by a PAT (Packet Arrival Time: 4 bytes) which is allocated before each TS packet.

The arrival times of TS packets must be linearly counted up until a video recording end time to have a video recording start time as 0 (or a predetermined value). Note that the STC and PATS do not always indicate the same value (due to different default values or the like). However, the count interval of a PATS counter must be synchronized with that of an STC counter which corresponds to the interval between neighboring PCR fetch timings in a playback synchronized state. Note that the PCR is included in an adaptation field (not shown) in an MPEG-TS shown in FIG. 38. However, a packet group can include a maximum of two ESOBs. That is, packet groups need not be aligned for respective ESOBs.

FIG. 38 is a view for explaining an example of the configuration of a stream object data unit (ESOBU). As shown in FIGS. 38 to 42, a packet group header sets a sync pattern at the head of a packet group, and includes packet group general information PKT_GRP_GI, copy management information CCI (Copy Control Information), extended bytes FIRST_PATS_EXT of the PATS of the first packet, and manufacturer's information MNI (or MNFI).

FIG. 39 is a view for explaining a practical example of the PKT_GRP_GI. The PKT_GRP_GI includes packet group type PKT_GRP_TY (indicating an MPEG-TS packet group when PKT_GRP_TY = 01), DVD BOOK version number VERSION supported by the packet group, status information PKT_GRP_SS of the packet group, and the number Valid_PKT_Ns of valid packet in the packet group. Note that the FIRST_PATS_EXT in the packet group header includes the upper 2 bytes of the PATS for the first packet.

Furthermore, the status information PKT_GRP_SS (FIG. 39) of the packet group includes bit STUF indicating if stuffing is done (if this bit is set, it indicates that the Valid_PKT_Ns assumes a value other than 0xAA), and PATS_SS. Note that the PATS_SS (see a description of FIG. 11) includes a value indicating the accuracy of the PATS (00 = both PATS and FIRST_PATS_EXT are valid: accuracy 6 bytes), 01 = only PATS is valid: accuracy 4 bytes, and 10 = both PATS and FIRST_PATS_EXT are invalid: no accuracy).

FIG. 40 is a view for explaining an example of the configuration of copy control information CCI# included in a packet group header. CCI may store digital copy control (00 = copy never, 01 = copy once, 11 = copy free), analog copy control (00 = no APS, 01 = APS type 1, 10 = APS type 2, 11 = APS type 3), EPN (0 = contents protection, 1 = no contents protection), and ICT (Image_Constraint_Token: 0 = analog video output resolution constraint, 1 = no constraint), or may also store retention information (that allows temporary storage for a time indicated by state when the "copy never" mode and Retention = 0 are set when copy never is set). Note that APS is an abbreviation for "Analog Protection System", and the embodiment of the invention assumes Macrovision.

FIG. 41 is a view for explaining a practical example of extended bytes FIRST_PATS_EXT of the PATS of the first packet. The FIRST_PATS_EXT corresponds to the upper 2 bytes of the arrival time of the packet at the head of the packet group, and the remaining 4 bytes are assigned before each packet. In this manner, the playback process with an accurate time is allowed.

FIG. 42 is a view for explaining a practical example of the manufacturer's information (MNI or MNFI). The MNI or MNFI includes MNF_ID and MNF_DATA. The MNF_ID is a value representing each manufacturer (vendor). The MNF_DATA after the MNF_ID is a data field which can be freely set for each vendor.

The management information will be described below with reference to FIGS. 3 to 37. FIG. 3 is a view for explaining the file structure according to the embodiment of the invention. As shown in FIG. 3, the HDVR directory stores HR_MANGER.IFO as a DVD management information file, VRO files as analog video object files, and an SRO file that supports digital broadcast.

FIG. 4 is a view for explaining an example of the configuration of a field (HDVR_MGI) of management information recorded on AV data management information recording area 130. In the VMG file as the management information, an ESTR_FIT (Extended Stream File Information table) is added to the management information of the conventional DVD-VR standard, as shown in FIG. 4.

FIG. 5 is a view for explaining a practical example of DISC_RSM_MRKI. The resume mark information (DISC_RSM_MRKI) of the whole disc is set to include program chain number PGCN, program number PGN, cell number CN, mark pointer information MRK_PT including playback start PTM and the like (including the PTM/PATS/S_ESOB_ENT number, and the like on a target ESOB), ESI number V_ESN of a video stream to be played back, ESI number A_ESN of an audio stream to be played back, main/sub information in case of Dual-Mono (main/sub audio switch flag), date information MRK_TM indicating the date of creation of that marker, and the like, as information used to restart the paused playback.

FIG. 6 is a view for explaining a practical example of EX_DISC_REP_PICI. The representative picture information (EX_DISC_REP_PICI) of the disc is set to include picture pointer PIC_PT including the start PTM and the like of the representative picture (including the PTM/PATS/S_ESOB_ENT number, and the like on a target ESOB), ESI number V_ESN of a video stream to be played back, the playback time and/or playback end time of the representative picture, date information PIC_CL_TM indicating the date of creation of the representative picture, and the like, in addition to program chain number PCGN, program number PGN, and cell number CN of that representative picture.

FIG. 7 is a view for explaining a practical example of EX_PL_SRPT. The EX_PL_SRPT is a search pointer to each playlist, and also includes PL_RSM_MRKI, which is set with a resume marker (marker indicating the playback location upon pausing playback) for each playlist. As information used to restart playback, this PL_RSM_MRKI is set to include cell number CN corresponding to the resume marker, picture pointer PIC_PT (corresponding to the playback start PTM and the like) corresponding to the resume marker, date information of MRK_TM indicating the date of creation of the marker, ESI number V ESN of a video stream to be played back, ESI number A_ESN of an audio stream to be played back, and a main/sub switch flag of audio information (main/sub information in case of Dual-Mono) included in the audio stream corresponding to the resume marker.

Furthermore, the EX_PL_SRPT includes PL_REP_PICTI, which is set with representative picture information (a marker of a picture to be displayed as a thumbnail on a title menu or the like) for each playlist. This PL_REP_PICTI is set to include target cell number CN, picture pointer PIC_PT (the start PTM, PATS, E_EVOB_ENT number, and the like of the representative picture of interest) on the target EVOB, ESI number V_ESN of a video stream (default stream) to be played back, date information PIC_CL_TM indicating the date of creation of the marker of the representative picture of interest, and the like.

Moreover, update date information of a VTMAPT as a TMAP (Time Map) for Video Recording (VR) for self recording/playback and that of an STMAPT as a TMAP for Stream Recording (SR) for digital broadcast recording are described. This value is compared with update date information described in each TMAPT file. If these values match, it is determined that they have consistency, and the processing is executed. Management information of stream data is saved in the VMG file, as shown in FIG. 3, and stream data are managed on the same level as VR data.

Stream management information is saved in the ESTR_FIT (Extended Stream File Information table). The ESTR_FIT includes ESTR_FITI (ESTR_FIT information), one or more ESTR_FI_SRPs, and one or more pieces of ESTR_FI (Extended Stream File Information) indicated by these SRPs. The ESTR_FITI includes the total number of pieces of ESTR_FI, and the end address of this table. Each ESTR_FI includes ESTR_FI_GI (ESTR_FI General Information), one or more ESOBI_SRPs (Extended Stream Object Information Search Pointers), and one or more pieces of ESOBI (ESOB Information) which are as many as the SRPs and are indicated by their values.

The ESTR_FI_GI includes the file name/file number of an object managed by the ESTR_FI of interest, the number of ESOBI_SRPs in the ESTR_FI of interest, the type (AP_FORMAT_1) of digital broadcast as a source of the contents to be recorded, the recording country code: Country code (JPN = Japan), PKT_TY (1 = MPEG-TS), PKT_GP_SZ (fixed to 16 logical blocks), and PKT_Ns (0XAA: fixed to 170 TS packets).

FIG. 12 is a view for explaining an example of the configuration of ESOBI_GI included in the ESOBI shown in FIG. 11. The ESOBI_GI includes various kinds of information shown in FIG. 12 in the order listed in FIG. 12. That is, the ESOBI includes ESOBI_GI, ESOBI_ESI corresponding to ESOB_V_ESI (Extended Video Elementary Information) and/or ESOB_A_ESI (Extended Audio Elementary Information), ESOB_DCNI (Discontinuity Information), ESOB_SMLI (ESOB Seamless Information), ESOB_AGAPI (ESOB Audio GAP Information), ESOB_TMAP (ESOB Time Map), ESOB_ES_GPI (ESOB_ES Group Information), and the like.

FIG. 13 is a view for explaining various kinds of information included in the ESOBI_GI. FIG. 13 shows the contents of various kinds of information shown in FIG. 12. That is, the ESOBI_GI includes AP_FORMAT (1 = ISDB-S: BS/CS broadcast, 2 = ISDB-T: terrestrial digital broadcast), video recording start time/video recording time (ESOB_REC_TM, etc.), start Presentation Time (ESOB_S_PTM), end Presentation Time (ESOB_E_PTM). Furthermore, the ESOBI_GI includes PROGRAM_NUMBER (SERVICE_ID), PMT_PID, NETWORK_ID, TS_ID, and FORMAT_ID on the basis of the value of PSI (Program Specific Information/SI (Service Information), and ESOB_ES_Ns (the number of ESs selected for video recording), ESOB_V_ES_Ns (the number of ESs for which TMAP data are generated of recorded video ESs), ESOB_A_ES_Ns (the number of ESs for which TMAP data are generated of recorded audio ESs), CP_CTL_IFO (corresponding to copy control information CCI), a video recording rate, and the like on the basis of data to be recorded.

ESOB_REC_MODE included in the ESOB_GI indicates the TYPE of stream: 01 = ESOB of Type A, and 02 = ESOB of Type B. Type A is a stream whose stream structure is cognizable, and management information is managed on the PTM base. On the other hand, Type B is a stream whose structure is not cognizable and, hence, management information is managed on the PATS base. For this reason, Type A adopts a TMAP on the PTM base, and Type B adopts a TMAP on the PATS base.

Note that ESOB_ES_Ns, ESOB_V_ES_Ns, ESOB_A_ES_Ns, and ES_TMAP_Ns have the following relations:

$$ESOB_ES_Ns \geq ESOB_V_ES_Ns + ESOB_A_ES_Ns$$

$$ESOB_V_ES_Ns + ESOB_A_ES_Ns \geq EES_TMAP_Ns$$

A region number indicates Japan (ARIB) when it is 00; U.S.A. (ATSC) when it is 01; and Europe (DVB) when it is 02. Of the recorded contents, data of a region corresponding to the region number can be played back.

FIG. 14 is a view for explaining an example of the configuration of the ESOB_ESI. As shown in FIG. 14, ESOB_ESI is classified into three types (ESOB_V_ESI in FIG. 15, ESOB_A_ESI in FIG. 16, and ESOB_OTHER_ESI in FIG. 17).

FIG. 15 is a view for explaining an example of the configuration of ESOB_V_ESI, and an example of the configuration of video attribute V_ATTR included in this ESOB_V_ESI. ESOB_ES_PID (the PID of an ES), STREAM_TYPE (STREAM type indicated in the PMT), STREAM_CONTENT (STREAM_CONTENT value indicated by the component descriptor), COMPONENT_TYPE (the value of COMPONENT_TYPE indicated by the component descriptor), COMPONENT_TAG (the value of COMPONENT_TAG indicated by the component descriptor), and CP_CTL_INFO are common to these three different types of ESOB_ESI. Furthermore, V_ATTR is added to V_ESI (FIG. 15).

The V_ATTR is set to include an Application flag (0 = designate an Aspect ratio by the V_ATTR of interest, 1 = the V_ATTR of interest may designate an Aspect ratio; the actual Aspect ratio is recorded in a stream), Aspect Ratio (0 = 4 : 3, 1 = 16 : 9), Horizontal resolution (00 = 1920, 01 = 1440, 02 = 1280, 03 = 720, 04 = 544, 05 = 480), and Vertical resolution (00 = 1080, 01 = 720, 02 = 480). Note that the ESOB_V_ESI may have a reserved area in addition to these areas, and can describe information (copy control information) shown in FIG. 15 in this reserved area as needed.

FIG. 16 is a view for explaining an example of the configuration of ESOB_A_ESI, and an example of the configuration of audio attribute AUDIO_ATTR included in this ESOB_A_ESI.

The A_ESI (FIG. 16) further includes SIMULCAST_GP_TAG (a gap value of audio frames at the beginning of multi-view broadcast), and AUDIO_ATTR (audio attribute values). The AUDIO_ATTR includes Simulcast_GP_tg (0 = not simulcast, 1 = simulcast), Multi_lng (1 = Dual mono, 0 = other), Main_Comp (1 = main audio, 0 = other), Quality_Indicator (indicating sound quality), and Sampling_Rate (001 = 16 kHz, 010 = 22.05 kHz, 011 = 24 kHz, 101 = 32 kHz, 111 = 48 kHz). These values are set based on the values of an audio component descriptor. Note that ESOB_A_ESI may have a reserved area in addition to these areas, and can describe information (language code, copy control information, etc.) shown in FIG. 16 in this reserved area as needed.

FIG. 17 is a view showing an example of the configuration of ESOB_OTHER_ESI. The ESOB_OTHER_ESI includes ES_TY, ES_PID, STREAM_TYPE, and COMPONENT_TAG as in the ESOB_V_ESI in FIG. 15 or ESOB_A_ESI in FIG. 16. Note that ESOB_OTHER_ESI may have a reserved area in addition to these areas, and can describe information (data encoding identifier, additional information of this identifier, copy control information, etc.) shown in FIG. 17 in this reserved area as needed.

FIG. 18 is a view for explaining another example of the configuration of copy control information (copyright protection information) CP_CTL_INFO. The copyright protection information such as copy control information (CP_CTL_INFO) or the like is stored in CCI (Copy Control Information) or the like in a packet group header, and the copy control of packet groups is made by the CCI in the packet group header. The values of the CP_CTL_INFO are set by a digital copy control descriptor and content use descriptor. The contents of CP_CTL_INFO are: CGMS (0 = copy never; 1 = copy free); APS (0 = no APS, 1 = append APS type 1, 2 = append APS type 2, 3 = append APS type 3); EPN (0 = contents protection (Internet output protection), 1 = no contents protection); and ICT (0 = resolution constraint, 1 = no constraint).

FIG. 19 is a view for explaining a practical example of the ESOB_DCNI. This ESOB_DCNI (Discontinue Information) includes DCNI_GI and CNT_SEGI#1 to CNT_SEGI#n. The DCNI_GI includes the number (CNT_SEGI_Ns) of pieces of CNT_SEGI. Each CNT_SEGI includes CNT_SEG_SZ (CNT_SEG size: the number of packet groups), and CNT_SEG_PKT_POS (the number of packets of the first CNT_SEG in a packet group). These pieces of information can indicate whether or not the count operation of system time counter STC of the recorder/player reaches an end (wrapped around). In this way, the number of CNT_SEGs from the head of an ESOB is substituted in time information PTM to confirm in advance if STC Wrap-around has occurred, and can be used in TMAP calculations and the like (see FIG. 37 for the configuration of this PTM).

FIG. 22 is a view for explaining an example of the configuration of the ESOB_SMLI. The ESOB_SMLI (Seamless Information) may have four different types of structures, as shown in FIG. 22. Any of the four different structures includes seamless general information SML_GI. SML_GI 221 in example 1 includes only a continuous recording flag which indicates that this ESOB is continuously recorded from the previous ESOB (ESOB with an ESOB_ID smaller by one). In this case, this ESOB can be continuously played back, but seamless playback is not guaranteed. SML_GI 222 in example 2 further includes a flag indicating if the STC values are continuous. This STC continuous flag is set with an offset value corresponding to a discontinuous period when the STC values of two ESOBs are discontinuous. SML_GI 223 in example 3 further includes a flag indicating if the PATS values are continuous. This PATS continuous flag is set with an offset value corresponding to a discontinuous period when the PATS values of two ESOBs are discontinuous. Finally, SML_GI 224 in example 4 includes only a flag indicating if the PATS values are continuous, and this flag is set with an offset value when they are discontinuous.

FIG. 23 is a view for explaining an example of the configuration of ESOB_TMAP (type A). The ESOB_TMAP includes ESOB_TMAP_GI and one or more pieces of ES_TMAPI. The ESOB_TMAP_GI includes ADR_OFS (a packet group number (or LB address) from the head of a file to the head of an ESOB), ESOBU_PB_TM_RNG (ESOBU playback time range: 1 = 0.4s to 1.2s, 2 = 1s to 2s, 3 = 2s to 3s), ESOB_S_PKT_POS (the start position of the head of an ESOB in a packet group: 1 ≤ ESOB_S_PKT_POS ≤ 170), and ESOB_E_PKT_POS (the end position of the head of an SOB in a packet group: 1 ≤ ESOB_E_PKT_POS ≤ 170).

Each ES_TMAPI_GI# includes ES_PID (the PID of a target ES of this TMAP: there are two description methods of the PID: a method of describing the PID using 13-bit real data, and a method of describing the order in the PMT), ES_S_ADR_OFS (logical address from the head of an ESOB file to the head of this ES), ES_S_PTM (start PTM), ES_E_PTM (end PTM), ES_ESOBU_ENT_Ns (the number of ESOBU_ENTs), LAST_ESOBU_E_PKT_POS (position of the last ESOBU in a packet group), and STMAP_N (the number of a TMAP in the STMAPT, which belongs to this ES: this number may be omitted when the STMAPTs are recorded in independent areas for each STR_FI or when STMAPs are recorded in turn).

FIG. 24 is a view for explaining an example of the configuration of ESOB_TMAP (type B). FIG. 24 shows an example of an actual TMAP on the PATS base. ESOB_SZ is the number of packet groups from a packet group to which the head of an ESOB belongs to that to which the end of the ESOB belongs. ESOB_TMAP_GI (FIG. 24) describes ADR_OFS, ESOB_SZ, and ESOB_E_PKT_POS as values associated with those of the entire ESOB. As TMAPI for each ES, ES_TMAPI (FIG. 23) describes ES_S_ADR_OFS (an address value (the number of packet groups) from the head of an ESOB to the first ESOBU of the ES of interest), ES_S_ADR_OFS (an address value (the number of packet groups) from the last ESOBU of the ES of interest to the end of the ESOBU), ES_LAST_SOBU_PKT_POS (the number of packets up to the last packet in a packet group of the last ESOBU), ES_ESOBU_ENT_Ns (the total number of ESOBU_ENTs), the default PID of the ES of interest (there are two description methods of the PID: a method of describing the PID using 13-bit real data, and a method of describing the order in the PMT), and the like, as the values of the entire ES_TMAP.

FIG. 25 is a view for explaining an example of the configuration of HR_VTMAP.IFO and HR_STMAPx.IFO included in the DVD_HDVR directory. An STMAPT is recorded in an area (file) independent from a VTMAPT. As shown in FIG. 25, this STMAPT includes STMAPTI, one or more STMAPI_SRPs, and one or more pieces of STMAPI as many as the number of STMAPI_SRPs.

FIG. 28 is a view for explaining an example of the configuration of various kinds of information included in the STMAPT (type A). FIG. 29 is a view for explaining an example of the configuration of various kinds of information included in the STMAPT (type B).

The STMAPTI (FIG. 28 or 29) includes identification information STM_ID and end address information STMAPT_EA of the STMAPT, version information VERN of the TMAP of interest, the number STMAP_SRP_Ns of STMAP search pointers (the number of pieces of TMAP_SRPI = the number of pieces of TMAPI), update date information STMAP_LAST_MOD_TM of the STMAP (the same value as that of update date information of VMGI), and the like. Each STMAP_SRP includes address information to STMAPI as an element of each STMAPT, and each STMAPI includes a required number of pieces of ETMAPI_GI and a required number of ESOBU_ENTs. The STMAP_GI includes ESOBU_ENT_Ns (the number of entries). Note that garbage data may be inserted among ESOBU_ENTs.

In case of the PATS base, the STMAPTI (FIG. 29) arrival time interval ESOBU_PATS_TM_RNG (ESOBU_PATS_TM_RNG: 1 = 0.5s, 2 = 1s, or the count value in case of 27 MHz is ESOBU_PATS_TM_RNG), ESOB_S_PATS/ESOB_E_PATS (arrival time of the first/last packet), difference time TM_OFS (not available in some cases) from the arrival time interval (TM RNG) of the first ESOBU, and the like (although not shown). In this case, the edit process is made for respective ESOBUs, and adjustment upon editing can be made using the PATS start/end time (cell information CI). Note that a similar disclosure is available in FIG. 9 for TM_OFS.

The aforementioned ESOBU_PATS_TM_RNG is conceptually similar to ESOBU playback time range ESOBU_PB_TM_RNG in FIG. 23. Note that TMAPI information can be prevented from becoming extremely large by setting ESOBU/EVOBU_PB_TM_RNG even when a video recording time increases. However, since the time interval between neighboring entries is broadened, it is more likely to disturb smooth double-speed playback and the like.

As for the ESOBU/EVOBU intervals, when the TM_RNG value is available, a time interval indicated by this value is set as a maximum interval, and when a GOP division exists ahead of this time interval, SOBUs can be delimited there. On the other hand, if a sequence header (SH) and I-PIC exist, SOBUs can be delimited at the head of the SH.

FIG. 8 is a view for explaining an example of the configuration of another field (EX_M_AVFIT) of one management information (HDVR_MG) in the data structure according to the embodiment of the invention. The EX_M_AVFIT includes EX_M_AVFI, which includes a plurality of pieces of EVOBI as management information for respective EVOBs as many as the number of EVOBs. The EVOBI includes EVOB_TMAPI used to manage the TMAP of the EVOB, as shown in FIG. 8.

FIG. 9 is a view for explaining a practical example of the EVOB_TMAP_GI. The EVOB_TMAP_GI records general information used to manage the VTMAPT as an independent file, as shown in FIG. 9. The EVOB_TMAP_GI includes the total number (EVOBU_ENT_Ns) of entries (EVOBU_ENT) stored in the EVOBU of interest, a reserved area (which can be used to store offset value TM_OFS of the time of the head of the EVOBU of interest and the like as needed), the start address (ADR_OFS) of the EVOBU of interest, the size (EVOB_SZ) of the EVOBU of interest, EVOBU_PB_TM_RNG that determines the time interval of entries of the EVOBU of interest, the TMAP number (EX_VTMAP_N: which may be omitted if the TMAP number is determined to have one-to-one correspondence from the head of the EVOB) in the VTMAP file, and the like.

The EVOB_TMAP_GI allows to recognize information of the EVOB without reading out the TMAP file, since the TMAPs are stored in independent files (see FIG. 3). Especially, start address ADR_OFS, size EVOB_SZ, and total number EVOBU ENT _Ns of entries of the EVOB allow to determine the data size to be read out from disc 100, the work RAM size to be assured, and the like before loading the TMAP file main body, thus facilitating the read preparation.

FIG. 26 is a view for explaining an example of the configuration of EX_VTMAPTI, each EX_VTMAP_SRP#, and each EX_VTMAPI. The VTMAPT (FIG. 25) includes VTMAPTI VTMAP_SRPT, and VTMAP#1 to VTMAP#n. The VTMAPTI (FIG. 26) includes VMG_ID (the same value as VMG_ID located at the head of VMGI), VTMAPT_EA (the end address of the VTMAP), VERN (version information of the TMAP), IFO_LAST_MOD_TM (update date information of the TMAPT, the same value as HR_MANGR.IFO), and VTMAP_SRPNs (the total number of pieces of search information). The VTMAP_SRPT includes one or more VTMAP_SRPs (search information of each VTMAP). Furthermore, each VTMAP_SRP includes VTMAP_SA (the start address of the VTMAP) and EVOBU_ENT_Ns (the total number of EVOBU_ENTs). The VTMAP includes one or more EVOBU_ENTs (corresponding to the EVOBU_ENT in FIG. 27).

FIG. 27 is a view for explaining an example of the configuration of the contents of each EVOBU_ENT. Each EVOBU_ENT includes size lstREF_SZ of the first reference picture (I-pic) in the entry of interest, playback time EVOBU_PB_TM (indicated by the number of fields) of the EVOBU of interest, and size EVOBU_SZ of the EVOBU of interest.

FIG. 30 is a view for explaining an example of information to be stored in the ETMAPI_GI and ETMAPI shown in FIG. 28. Each ETMAPI_GI can store number ESOBU_ENT_Ns of ESOBU entries, and each ETMAPI can store one or more ESOBU entries ESOBU_ENT#1 to ESOBU_ENT#q.

FIG. 31 is a view for explaining an example (an example of type A) of the configuration of the contents of each ESOBU_ENT. The ESOBU_ENT in each STMAPT (FIG. 28) describes ESOBU_S_PKT_POS, ESOBU_SZ, and the like as values which belong to the ESOBU. As shown in FIG. 31, in case of a PTM base, the ESOBU_ENT includes lst_Ref_PIC_SZ (end address information of the first reference picture (I-picture or the like) in the entry from the head of the ESOBU, which is expressed by logical blocks (LBs)), ESOBU_PB_TM (the playback time of the ESOBU indicated by the number of fields), ESOBU_SZ (ESOBU size expressed by the number of packet groups that belong to the ESOBU), ESOBU_S_PKT_POS (the position of a packet which is expressed by the number of packets from the head of a packet group and stores the first packet of the ESOBU), and the like.

Note that each ESOBU_ENT in FIG. 31 may have a reserved area in addition to the above areas, and the reserved area can store, e.g., SH information (a flag indicating whether or not sequence header SH is stored in the ESOBU or the like) as needed. This SH information can be adopted to delimit ESOBUs when the SH is constant in a program (in the ESOB) or so that the ESOBU always starts from the SH. In this way, playback using the SH in each ESOBU can be made.

In case of time search, an ESOBU corresponding to a target time is calculated by accumulating PB_TM data, and the playback start PTM is converted into the number of fields from the head of that ESOBU. Note that the address is given by:

$$A = ESOB_ADR_OFS + ES_ADR_OFS \text{ of target ES} + \Sigma^{k-1}{}_{N=1} ESOBU_SZ(N) \times 16 + 1$$

where K is the target ESOBU, and A is the target address. Furthermore, the first packet becomes a packet corresponding to the value of ESOBU_S_PKT_POS, and this address is accessed.

There are two types of ESOBU_ENTs (corresponding to AT_ESOBU_ENT in FIG. 32) on the PATS base, i.e., that in a packet unit and that in a packet group unit. In case of the packet unit, accurate addresses can be obtained, but the number of ESOBU_ENT data increases. On the other hand, in case of the packet group unit, the number of ESOBU_ ENT data is small, but addresses can only specify packet groups.

In case of the packet unit, each ESOBU_ENT on the PATS base can be configured by AT_ESOBU_SZ and AT_ESOBU_S_PKT_POS. In this case, the AT_ESOBU_S_PKT_POS indicates the first packet position of the ESOBU by the number of packets. On the other hand, in case of the packet group unit, each ESOBU_ENT on the PATS base can be configured by AT_ESOBU_SZ. In this case, AT_ESOBU_S_PKT_POS and AT_ESOBU_E_PKT_POS are fixed to zero.

Furthermore, when ESOB_SZ is available, as exemplified in FIG. 23, either ES_S_ADR_OFS or ES_E_ADR_ OFS need only be present since the ES_E_ADR_OFS is given by:

$$ES_E_ADR_OFS = ESOB_SZ - (ES_S_ADR_OFS + \Sigma^{k-1}{}_{N=1} ESOBU_SZ(N) + 1)$$

Note that inequalities ESOB_SZ > ES_S_ADR_OFS, ESOB_SZ > ESOBU_SZ, and the like hold.

FIG. 32 is a view for explaining an example (an example of type B) of the configuration of the contents of the AT_ESOBU_ENT#. FIG. 32 shows an example of an actual structure of an ESOBU on the PATS base. Each AT_ ESOBU_ENT in each STMAPI (FIG. 29) describes AT_ESOBU_S_PKT_POS, AT_ESOBU_SZ, and the like as values which belong to an AT_ESOBU. The ESOB_SZ in FIG. 24 indicates the number of packet groups from a packet group to which the first packet of the ESOB belongs to a packet group to which the last packet of the ESOB belongs. However, the AT_ESOBU_SZ in FIG. 32 is the number of packet groups from the first packet group of the ESOBU to the last packet group of the ESOBU. Also, the AT_ESOBU_S_PKT__POS in FIG. 32 represents the difference between the divisions of the ESOBU and packet group using the number of packets.

In this case, the time information is expressed by PATs to have ESOB_S_PATS as the ESOB start time, and ESOB_E_PATS as the end time, since it is on the PATS base. However, the ESOB_E_PATS is the PATS (arrival start time) of the last packet of the last packet group, but is not the last reception end time.

The edit process is performed for respective ESOBUs, and the playback start time (CELL_S_PATS of CI) is designated. Since the edit process is performed for respective ESOBUs, each ESOB_S_PATS always matches the head of the ESOBU. Note that the accuracy of the PATS is indicated by PATS_SS.

Although not shown in FIG. 32, an embodiment in which the AT_ESOBU_ENT has time offset TM_OFS which represents an actual difference between the first PATS of an ESOB and a TM range (time interval) designated by predetermined time interval information TM_RNG using a 27-MHz count value is also available. Note that an embodiment without this TM_OFS may be used.

When the processing is performed in the packet group unit, since the division of each ESOBU matches that of each packet group, the AT_ESOBU_S_PKT_POS can be omitted. Furthermore, the ESOB includes ESOB_ES_GPI (Group Information) to support multi-view broadcast, rain attenuation broadcast, and multi-program simultaneous recording.

FIG. 20 is a view for explaining an example of the configuration of ESOB_GPI. That GPI includes ESOB_GPI_ GI, one or more GPI_SRPs, one or more pieces of GPI, and the like.

FIG. 21 is a view for explaining an example of the configuration of ESOB_GPI_GI, each GPI_SRP#, and each GPI#. The ESOB_GPI_GI stores GPI_TY (0 = created within the recorder, 1 = defined upon broadcast), and GPI_SRP_ Ns (the number of ES_GPI_SRPs). Each GPI_SRP stores GPI_SA (the start address of the GPI). Each GPI includes GPI_GI and ES_FTSs. The GPI_GI includes PRIORITY (priority: 0 if it is not designated, 1 = top priority), and ES_PID_Ns (the number of ESs in the group of interest). If the video PID is stored, it does not belong to an identical GP.

FIG. 33 is a view for explaining an example of the configuration of PGC information (EX_ORG_PGC information and EX_playlist information/EX_UD_PGC information) included in HDVR_VMG. EX_PGC information as playback information has the same format as a normal VR format, and ORG_EX_PGC information is automatically generated by an apparatus upon video recording and is set in the order of video recording. UD_EX_PGC information is generated according to a playback order which is freely added by the user, and is called a playlist. These two formats have a common format in EX_PGC level, and FIGS. 34 to 36 show that EX_PGC format.

FIG. 34 is a view for explaining a practical example of EX_PGI. Note that EX_PG information saves update date information of this EX_PG. This information can identify when this EX_PG was edited. A program name as text information uses PRM_TXT, and an IT_TXT field saves other kinds of information (director name, leading actor name, ...) to save other kinds of text information. This EX_PGI is set with an SRP number of the IT_TXT field which saves these kinds of information to establish a link. Furthermore, a PG number is set in IT_TXT data. Note that the EX_PG number is an absolute number from the beginning of recording on this disc, and is an index number which remains unchanged even after other EX_PGs are deleted.

Furthermore, the EX_PGI includes RSM_MRKI to provide a resume marker (a marker indicating the playback position upon interrupting playback) for each program. As information used to restart playback, an EX_CELL number, playback start PTM and date information indicating the date of creation of that marker, an ESI number of a video stream to be played back, an ESI number of an audio stream to be played back, and main/sub information in case of Dual-Mono are set. This information is used as title resume.

Furthermore, the EX_PGI includes PG_REP_PICTI, which is set with representative picture information (a marker of a picture to be displayed as a thumbnail on a title menu or the like) for each PG. This PG_REP_PICTI is set with a cell number, start PTM, date information of the date of creation of that marker, and an ESI number of a video stream to be played back.

In order to utilize manufacturer's information (MNFI stored in the EX_MNFIT in FIG. 4 or the like) provided to implement functions unique to the manufacturer, the EX_PGI in FIG. 34 is set with an MNFI search pointer (not shown), and an EX_PG number can also be set in the MNFI information. In this way, the EX_PGCI/EX_PGI in FIG. 34 can be linked with data in the MNFI information (not shown).

Furthermore, when PG update date information (program update date information at the end in the PGI in FIG. 34) is set in both the MNFI and IT_TXT, whether or not the edit process has been made by an apparatus of another manufacturer can be verified by checking if these times (the set update date and current time) upon menu display.

FIG. 35 is a view for explaining a practical example of EX_CI. In EX_CELL information (EX_CI), an ESOB type (STRA_CELL, STRB_CELL) is added to the cell type, and an ESOB number, start time, end time, packet group number (GP number) to be played back, and the like can be designated. The start and end times can be expressed by either the playback time (in case of PTM base) or PATS time (in case of PATS base).

When time is designated by a playback time = real time upon playback, the same access method as in the existing DVD-Video recording (DVD-VR) is allowed although stream recording that records incoming bitstreams intact is made. Since the user can designate a recording position using a playback time, a user's desire can be perfectly reflected. However, this method can be adopted only when the stream contents can be sufficiently cognizable. If the contents cannot be sufficiently cognizable, a time must be designated using a transfer time of a stream packet (MPEG-TS packet in case of digital broadcast recording).

If the recording position is designated using a playback time while the contents of the recorded stream are not sufficiently cognizable, playback cannot always be started from the head of 1-picture data. If a frame at the playback start position is not that of I-picture, decoding starts from the immediately preceding I-picture, and display of a playback video picture starts when the target frame is decoded. In this way, a picture can be presented to the user as if playback were started from the designated frame.

As for an ID to be referred to in the playback process or the like, a method of setting the PID of a representative one of streams to be played back, and a method of setting the ID of a component group in case of multi-view TV or the like are available (in case of the PID setting method, a method of describing the ID using 13-bit real data, a method of describing the order in the PMT, a method of describing the value of a component tag, and the like are available). Also, in still another method, a reference GRP number (or GRP_SRP number) may be set to switch groups. Unique ID numbers (EX_PGI#p, EX_CI#q, and the like in FIG. 35) are assigned to EX_PG and EX_CELL data, so that EX_PG and EX_CELL data can be designated using numbers which remain unchanged even when middle programs and cells are deleted. The EX_CELL information (EX_CI) is set with the file number (ESTR_FILE number) of a stream to be played back, and the ESOB_SRP number of the corresponding ESOB. Furthermore, the EX_CELL information includes information C_EPI (Entry Point Information) of a cell entry point corresponding to each chapter.

FIG. 36 is a view for explaining a practical example of C_EPI. There are two types of C_EPI for each cell type, i.e., a total of eight types of C_EPI. M_CELL_EPI_TY_A includes EPI_TY (EPI type information), and a PTM to which an EP is assigned. M_CELL_EPI_TY_B also includes PRM TXTI (text information) and REP_PIC_PTM (thumbnail pointer). S_CELL_EPI_TY_A includes EPI_TY (EPI type information), and an S_EVOB_ENT number to which an EP is assigned. S_CELL_EPI_TY_B also includes PRM_TXTI (text information).

STR_A_CELL_EPI_TY_A (ESOB TYPE A) includes EPI_TY (EPI type information), a PTM to which an EP is assigned, an ESI number of an ES to which that ES is assigned, an ESI number of an audio ES, and main/sub information in case of Dual-Mono. STR_A_CELL_EPI_TY_B also includes PRM_TXTI (text information) and REP_PIC_PTM (thumbnail pointer).

STR_B_CELL_EPI_TY_A (ESOB TYPE B) includes EPI_TY (EPI type information), a PATS to which an EP is assigned, and a PID to which that ES is assigned. STR_B_CELL_EPI_TY_B also includes PRM_TXTI (text information) and REP_PIC_PTM (thumbnail pointer).

FIG. 37 is a view for explaining an example of the configuration of the PTM (Presentation Time) of an ESOB (or EVOB). This time information PTM includes information CNT_SEGN indicating the number of continuous segments CNT_SEG (the number of CNT_SEGs from the head of the ESOB), PTM_base that roughly counts on a 90-kHz base, and PTM_extention which finely counts on a 27-MHz base, as shown in FIG. 19. An actual time based on the PTM is expressed by a value as the sum of PMT_base and PMT_extension. As an ESOB, type A, which undergoes playback management based on this PTM (PMT_base + PMT_extension), and type B, which undergoes playback management based on the PATS (Packet Arrival Time), are available.

For example, information CNT_SEGN indicating the number of CNT_SEGs from the head of the ESOB can be set as follows. That is, in case of an ESOB of type A, the value of CNT_SEGN is valid, but CNT_SEGN is set to be zero for objects other than the ESOB. As the values of valid CNT_SEGN, for example, when CNT_SEGN = 4, the number of CNT_SEGs in the ESOB of interest is zero; when CNT_SEGN = 5, the number of CNT_SEGs in the ESOB of interest is 1; when CNT_SEGN = 6, the number of CNT_SEGs in the ESOB of interest is 2; and when CNT_SEGN = 7, the number of CNT_SEGs in the ESOB of interest is 3.

The example of the ESOB has been described. Also, in case of an EVOB, the PTM can have the same data structure.

FIG. 43 is a block diagram for explaining an example of the apparatus which records and plays back AV information (digital TV broadcast program or the like) on an information recording medium (optical disc, hard disc, or the like) using the data structure according to the embodiment of the invention. As shown in FIG. 43, this recorder/player comprises an MPU unit, display unit, decoder unit, encoder unit, TV tuner unit, STC (System Time Counter) unit, D-PRO unit, temporary storage unit, disc drive unit, key input unit, V-mixing unit, frame memory unit, TV D/A unit, terrestrial digital tuner unit, 1394 I/F unit, Ethernet(R) I/F unit, remote controller receiver, STB unit (BS digital tuner or the like), emergency broadcast detection unit, and HDD unit. In this arrangement, the functions of a streamer are added to a recordable/reproducible DVD recorder.

The encoder unit includes an A/D unit, video encode unit, audio encode unit, SP encode unit, formatter unit, and buffer memory unit. The decoder unit includes a demultiplexer, video decode unit, SP decode unit, audio decode unit, TS packet transfer unit, V-PRO unit, and audio D/A unit. Furthermore, an antenna for receiving digital broadcast is connected to the STB unit. Note that the STC unit is configured to count on a 27-MHz base.

The flow of signals upon recording is, for example, as follows. That is, TS packet data received by the STB unit (or terrestrial digital tuner) are packed into packet groups by the formatter unit and the packet groups are saved on a work area. When the saved packet groups reach a predetermined size, they are recorded on the disc. The arrival time of each TS packet is counted by PATS counter 90a, and that count value is appended to the head of each TS packet when the packet is buffered. This counter 90a can perform fine adjustment of count intervals by PCR (or SCR) values, but never loads the PCR (or SCR) values unlike STC 102. As the operations to be executed at that time, upon reception of TS packets, a group is formed every 170 packets, and a packet group header is generated.

In this case, only the upper 2 bytes of the PATS of the first packet of the packet group are stored in the header, and only the lower 4 bytes of each of other PATS are saved together with the TS packet (before the TS packet). An analog signal input from the terrestrial tuner or line input is converted into a digital signal by the A/D unit. That digital signal is input to respective encoder units. That is, a video signal is input to the video encode unit, an audio signal is input to the audio encode unit, and text data of, e.g., teletext broadcasting is input to an SP encode unit. The video signal is compressed by MPEG, the audio signal is compressed by AC3 or MPEG audio, and the text data is compressed by runlength coding.

Each encoder unit (for VR) packs compressed data to form 2048-byte packets and inputs them to the formatter unit. The formatter unit packs and multiplexes the packets as a program stream, and sends it to the D-PRO unit.

The D-PRO unit forms ECC blocks for every 16 logical blocks, appends error correction data to them, and records the ECC packets on the disc via the disc drive unit. When the disc drive unit is busy due to seek, track jump, and the like, data are stored in an HDD buffer unit, and wait until the disc drive unit is ready. Furthermore, the formatter unit generates each segmentation information during video recording, and periodically sends it to the MPU unit (GOP head interrupt or the like). The segmentation information includes the number of packs of an EVOBU (ESOBU), the end address of I-picture data from the head of the EVOBU (ESOBU), the playback time of the EVOBU (ESOBU), and the like.

In the flow of signals upon playback, data are read out from the disc by the disc drive unit, undergo error correction by the D-PRO unit, and are then input to the decode unit. The MPU unit determines the type of input data (i.e., VR or SR data) (based on CELL Type), and sets that type in the decoder unit before playback. In case of SR data, the MPU unit determines the PID to be played back based on EX_CELL information to be played back, determines the PIDs of items (video, audio, and the like) to be played back based on that PMT, and sets them in the decoder unit. In the decoder unit, the demultiplexer sends TS packets to the respective decode units based on the PIDs. Furthermore, the TS packets are sent to the TS packet transfer unit, and are transmitted to the STB unit (1394 1/F unit) in the form of TS packets. The respective decode units execute decoding, and decoded data are converted into an analog signal by the D/A unit, thus displaying data on the TV. In case of VR data, the demultiplexer sends data to the respective decode unit according to the fixed IDs. The respective decode units execute decoding, and decoded data are converted into an analog signal by the D/A unit, thus displaying data on the TV.

Upon playback, pack data read out from the disc are interpreted by the demultiplexer. Packs that store TS packets are sent to the TS packet transfer unit, and are then sent to the decoders, thus playing back data. When pack data are transferred to the STB (or are transmitted to an external apparatus such as a digital TV or the like), the TS packet transfer unit transfers only TS packets at the same time intervals as they arrived. The STB unit decodes to generate an AV signal, which is displayed on the TV via the video encoder unit in the streamer.

The features of medium 100 (100a) used in the apparatus of FIG. 43 will be briefly summarized below. That is, this medium has management area 130 and data area 131. Data is separately recorded on the data area as a plurality of object data (ESOB), and each object data includes a group of data units (ESOBU). One data unit (ESOBU) includes packet groups each of which is formed by converting a MPEG-TS compatible digital broadcast signal into TS packets and packing a plurality of packets (see FIGS. 1 and 33). On the other hand, management area 130 has EX_PGC information (EX_PGCI) as information used to manage the playback sequence. This EX_PGC information includes EX_CELL information (EX CI). Furthermore, management area 130 has information used to manage object data (ESOB).

The apparatus shown in FIG. 43 can make stream recording on medium 100 (100a) with the above data structure in addition to video recording. In this case, in order to extract program map table PMT and service information SI from a TS packet stream, MPU unit 80 has a service information extraction unit (not shown; firmware that forms management data generation unit 80B). Also, MPU unit 80 has an attribute information generation unit (not shown; firmware that forms management data generation unit 80B) that generates attribute information (PCR pack number, PCR LB count number, and the like) on the basis of information extracted by the service information extraction unit.

FIG. 44 is a flowchart (overall operation process flow) for explaining an example of the overall operation of the apparatus shown in FIG. 43. In this case, data processes include five different processes, i.e., a video recording process, playback process, data transfer process (a digital output process to the STB or the like), program setting process, and edit process, as shown in FIG. 42. For example, when the power switch of the apparatus in FIG. 43 is turned on, MPU unit 80 makes initial settings (upon factory shipment or after user's settings) (step ST10). MPU unit 80 also makes display settings (step ST12) and waits for a user's operation. If the user has made a key input from key input unit 103 or remote controller 103a (step ST14), MPU unit 80 interprets the contents of that key input (step ST16). The following five data processes are executed as needed in accordance with this input key interpretation result.

That is, if the key input is, for example, a key operation made to set timer program recording, a program setting process starts (step ST20). If the key input is a key operation made to start video recording, a video recording process starts (step ST22). If the key input is a key operation made to start playback, a playback process starts (step ST24). If the key input is a key input made to output digital data to the STB, a digital output process starts (step ST26). If the key input is a key operation of an edit process, the edit process starts (step ST28).

The processes in steps ST20 to ST28 are parallelly executed as needed for respective tasks. For example, the process for outputting digital data to the STB (ST26) is parallelly executed during the playback process (ST24). Or a new program setting process (ST20) can be parallelly executed during the video recording process (ST22) which is not timer program recording. Or, by utilizing the feature of disc recording that allows high-speed access, the playback process (ST24) and digital output process (ST26) can be parallelly executed during the video recording process (ST22). Also, the disc edit process (step ST28) can be executed during video recording on the HDD.

FIG. 45 is a flowchart (edit operation process flow) for explaining an example of the edit process (ST28). When the control enters the edit process, the flow branches to one of four processes (one of A to D) (step ST280) in accordance with the edit contents. Upon completion of one of an entry point edit process (step ST282A), copy/move process (step ST282B), delete process (step ST282C), and playlist generation process (step ST282D), the program update date performed by this edit process is set in respective pieces of management information (EX_PGI, EX_IT_TXT, EX_MNFI) (step ST284).

When one of the program information EX_PGI, cell information EX_CI, or EVOB/ESOB has been changed, this program update date (FIG. 32) may be set. When EVOBI and/or ESOBI have/has been changed, the edit times/time (EDIT_TIME) of the EVOBI and/or ESOBI can be set in ESOB_EDIT_TIME (not shown) or the like. Alternatively, this program update date (FIG. 32) may be set.

In this connection, in the process in step ST284, the manufacturer ID of the apparatus that has made the operation in one of steps ST282A to ST282D may be set in editor ID (LAST_MNF_ID) 13326 in FIG. 32. Every time one of the PGI, CI, and SOB (or VOB) has been changed, this editor ID can be set (or updated) to the ID information of the apparatus used at that time.

FIGS. 46 and 47 are flowcharts for explaining an example of the video recording operation of the apparatus in FIG. 43. Data processes upon stream recording are as follows.

d1) A program to be recorded is determined using EPG (Electronic Program Guide) in the program setting process, reception of that program starts, and the determined program is recorded.

d2) Upon reception of a recording command from the key input unit, MPU unit 80 loads management data from disc drive unit 51 and determines a write area. At this time, the MPU unit checks the file system to determine whether or not recording can be proceeded. If recording cannot be proceeded, the MPU unit displays a message that advises accordingly so that the user can abort the recording process. On the other hand, if recording can be proceeded, the MPU unit executes a pre-recording process (step ST105 in FIG. 46). In this process, MPU unit 80 determines the recording position, generates management information (HDVR_MG, etc.), and writes required in formation in respective management areas. In this case, if data to be recorded is not digital broadcast data (e.g., an analog video input or analog TV broadcast) (NO in step ST106), video recording (VR) can be adopted as the recording format in place of stream recording (SR). In this case, the control branches to a VR recording process.

d3) If data to be recorded is digital broadcast data (YES in step ST106), MPU unit 80 checks if the stream to be recorded is cognizable. If the stream to be recorded is cognizable (YES in step ST107), MPU unit 80 makes settings to generate management information as a type A stream on the PTM base (step ST109A); otherwise (NO in step ST107), MPU unit 80 makes settings to generate management information as a type B stream on the PATS base (step ST109B). After that, the MPU unit sets the write start address of stream data (video data) in disc drive unit 51, thus preparing for data recording (step ST112).

d4) In this preparation process, the MPU unit resets the count time of STC unit 102. Note that STC unit 102 is a system timer, and recording/playback is done with reference to this STC value.

d5) The PAT of a program to be recorded is loaded to determine the PID required to fetch the PMT of the target program. Then, the target PMT is loaded to determine the PIDs of data (video, audio) to be decoded (to be recorded). At this time, the PAT and PMT are saved in work RAM unit 80A of MPU unit 80, and they (PAT, PMT) are written in the management information (HDVR_MG). At this time, VMG file data is written in the file system (see FIG. 3), and required information is written in VMGI (HDVR_MGI in FIG. 4).

d6) Video recording settings are made in respective units (step ST114). At this time, a segmentation setting of data and a reception setting of TS packets are made in formatter unit 90. Also, the PID of data to be recorded is set to record only a target video stream. Furthermore, buffer 91 is set to start holding of TS packets (step ST116). Then, formatter unit 90 starts its operation as follows.

d7) ESOB_ESI is generated based on the PMT (step ST120 in FIG. 47).

d8) Next, a TS packet stream to be recorded is fetched onto buffer 91 (step ST130). If data stored in buffer 91 reaches a predetermined size (YES in step ST140), an ECC process is done via D-PRO unit 52, thus recording the data that have undergone the ECC process on disc 100 (and/or 100a) (step ST142).

d9) During video recording, segmentation information is saved in work RAM 80A of MPU unit 80 periodically (before buffer RAM 91 of formatter unit 90 becomes full of data) (YES in step ST114; step ST146). The segmentation information to be saved is ESOBU segmentation information, which includes the ESOBU start address, ESOBU pack length, I-Pic end address, the ESOBU arrival time (PATS), or the like.

d10) After the segmentation information is saved in work RAM 80A (step ST146) or if the save timing of the segmentation information is not reached (NO in step ST144), MPU unit 80 checks if ESOB data are delimited. If ESOB data are delimited (YES in step ST147), the MPU unit executes an ESOB delimitation process (FIG. 48).

d11) It is checked if video recording is to end (if the user has pressed a video recording end key or if no recordable space of the disc (100/100a) remains). If video recording is to end (YES in step ST148), remaining segmentation information is fetched from formatter unit 90, and is added to work RAM 80A. These data are recorded in management data (VMGI or HDVR_MGI), the average recording rate upon video recording is recorded, and the remaining information is recorded in the file system (step ST150).

d12) If video recording is not to end (NO in step ST148), the control returns to d8), continue the data fetch and write processes.

In order to display the contents of stream data, whose video recording is in progress, on the TV or the like, the stream data to be recorded is sent to decoder unit 59 simultaneously with D-PRO unit 52, so as to make simultaneous video recording monitor. In this case, MPU unit 80 makes settings upon playback in decoder unit 59, which then automatically executes a playback process. D-PRO unit 52 forms ECC groups by combining, e.g., every 16 packs of stream data to be recorded, appends ECC data to each group, and sends them to disc drive unit 51 (and/or HDD 100a). When disc drive unit 51 is not ready to record on disc 100, D-PRO unit 52 transfers the ECC groups to temporary storage unit 53 and waits until disc drive unit 51 is ready to record. When disc drive unit 51 is ready, D-PRO unit 52 starts recording onto disc 100. As temporary storage unit 53, a large-capacity memory is assumed since it must hold recording data for several minutes or longer by high-speed access. Note that MPU unit 80 can make read/write access to D-PRO unit 52 via a dedicated microcomputer bus, so as to read/write the file management area and the like.

The flow of signals upon recording will be briefly summarized below. That is, MPEG-TS packet data received by STB 83 (or terrestrial digital tuner 89) are converted into packet groups by formatter 90, and the packet groups are saved in buffer 91. When data stored in buffer 91 reach a predetermined size (for one or an integer multiple of CDA size), they are recorded on the disc (100 and/or 100a).

FIG. 48 is a flowchart (ESOB delimitation process flow) for explaining an example of the ESOB delimitation process (ST160). An example of the ESOB delimitation process will be described below.

e1) It is checked if data is to be continuously recorded. If data is not to be continuously recorded (NO in step ST1600), this process ends.
e2) It is checked if STC values are continued. If STC values are not continued (NO in step ST1602), a continuous recording flag is set, an STC continuous flag is reset, and an offset value at that time is set in STC_OFS (ST1610). If STC values are not continued (YES in step ST1602), the control advances to e5).
e3) It is checked if PATS data are continuous. If PATS data are not continuous (NO in step ST1612), a PATS continuous flag is reset, and an offset value at that time is set in PATS_OFS (ST1614), and the control advances to e7).
e4) If PATS data are continuous (YES in step ST1612), the PATS continuous flag is set, 0 is set in STC_OFS (ST1616), and the control advances to e7).
e5) It is checked if PATS data are continuous. If PATS data are not continuous (NO in step ST1604), the continuous recording flag is reset, the STC continuous flag is set, the PATS continuous flag is reset, 0 is set in STC_OFS, and an offset value is set in PATS_OFS (ST1608), and the control advances to e8).
e6) If PATS data are continuous (YES in step ST1604), the continuous recording flag is set, the STC continuous flag is set, the PATS continuous flag is set, 0 is set in STC_OFS, and 0 is set in PATS_OFS, and the control advances to e7).
e7) ESTR_FI of the ESOB of interest is set (ST1618), thus ending this process.

FIG. 49 is a flowchart (buffer fetch process flow for managing 6 bytes of PATS data) for explaining an example of the contents of the buffer fetch process (ST130). Upon recording, TS packet data received by the STB unit (or terrestrial digital tuner) are converted into packet groups by the formatter unit, and are saved in the work RAM. When data saved in the work RAM reach a predetermined size (for one or an integer multiple of CDA size), they are recorded on the disc. As the operations at that time, upon reception of TS packets, a group is formed every 170 packets, and a packet group header is generated. More specifically, the following operation is made.

f1) A TS packet is received (step ST1300).
f2) It is checked if the STC has reached an end (Wrap-around). If the STC has reached an end (YES in step ST1301), a CNT_SEG is generated based on position information of the TS packet at the time of wrap-around. In this manner, position information CNT_SEG_S_PKT_POS (see FIG. 19) of the TS packet at the time when the time count of STC unit 102 has reached an end is registered in management information CNT_SEGI (step ST1303). If the STC has not reached an end (the continuous count of the STC is in progress) (NO in step S1301), or if CNT_SEGI has been registered, the control advances to the next process.
f3) If the packet of interest is the first one of a packet group (YES in step ST1306), Sync_Pattern: 00ffa5a5a is set (step ST1308A in FIG. 49 or step ST1308B in FIG. 50); otherwise (NO in step ST1306), the control advances to step f6).
f4) In step ST1308A in FIG. 49, PAT data is used as the arrival time of the TS packet, the lower 4 bytes of the PAT data are allocated before that TS packet, and the upper 2 bytes of the first PATS data are set in the packet group header as FIRST_PATS_EXT.
f5) In step ST1308A in FIG. 49, 0 is set in PATS_SS, and the control advances to f7).
f6) In the TS packet fetched in the TS packet data area, the lower 4 bytes of the PATS data are appended before that TS packet (step ST1317C), and the TS packet is set in a packet group data area (step ST1317D).
f7) It is checked if a packet group is formed (if 170 TS packets are grouped). If a packet group is not formed yet (NO in step ST1322), the flow returns to f1). If the packet group is formed (YES in step ST1322), a PKT_GRP_GI setting process (step ST1340), CCI process (ST1330), and MNFI process (ST1350) are executed, and group data for one packet group are temporarily saved in buffer RAM 91 (step ST1332).

FIG. 50 is a flowchart for explaining another example of FIG. 49 (buffer fetch process flow in case of 4-byte management of PATS data). Processes different from FIG. 49 are as follows. That is, when PATS data has 4-byte accuracy, the process of FIRST_PATS_EXT in f4) and f5) is skipped in step ST1308B in FIG. 50 (or 0 is set in FIRST_PATS_EXT), and the value of PATS_SS is set to be 01.

FIG. 51 is a flowchart (PKT_GRP_GI setting process) for explaining an example of the packet group general information setting process (ST1340). The PKT_GRP_GI setting process will be described below with reference to FIG. 51.

g1) The packet type is checked. If the packet type indicates an MPEG-TS packet, a value "01" is set in PKT_GRP_TY; otherwise, a value suited to that type is set in PKT_GRP_TY (step ST13400).
g2) A value (e.g., "11") corresponding to the BOOK version of the standard of interest is set in VERSION, and a STUF bit indicating if stuffing is done is set (to be, e.g., "0") (step ST13400).
g3) If 0 is set in the STUF bit, "0xaa" is set in Valid_PKT_Ns (including the number of valid packets in a packet group and the upper 2 bytes of PATS data appended to the first packet) (step ST13406).

FIG. 52 is a flowchart (ESI setting process flow) for explaining an example of the contents of the stream information (ESI) generation process (ST120). An example of the ESOB_ESI setting process will be described below.

h1) PSI and SI are examined to check the number of set streams (step ST1201).
h2) f4) and f5) are repeated in correspondence with the number of set streams (in case of YES in step ST12130) .
h3) A stream type is checked based on PSI and SI (step ST1203) to determine if the stream of interest is a video/audio stream or another type of stream to branch the control to the next stream check processes.
h4) In this case, the stream type is categorized to MPEG1 video, MPEG2 video, MPEG1 audio, MPEG2 audio, ..., and internal data are checked depending on the determined type to read out respective kinds of attribute information.
h5) In case of a video stream, ES_TY = 0 (step ST1213A), and respective kinds of attribute information are set (especially, resolution data, aspect information, and the like are extracted) to generate V_ATR (step ST1213C). The control then advances to f8) .
h6) In case of an audio stream, ES_TY = 0x40 (step ST1215A), and respective kinds of attribute information are set (especially, the sampling frequency, the number of channels, and the like are extracted) to generate A_ATR (step ST1215C). The control then advances to f8).
h7) In case of another kind of stream, ES_TY = 0x80 (step ST1217A), and respective kinds of attribute information are set (step ST1217C). The control then advances to f8).
h8) Copy information is extracted to generate CP_CTL_INFORMATION (CCI) (step ST1220).
h9) New ESI is set based on the attribute information, and the control returns to check the next stream (in case of NO in step ST1230).

An example of the ESTR_FI generation process will be described below. FIG. 53 is a flowchart for explaining an example of a stream file information (ESTR_FI) generation process in the video recording end process (ST150).

j1) The number of search pointers (ESOBI_SRP) is increased by one to add another ESOBI, an area for that ESOBI is assured, and 0: MPEG_TS is set in PKT_TY (step ST1500).
j2) The video recording time is set in ESOB_REC_TM (step ST1502A). Note that the internal clock of the apparatus is set and corrected based on a TDT (Time Data Table), so that an accurate time can always be obtained.
j3) In this case, ESOB_S_PTM and ESOB_E_PTM data are extracted from the stream, and STC discontinuity information (e.g., CNT_SEGN in FIG. 19) is checked to set start and end PTMs of an ESOB corresponding to the ESOBI added in j1) (step ST1502A).
j4) If the stream type is a TS stream (ARIB, DVB) (YES in step ST1506), "188" is set in AP_PKT_SZ and "16" is set in PKT_GRP_SZ (step ST1508A) (NO in step ST1506); otherwise, a value corresponding to the broadcast scheme is set in AP_PKT_SZ (step ST1510).
j5) MPEG_TS is set in PKT_TY (step ST1514).
j6) TS_ID, NETNORK_PID, and PMT_ID (the PID of PMT data used by the ESOB of interest: there are two description methods of the PID: a method of describing the PID using 13-bit real data, and a method of describing the order in the PMT) are set based on PAT data (step ST1514).
j7) Program_Number (SERVICE_ID in PMT) and PCR_PID are set based on PMT data. Furthermore, as for FORMAT_ID and VERSION, default values in the apparatus (in case of the built-in tuner) or Registration_Descriptor values sent via a digital input (in case of an external digital input) are set(step ST1516A).
j8) Moreover, the number of recorded ESs is set. (The PMT is set with information: the number of all broadcasted ESs, but since not all ESs are always recorded upon video recording, the number of recorded ESs is set.)

j9) The video recording start LB address is set in ADR_OFS (step ST1550A), and a default PID is set. Note that the default video PID corresponds to that with a smallest component tag value or that of a stream corresponding to a component tag described in a main component group in case of multi-view TV.
j10) A GPI setting process (ST1530), TMAP setting process (step ST1540), and the like are executed, and TMAPI is generated for each stream on the basis of each segmentation information (step ST1540).
j11) PATS_SS is set according to the PATS accuracy (the same value as that in the packet group header is set) (step ST1551).
j12) An edit date is set (step ST1554).

FIG. 54 is a flowchart for explaining an example of the GPI setting process (ST1530). This GPI setting process can be executed as follows.

k1) A stream type is checked (step ST15300B).
k2) If a plurality of programs form one stream (YES in step ST15300B), information indicating the presence of GPI is set in ESOB_TY, GPI_TY = 0, PRIORITY = 0 for all programs, one GPI is generated per program, and the number of groups is set (step ST15302B). The flow then advances to k5).
k3) In case of rain attenuation broadcast (YES in step ST15304B), information indicating the presence of GPI is set in ESOB_TY, GPI_TY = 40h, the top layer is set to be PRIORITY: 1, and other layers are set to be PRIORITY: 2. One GPI is generated per layer, and the number of groups is set (step ST15306B). The flow then advances to k5).
k4) In case of multi-view broadcast (YES in step ST15308B), information indicating the presence of GPI is set in ESOB_TY, GPI_TY = 40h, the top layer is set to be PRIORITY: 1, other layers are set to be PRIORITY: 2, and one GPI is generated per view (step ST15310B). Otherwise (NO in step ST15308B), 1 is set in ES_TMAP_Ns and information indicating the absence of GPI is set in ESOB_TY (step ST15321B). It is checked if ESs to be grouped (GP) still remain. If such ESs still remain (YES in step ST15314B), the flow returns to k1); otherwise (NO in step ST15314B), the number of groups is set, and the control advances to k5).
k5) It is checked if another group (GP) remains. If such group remains, the flow returns to k1); otherwise, a playlist is generated based on the PID of the currently selected group (step ST15316B), thus ending this process.
k6) In this way, if playback is made using the currently selected group, the playlist automatically generated in step ST15316B can be played back.

FIG. 55 is a flowchart for explaining the TMAP setting process (ST1540). An example of the TMAP setting process will be described below.

m1) The ESOB/EVOB structure is determined (step ST15400).
m2) In case of the ESOB, TMAP_TY is determined (step ST15403). If this ESOB is on the PTM base, ESs used to generate an STMAP are determined in consideration of the number of GPs, the number of ESs (the number of video ESs) is set as the number of TMAPs, and ES_PID to be generated is set for each TMAP. (However, one TMAP need not always be assigned to one GP. If no TMAP is available, another ES_TMAP of the identical ESOB is used to implement playback, search, special playback, and the like.) On the other hand, in case of an ESOB (AT_ESOB) on the PATS base or EVOB, one TMAP is added (see FIG. 24 for the data structure of a TMAP on the PATS base).
m3) The ESOB (PTM base)/EVOB start and end times, the start and end times for each TMAP, the number of entries, the arrival time of the first packet of the ESOB (PATS base), the arrival time of the last packet of the ESOB, and the like are set based on segmentation information (step ST15405).
m4) A TMAPT is added, and an entry information generation process is executed based on segmentation information (step ST15407). That is, in case of the ESOBU of TYPE A, 1st_REF_PIC_SZ (the end address of the first I-Pic; 0 is set if no I-Pic is available), ESOBU_SZ (indicating the ESOBU size by a packet group unit), ESOBU_S_PKT_POS (the position of the first packet in a packet group), and the like are set. On the other hand, in case of the ESOBU of TYPE B, ESOBU_SZ (indicating the ESOBU size by a packet group unit) and ESOBU_S_PKT_POS (the position of the first packet in a packet group (PKT unit)) are set.
m5) ESOBU_SZ and ESOBU_PB_TM are generated. Note that the TMAPT information is stored as an independent file or is added to the end of the IFO file.
m6) When an edit process is made, the update date information of the edited TMAP is set in STMAP_LAST_MOD_TM (or VTMAP_LAST_MOD_TM) (step ST15409).

FIG. 56 is a flowchart for explaining the EVOB/ESOB structure setting process (ST15400). An example of the EVOB/ESOB structure setting process will be described below.

n1) The recorded time is checked (step S154000). If the recorded time is equal to or shorter than two hours, the control advances to n2); if it falls within the range from two to four hours, the control advances to n3); or if it is equal to or longer than four hours, the control advances to n4) (step ST154001).
n2) "0" is set in EVOB/ESOB_PB_TM_RNG, and EVOBU/ESOBU_ENT data are generated based on segmentation information (information of 0.4s to 1s) so that each ESOBU has a time range of 0.4s to 1s (step ST154002). The control then advances to n5).
n3) "1" is set in EVOB/ESOB_PB_TM_RNG, and EVOBU/ESOBU_ENT data are generated based on segmentation information (information of 0.4s to 1.0s) so that each ESOBU has a time range of 1.0s to 2.0s (step ST154003). The control then advances to n5).
n4) "2" is set in EVOB/ESOB_PB_TM_RNG, and EVOBU/ESOBU_ENT data are generated based on segmentation Information (information of 0.4s to 1.0s) so that each ESOBU has a time range of 2.0s to 3.0s (step ST154004). The control then advances to n5).
n5) This process ends.

FIG. 57 is a flowchart for explaining the CP_CTL_INFO (CCI) generation process (ST1220). An example of the CP_CTL_INFO setting process will be described below.

p1) It is checked if the latest PMT and EIT include copy information. If copy information is included (YES in step ST12200), its copy control descriptors are extracted (step ST12204), and copy information is formed and set based on the copy control descriptors (step ST12206). The control then advances to p3).
p2) If no copy information is included (NO in step ST12200), "copy free" is set (step ST12202).
p3) It is checked if the latest PMT and EIT include contents use descriptors. If the contents use descriptors are included (YES in step ST12208), the contents use descriptors are extracted (step ST12212), and ICT and EPN are set based on the information (step ST12214A).
p4) If no contents use descriptors are included (NO in step ST12208), ICT and EPN are formed as "copy free" (step ST12210). Note that the ICT, EPN, retention, and the like in step ST12214A or ST12210 have been described in the description of CCI with reference to FIG. 40.

Another example of the CCI setting process will be explained below using FIG. 57.

1) It is checked if the latest PMT and EIT include copy information. If copy information is included, copy information is formed and set based on that information (step ST12206). The control then advances to 3).
2) If the received TS packet does not include any copy information, the same information as in the previous pack is formed as copy information (this process is different from step ST12202).
3) It is checked if the latest PMT and EIT include contents use descriptors. If the contents use descriptors are included, the following process is made. That is, if the values of the contents use descriptors have changed in the middle of a packet group, dummy data is inserted in the previous packet group to form a new packet group after the changed position, and CCI is set based on that information (this process is different from step ST12214A). At this time, 1 is set in PKT_GRP_GI: STUF, and the number of valid packets is set in PKT_GRP_GI: VALID_PKT_Ns.
4) If the received TS packet does not include any copy information, CCI is formed as "copy free".

FIG. 58 is a flowchart for explaining an example of the program chain (PGC) generation process (including a program setting process) in the video recording end process (ST150). The PGC generation process in this process will be described below.

q1) It is checked if a disc of interest undergoes the first video recording. If the disc of interest undergoes the first video recording (YES in step ST1600Z), new ORG_PGC is generated (step ST1602Z); otherwise (NO in step ST1600Z), a setting is made to add program PG after the already recorded PGC (ORG_PGC) (step ST1604Z).
q2) Erase permission: 0 is set in PG__TY, the number of cells is set in Cell_Ns, and the video ESI number is also set (step ST1700Z).
q3) In the setting of step ST1700Z, if the digital broadcast to be recorded is ARIB, and if language_code in a short event descriptor in an EIT is "jpn", "0x12" is set in CHR in VMG_MAT, EVENT_NAME is set in the second field of PRM_TXTI, and representative picture information is set in REP_PICTI.
q4) The manufacturer ID of this apparatus is set in LAST_MNF_ID (step ST1702Z). As for this value, when PGI, CI, or EVOB has been changed, the manufacturer ID of the apparatus used to change such information is set to identify the manufacturer of the last apparatus used to execute edit and record processes. With this manufacturer ID, when the apparatus of another manufacturer is used to change the recorded contents of a disc, a reaction can be easily taken.
q5) In the setting of step S1702Z, the absolute number of PG is set in PG_INDEX to allow another application software or the like to refer to each PG. Furthermore, this PG update date information is recorded. At this time, if MNFI and IT_TXT (with the same manufacturer code) supported by this apparatus are found, the update date information of corresponding data is also set.

q6) Information unique to each manufacturer is set in MNFI.

q7) Information indicating a streamer is set in CELL_TY (e.g., cell type included in cell information EX_CI in FIG. 35) (step ST1704Z).

q8) In the setting of step ST1704Z, the reference ESOB number is set, the representative (video) PID or Component_Group_Id is set as the ID to be played back, and the number of pieces of entry point information EPI (FIG. 36), playback start and end PTMs, and entry points EPs are set. Furthermore, discontinuous segments CNT_SEG exemplified in FIG. 19 are read, the number of CNT_SEGs is set in, e.g., CNT_SEGN in FIG. 37, and the block number of the ESOB to be played back is set.

q9) Moreover, in the setting of step ST1704Z, start information is set in RG_RSM_INF (playback start PTM, video ESI number, audio ESI number, main/sub information of Dual-Mono) so that playback can start from the head of the program. The factors of automatic EP assignment in the video and time relationships are a constant time and a video mode change (an aspect ratio, and large motion vectors), and the first packet (the first packet of a sequence header, the first packet of 1-PIC) of the first packet (Unit Start Indicator) GOP of a video frame is combined with these conditions. Furthermore, the factors of automatic EP assignment in the audio relationship are a change in audio (a change in audio volume or the like)/audio mode (ST/MONO), and the first packet (Unit Start Indicator, frame header) of an audio frame is combined with these conditions.

FIG. 59 is a flowchart (overall playback operation flow) for explaining an example of the playback operation. The data processes upon playback are executed as follows (see FIGS. 59 to 66).

r1) A disc check process is made first to check if the disc of interest is a rewritable disc (R, RW, RAM). If the disc of interest is not a rewritable disc, a message that advises accordingly is returned, and the process ends.

r2) If the disc of interest is a rewritable disc, the file system of the disc is read out to check if data has already been recorded (step ST207). If no data is recorded, a message "no data is recorded" is displayed, thus ending the process.

r3) The VMG file is loaded (step ST207) and programs and cells to be played back are determined (they are determined as defaults or are selected by the user) (step ST208). In this case, if a playback process in the recorded order is selected, playback is made according to ORG_PGCI; if a playback process for each program is to be made, playback is made according to UD_PGC (playlist) with a number corresponding to the program to be played back.

r4) The value of PKT_TY is read out to check if the broadcast scheme is supported. If the broadcast scheme is unsupported, a message that advises accordingly is displayed, and the process ends (or the control advances to process the next cell).

r5) The ESOB/EVOB to be played back, playback start PTM, and the like are determined based on title information, resume information (PL_RSM_IFO, PG_RSM_IFO), cell information EX_CI) to be played back, and the like (step ST211), and a playback start file pointer (logical address) and ESI of a stream to be played back are determined based on the playback start PTM. Furthermore, respective decoder units are set based on STI and ESI values to prepare for playback. Also, APS setups (e.g., APS = ON/OFF, APS type, and the like) are set in the video decoder based on CCI in the packet group header at the head position, and CGMSA settings are made in the video recorder based on digital copy control. Moreover, if a digital output (IEEE1394, Internet, or the like) is available, 0: scramble ON or output inhibition or 1: direct output is set in the output IC based on the EPN value. If ICT = 0, the image resolution is constrained, i.e., HD is converted into SD; if ICT = 1, "direct output" is set in the output IC. At this time, if the playback start frame is not I-picture data, decoding starts from immediately preceding I-picture, and display starts when the target frame is decoded, thus starting normal playback.

r6) A process upon playback start is executed. It is checked if an object to be played back is an ESOB. Even if the object to be played back is an ESOB (YES in step ST213), if it is a playback-inhibited ESOB (YES in step ST215), the next cell is set based on PGCI (step ST232), and the flow returns to step S211.

r7) If the object to be played back is an EVOB (NO in step ST213) or if it is an ESOB that can be played back (NO in step ST215), respective decoders are set (step ST217).

r8) Next, a cell playback process is executed (step ST220), and it is then checked if playback is to end. If playback is to end (YES in step ST230), an error check process is executed. If any error is found (YES in step ST240), a message that advises accordingly is displayed (step ST242), and a playback end process is executed (step ST244). If no error is found (NO in step ST240), anther playback end process is executed (step ST246), thus ending this operation.

r9) If playback is not to end (NO in step ST230), the next cell is determined based on PGCI (step ST232), and the flow returns to step ST211. It is checked if the settings of decoder unit 59 (step ST217) have been changed. If the settings of decoder unit 59 have been changed, changed attributes are set in decoder unit 59 so as to change decoder settings in response to the next sequence end code.

r10) The same processes (steps ST211 to ST232) are repeated while checking if playback is to end (step ST230).

FIG. 60 is a flowchart for explaining the decoder setting process (ST217). An example of the decoder setting process will be described below.

s1) If an object to be played back is an ESOB (YES in step ST2170), a group to be played back is determined first, and ESs to be played back are determined in accordance with GPI (step ST2171). If an object to be played back is an EVOB (NO in step S2170), the control skips step ST2171.

s2) Attribute information (STI, ESI) of the ESOB (or EVOB) to be played back is loaded (step ST2172).

s3) It is checked if the ESOB (or EVOB) to be played back has a format supported by the recorder (the apparatus in FIG. 43 or the like). If the format is unsupported (NO in step ST2173), apparatus settings are made not to play back the ESOB and display mute is set (step ST2175).

s4) If video data to be played back can be played back (YES in step ST2173), playback preparation is made (step ST2174A). In this case, the PID can be used intact if the 13-bit PID is set. However, the PID is determined with reference to PMT data if it is set based on the order in the PMT data.

s5) It is checked if audio data to be played back can be played back. If the audio data can be played back (YES in step ST2176), playback preparation is made (step ST2177A). In this case, the PID can be used intact if the 13-bit PID is set. However, the PID is determined with reference to PMT data if it is set based on the order in the PMT data. If the audio data cannot be played back (NO in step ST2176), apparatus settings are made not to play back the audio data and audio mute is set (step ST2178).

s6) A copy control process is executed based on CCI information which includes the contents generated in the process of, e.g., FIG. 57 (step ST2179).

FIG. 61 is a flowchart for explaining an example of the process upon cell playback. The cell playback process is executed as follows.

t1) Start file pointer FP (logical block number LBN) and end file pointer FP (logical block number LBN) of EX_CELL are determined on the basis of the contents of TMAPI. Furthermore, start ESOBU_ENTRY and end ESOBU_ENTRY are determined based on the start and end times in EX_CI, and the data lengths of entries until target ESOBU_ENTRY are accumulated in ADR_OFS, thus obtaining a start address (LB = FP) and end address. The remaining EX CELL length is calculated by subtracting the start address from the end address, and the playback start time is set in the STC (step ST2200). The PID to be played back is determined and is set in the decoder (STB, digital tuner). In this case, the PID can be used intact if the 13-bit PID is set. However, the PID is determined with reference to PMT data if it is set based on the order in the PMT data.

t2) An ESOB continuity check process is executed (step ST2201).

t3) A read process during playback is executed to determine the read address and read size based on the start file pointer (step ST2206).

t4) The read unit size to be read out is compared with the remaining cell length. If the remaining cell length is larger than the read unit size (YES in step ST2207), a value obtained by subtracting the read unit size to be read out from the remaining cell length is set as the remaining cell length (step ST2208). If the remaining cell length is smaller than the read unit size (NO in step ST2207), the read unit size is set to be the remaining cell length, and the remaining cell length is set to be zero (step ST2209).

t5) The read length is set to be a read unit length, and the read address, read length, and read command are set in the disc drive unit (step ST2210).

t6) If data transfer starts (YES in step ST2212), the control waits until data for one ESOBU are stored. If data for one ESOBU are stored (YES in step ST2214), data for one ESOBU are loaded from the buffer (step ST2216), and a buffer decoder transfer process is executed (step ST2220). After read file pointer FP is incremented and the MPEG decoder is set in a normal mode (step ST2224), the control advances to t7).

t7) It is checked if transfer is complete. If transfer is complete (YES in step ST2226), the control advances to t8).

t8) It is checked if an angle key or the like has been pressed. If the angle key has been pressed (YES in step ST2238), it is checked if GPI is available. If GPI is available (YES in step ST2239), a GP switching process is executed (step ST2240); otherwise (NO in step ST2239), the control advances to the process in step ST2228 without any process.

t9) If the angle key or the like has not been pressed (NO in step ST2238), it is checked if a Skip SW has been pressed. If the Skip SW has been pressed (YES in step ST2248), a SKIP process is executed (step ST2250).

t10) If the Skip SW has not been pressed (NO in step ST2248), it is checked if a STOP SW has been pressed. If the STOP SW has been pressed (YES in step ST2258), resume information (RSM_IFO) is saved in PG_RSM_IFO in case of title playback or in PL_RSM_IFO in case of playlist playback, and an end process is executed (step ST2260A).
t11) If the STOP SW has not been pressed (NO in step ST2258), the remaining cell length is checked. If the remaining cell length is not "0", i.e., if the current cell is not the last one (NO in step ST2228), the flow returns to step ST2206; if it is "0" (YES in step ST2228), this process ends.

FIG. 62 is a flowchart for explaining the ESOB continuity check process (ST2201). The ESOB continuity check process upon playback is executed, for example, as follows.

u1) It is checked if the current ESOB is continuously recorded with the previous ESOB (continuous recording flag in FIG. 22). If the two ESOBs are not continuously recorded (NO in step ST22010), this process ends.
u2) If the two ESOBs are continuously recorded (YES in step ST22010), it is checked if STC values are continuously input (STC continuous flag in FIG. 22). If STC values are continuously input (YES in step ST22012), an STC_OFS value is added to the current STC value to set a new STC value (step ST22014).
u3) After the STC_OFS value is added to the STC value (step ST22014), or if STC values are not continuously input (NO in step ST22012), it is checked if PATS values are continuously input (PATS continuous flag in FIG. 22). If PATS values are continuously input (YES in step ST22016), the control waits for data transfer to the decoder for a time corresponding to the value of PATS_OFS (step ST22018). For example, in case of the STB, the control waits for data transmission for a time corresponding to the value of PATS_OFS. If PATS values are not continuously input (or by adding the PATS_OFS time) (NO in step ST22016), this process ends.

FIG. 63 is a flowchart for explaining the data transfer process from the buffer RAM to the decoder. An example of the buffer data decoder transfer process will be described below.

v1) The number of packet groups in the buffer RAM is checked. If no packet group is found, the control skips the process in FIG. 63. If one or more packet groups are stored in the buffer RAM, a setting is made to process the first packet group (step ST22200).
v2) A target packet group is read out from the buffer RAM (step ST22201). The head of the packet group is detected based on the packet group length and Sync_Pattern.
v3) The STUF bit (FIG. 39) of the packet group header is checked. If "1" is set, valid packets are extracted in accordance with the value of VALID_PKT_Ns (step S22202A). If "1" is not set in the STUF bit, it is determined that 170 packets are valid ones.
v4) The PATS accuracy is detected based on PATS_SS, and a transfer time of each TS packet is calculated from the PATS data (FIRST_PATS_EXT + PATS of the immediately preceding TS packet: in case of 4-byte accuracy) and PATS_SS (step ST22202B), and each TS packet is sent to the decoder unit (STB unit) at that time (step ST22203). In case of the 6-byte accuracy, the upper 2 bytes of PATS data of the first packet of the packet group are used as FIRST_PATS_EXT, and lower 4 bytes of PATS data of the immediately preceding TS packet are set from there, thus calculating the transfer time of each TS packet. In case of 4-byte accuracy, PATS data is calculated from the immediately preceding PATS data in consideration of carry. In case of no accuracy, after packet data is extracted, a TS packet is output as soon as a request is received.
v5) Upon completion of packet transfer to the decoder unit (YES in step ST22204), a copy control setting process (CCI process) is executed (step ST22205).
v6) After that, it is checked if manufacturer information MNF is available. If manufacturer information MNF is available, it is checked if its manufacturer ID matches that of the manufacturer of the apparatus of interest. If the two IDs match, data of manufacturer information MNF is loaded to execute a predetermined process (process unique to each manufacturer) (step ST22270).
v7) Next, a discontinue process is executed (step ST22280).
v8) The control waits for completion of transfer, and it is checked if packet groups still remain in the buffer RAM. If no packet group remains in the buffer RAM (NO in step ST22206), this process ends.
v9) If packet groups still remain in the buffer RAM (YES in step ST22206), a setting is made to process the next packet group (step ST22207), and the flow returns to step ST22201.

FIG. 64 is a flowchart for explaining an example of the GP switching setting process. The GP switching process is executed, for example, as follows.

x1) The type of selector switch SW is checked (step ST22400X).
x2) Grouping information GPI of packet group GP whose playback is currently in progress is loaded (step ST22401X).
x3) It is checked if the GPI is stored. If no GPI is stored (NO in step ST22403X), this process ends.

x4) If the GPI is stored (YES in step ST22403X), the GPI information is loaded to switch another GP (step ST222405X), and a decoder setting process is executed (step ST22410).

FIG. 65 is a flowchart for explaining an example of the discontinue process. The discontinue process will be described below.

y1) Discontinuity information DCNI is read out and checked (step ST22800). If a CNT_SEG gap is found at the playback position (YES in step ST22802), the playback mode of the decoder is shifted to an internal clock mode (an operation mode that ignores the PTS value, makes playback using only internal clock values, and enables PTS data upon reception of PCR data: external sync mode) (step ST22804), thus ending this process.
y2) If no CNT_SEG gap is found at the playback position (NO in step ST22802), this process ends without any process.

FIG. 66 is a flowchart for explaining an example of the skip process. The skip process can be executed as follows.

z1) Entry point information table EPIT is loaded (step ST22500).
z2) The SKIP direction (determined by the type of SKIP key) is checked. If the SKIP direction is a forward direction (YES in step ST22502), entry point EP which is located ahead of the current playback position and has the same PID as the current playback PID is searched for, and its information is loaded (step ST22504). On the other hand, if the SKIP direction is a backward direction (NO in step ST22502), entry point EP which is located before the current playback position and has the same PID as the current playback PID is searched for, and its information is loaded (step ST22506).
z3) An ESOBU_ENT to be played back is determined based on the detected EPI (step ST22508).
z4) ESOBU_ENT information is loaded to determine the playback start time (STC) (step ST22510).
z5) It is checked if the target ESOBU_ENT includes I-PIC (by checking if 1ST_REF_SZ = 0). If the target ESOBU_ENT includes no I-PIC (NO in step ST22512), the immediately preceding ESOBU_ENT information of the identical group is loaded (step ST22514) to repeat the processes in steps ST22512 to ST22514.
z6) If the target ESOBU_ENT includes I-PIC (YES in step ST22512), sequence header SH in the ESOBU_ENT is loaded and is set in the decoder (step ST22522). Then, the I-PIC found previously is read out, and the decoder is set to start decoding from that position, and to start display from the playback time designated by the EP (step ST22514), thus shifting to a normal playback process.

With this process, a file control operation corresponding to digital broadcast can be implemented.

<Summary>

1. In a digital recorder (DVD streamer or the like) which can record digital streams, if Wrap-around of the STC has occurred, that position is set in ESOBI as CNT_SEG, and the CNT_SEG count information from the head of the ESOB is appended to each PMT.
2. In the digital recorder (DVD streamer or the like) which can record digital streams, an ESI number used in a video stream upon playback is appended to each representative picture information so as to specify a video stream.
3. In the digital recorder (DVD streamer or the like) which can record digital streams, an ESI number used in a video stream upon playback, an ESI number used in an audio stream, and main/sub information when audio is Dual-Mono are appended to each resume information so as to specify a stream to be played back.
4. In the digital recorder (DVD streamer or the like) which can record digital streams, an ESI number used in a video stream upon playback, an ESI number used in an audio stream, and main/sub information when audio is Dual-Mono are appended to each EP information so as to specify a stream to be played back.
5. An STC continuous flag and/or PATS continuous flag and its offset value are appended as seamless information indicating continuity among logically continuous ESOBs in addition to a continuous recording flag.

<Effect of Embodiment>

- Whether or not STC Wrap-around has occurred can be detected based on only playback information before execution of playback.
- Continuity among a plurality of ESOBs can be detected. If ESOBs are continuous, cases that can seamlessly connect a plurality of ESOBs can increase. That is, the frequency of occurrence of a situation in which the control waits for a playback process at a joint portion of a plurality of ESOBs which are detected to be continuous (a still picture is inserted) can be lowered than in a case wherein this invention is not practiced.

## Claims

**1.** An information storage medium (100) configured to record a predetermined digital stream signal, wherein

the information storage medium has a management area (111, 130) and data area (131-133),
the data area (131-133) is configured to separately record data of the digital stream signal as a plurality of objects (ESOB, etc.), wherein at least one (141) of the objects includes at least one packet group (147) comprising a packet group header (161) and one or more pairs (162, 163) of a packet arrival time stamp (PATS 162) and a packet (MPEG-TS packet 163); and
the management area (111, 130) is configured to record predetermined management information (HR_SFIxx.IFO, etc.) which includes information (ESOB_SMLI) indicating continuity between the plurality of objects and discontinuity information;
wherein when the plurality of objects includes leading and trailing objects, the information (ESOB_SMLI) indicating continuity includes a recording continuous flag indicating that the trailing and leading objects are continuously recorded; and
contents of the plurality of objects are included in a packet of an MPEG-encoded transport stream, the packet of the transport stream includes time information (PCR, etc.) corresponding to a system time clock (STC), and the discontinuity information is configured to indicate wrap-around of the system time clock (STC) for an apparatus configured to use the medium,
said discontinuity information (ESOB_DCNI) contains for each segment of the extended stream object (ESOB) a pair of a segment size information in terms of a packet group number and a segment position information in terms of a packet number in the first packet group of the segment, the contents of said discontinuity information (ESOH_DCNI) indicating the distance from the previous system time clock (STC) wrap around.

**2.** A method for recording information on an information storage medium of claim 1, comprising the steps:

recording the predetermined digital stream signal on the data area; and
recording the predetermined management information including the seamless information and the discontinuity information on the management area.

**3.** A method for playback of information from an information storage medium of claim 1, comprising the steps:

reproducing the management information; and
reproducing the predetermined digital stream signal from the data area (ST24).

**4.** A recording apparatus configured to use the information storage medium of claim 1, comprising:

means (79, 51-53) for recording the predetermined digital stream signal on the data area.

**5.** A playback apparatus configured to use the information storage medium of claim 1, comprising:

means (59, 51-53) for playing back the predetermined digital stream signal from the data area.

## Patentansprüche

**1.** Informationsspeichermedium (100), das konfiguriert ist, um ein vorbestimmtes Digitalstrom-Signal aufzuzeichnen, wobei

das Informationsspeichermedium einen Managementbereich (111, 130) und einen Datenbereich (131-133) aufweist,
der Datenbereich (131-133) konfiguriert ist, um Daten des Digitalstrom-Signals als eine Mehrzahl von Objekten (ESOB, etc.) getrennt aufzuzeichnen, wobei mindestens eines (141) der Objekte mindestens eine Paketgruppe (147) mit einem Paketgruppen-Header (161) und ein oder mehrere Paare (162, 163) eines Paketankunftszeitstempels (PATS 162) und eines Pakets (MPEG-TS Paket 163) aufweist; und
der Managementbereich (111, 130) konfiguriert ist, um vorbestimmte Managementinformation (HR_ SFIxx.IFO, etc.) aufzuzeichnen, die Information (ESOB_SMLI) umfasst, die die Kontinuität zwischen der Mehrzahl von Objekten und Diskontinuitätsinformation angibt;
wobei, wenn die Mehrzahl von Objekten voreilende und nacheilende Objekte umfasst, die Information (ESOB_ SMLI), die Kontinuität angibt, ein Aufzeichnen eines kontinuierlichen Flag umfasst, das angibt, dass die nacheilenden und voreilenden Objekten kontinuierlich aufgezeichnet sind; und
der Inhalt der Mehrzahl von Objekten in einem Paket eines MPEG-codierten Transportstroms enthalten ist, wobei das Paket des Transportstroms Zeitinformation (PCR, etc.) umfasst, die einer Systemzeittakt (STC) entspricht, und
die Diskontinuitätsinformation konfiguriert ist, um einen Wrap-around des Systemzeittaktes (STC) für eine Vorrichtung anzugeben, die konfiguriert ist, das Medium zu verwenden,
die Diskontinuitätsinformation (ESOB_DCNI) für jedes Segment des erweiterten Stromobjekts (ESOB) ein Paar einer Segmentgrößeninformation hinsichtlich einer Paketgruppenzahl und einer Segmentpositionsinformation hinsichtlich einer Paketzahl in der ersten Paketgruppe des Segments enthält, wobei der Inhalt der Diskontinuitätsinformation (ESOB_DCNI) den Abstand von dem vorhergehenden Wrap-around des Systemzeittaktes (STC) angibt.

2. Verfahren zum Aufzeichnen von Information auf einem Informationsspeichermedium gemäß Anspruch 1, mit den folgenden Schritten:

Aufzeichnen des vorbestimmten Digitalstrom-Signals auf dem Datenbereich; und
Aufzeichnen der vorbestimmten Managementinformation einschließlich der nahtlosen Information und der Diskontinuitätsinformation auf dem Managementbereich.

3. Verfahren zur Wiedergabe von Information von einem Informationsspeichermedium gemäß Anspruch 1, mit den folgenden Schritten:

Reproduzieren der Managementinformation; und
Reproduzieren des vorbestimmten Digitalstrom-Signals von dem Datenbereich (ST24).

4. Aufzeichnungsvorrichtung, die konfiguriert bist, um das Informationsspeichermedium gemäß Anspruch 1 zu verwenden, mit:

Mitteln (79, 51-53) zum Aufzeichnen des vorbestimmten Digitalstrom-Signals auf dem Datenbereich.

5. Wiedergabevorrichtung, die konfiguriert bist, um das Informationsspeichermedium gemäß Anspruch 1 zu verwenden, mit:

Mitteln (59, 51-53) zum Wiedergeben des vorbestimmten Digitalstrom-Signals von dem Datenbereich.

## Revendications

1. Support de stockage d'informations (100) configuré afin d'enregistrer un signal de flux numérique prédéterminé, dans lequel

le support de stockage d'informations possède une zone de gestion (111, 130) et une zone de données (131-133),
la zone de données (131-133) est configurée afin d'enregistrer séparément les données du signal de flux numérique comme une pluralité d'objets (ESOB, etc.), où au moins l'un (141) des objets comprend au moins un groupe de paquets (147) comprenant un en-tête de groupe de paquets (161) et une ou plusieurs paire(s) (162, 163) d'un marqueur d'arrivée de paquet (PATS 162) et d'un paquet (paquet MPEG-TS 163) ; et
la zone de gestion (111, 130) est configurée afin d'enregistrer des informations de gestion prédéterminées (HR_SFIxx.IFO, etc.) qui comprennent des informations (ESOB_SMLI) indiquant une continuité entre la pluralité d'objets et des informations de discontinuité ;
dans lequel, lorsque la pluralité d'objets comprend des objets de début et de fin, les informations (ESOB_SMLI) indiquant une continuité comprennent un marqueur d'enregistrement continu indiquant que les objets de fin et de début sont enregistrés en continu ; et
le contenu de la pluralité d'objets est inclus dans un paquet d'un flux de transport codé en MPEG, le paquet du flux de transport comprenant des informations temporelles (PCR, etc.) correspondant à une horloge système (STC), et
les informations de discontinuité sont configurées afin d'indiquer un bouclage de l'horloge système (STC) pour un appareil configuré afin d'utiliser le support,
lesdites informations de discontinuité (ESOB_DCNI) contiennent, pour chaque segment de l'objet de flux étendu (ESOB), une paire d'informations de taille de segment en termes de nombre de groupes de paquets et d'informations de position de segment en termes de nombre de paquets dans le premier groupe de paquets du segment, le contenu desdites informations de discontinuité (ESOB_DCNI) indiquant la distance par rapport au précédent bouclage de l'horloge système (STC).

**2.** Procédé d'enregistrement d'informations sur un support de stockage d'informations selon la revendication 1, comprenant les étapes consistant à :

enregistrer le signal de flux numérique prédéterminé dans la zone de données ; et
enregistrer les informations de gestion prédéterminées comprenant les informations de continuité et les informations de discontinuité dans la zone de gestion.

**3.** Procédé de reproduction d'informations à partir d'un support de stockage d'informations selon la revendication 1, comprenant les étapes consistant à :

reproduire les informations de gestion ; et
à reproduire le signal de flux numérique prédéterminé à partir de la zone de données (ST24).

**4.** Appareil d'enregistrement configuré afin d'utiliser le support de stockage d'informations selon la revendication 1, comprenant :

un moyen (79, 51-53) destiné à enregistrer le signal de flux numérique prédéterminé dans la zone de données.

**5.** Appareil de reproduction configuré afin d'utiliser le support de stockage d'informations selon la revendication 1, comprenant :

un moyen (59, 51-53) destiné à reproduire le signal de flux numérique prédéterminé à partir de la zone de données.

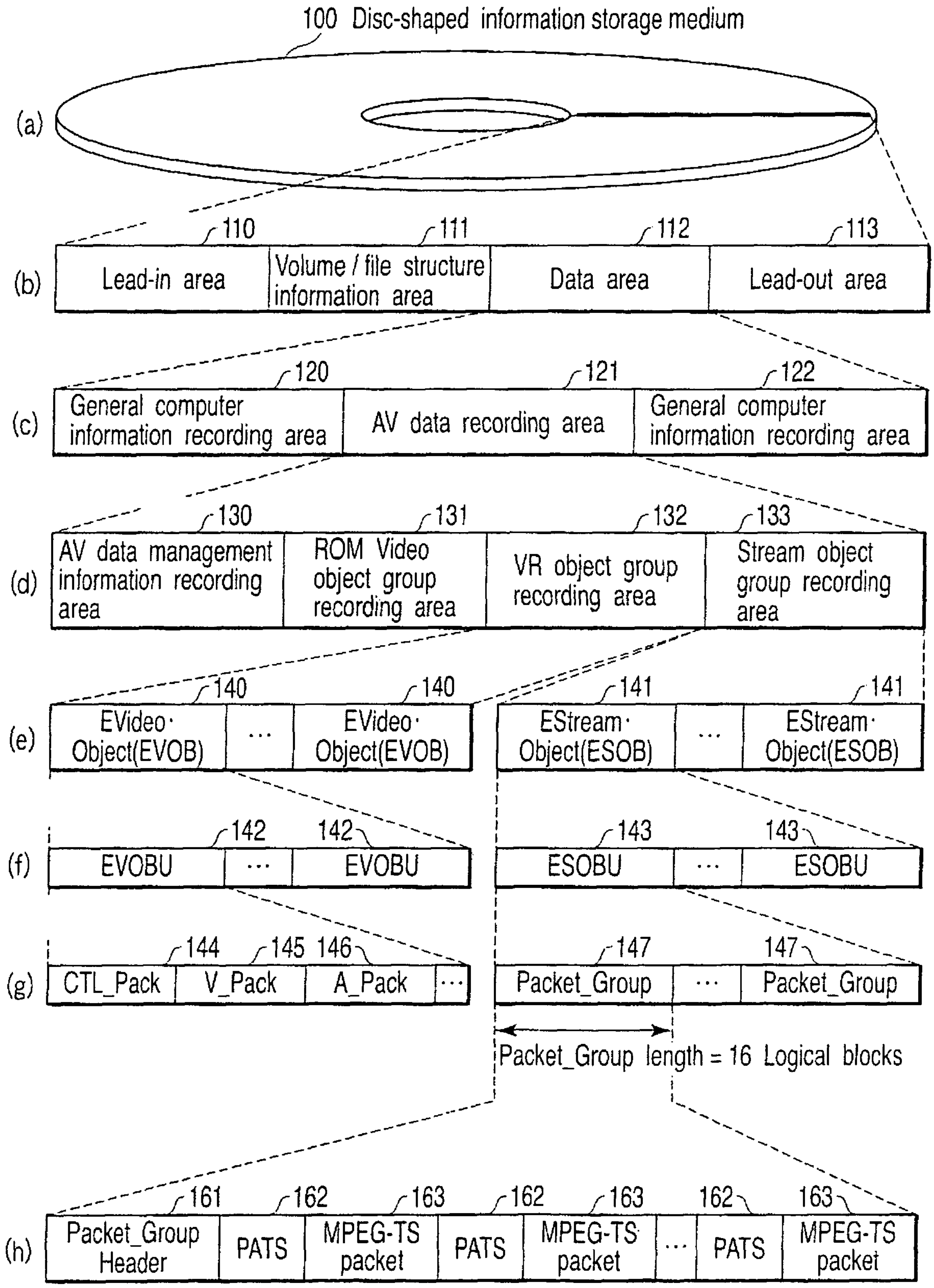
100 Disc-shaped information storage medium
(a)
(b)
110
Lead-in area
111
Volume / file structure information area
112
Data area
113
Lead-out area
(c)
120
General computer information recording area
121
AV data recording area
122
General computer information recording area
(d)
130
AV data management information recording area
131
ROM Video object group recording area
132
VR object group recording area
133
Stream object group recording area
(e)
140
EVideo·Object(EVOB)
...
140
EVideo·Object(EVOB)
141
EStream·Object(ESOB)
...
141
EStream·Object(ESOB)
(f)
142
EVOBU
...
142
EVOBU
143
ESOBU
...
143
ESOBU
(g)
144
CTL_Pack
145
V_Pack
146
A_Pack
...
147
Packet_Group
...
147
Packet_Group
Packet_Group length = 16 Logical blocks
(h)
161
Packet_Group Header
162
PATS
163
MPEG-TS packet
162
PATS
163
MPEG-TS packet
...
162
PATS
163
MPEG-TS packet

FIG. 1

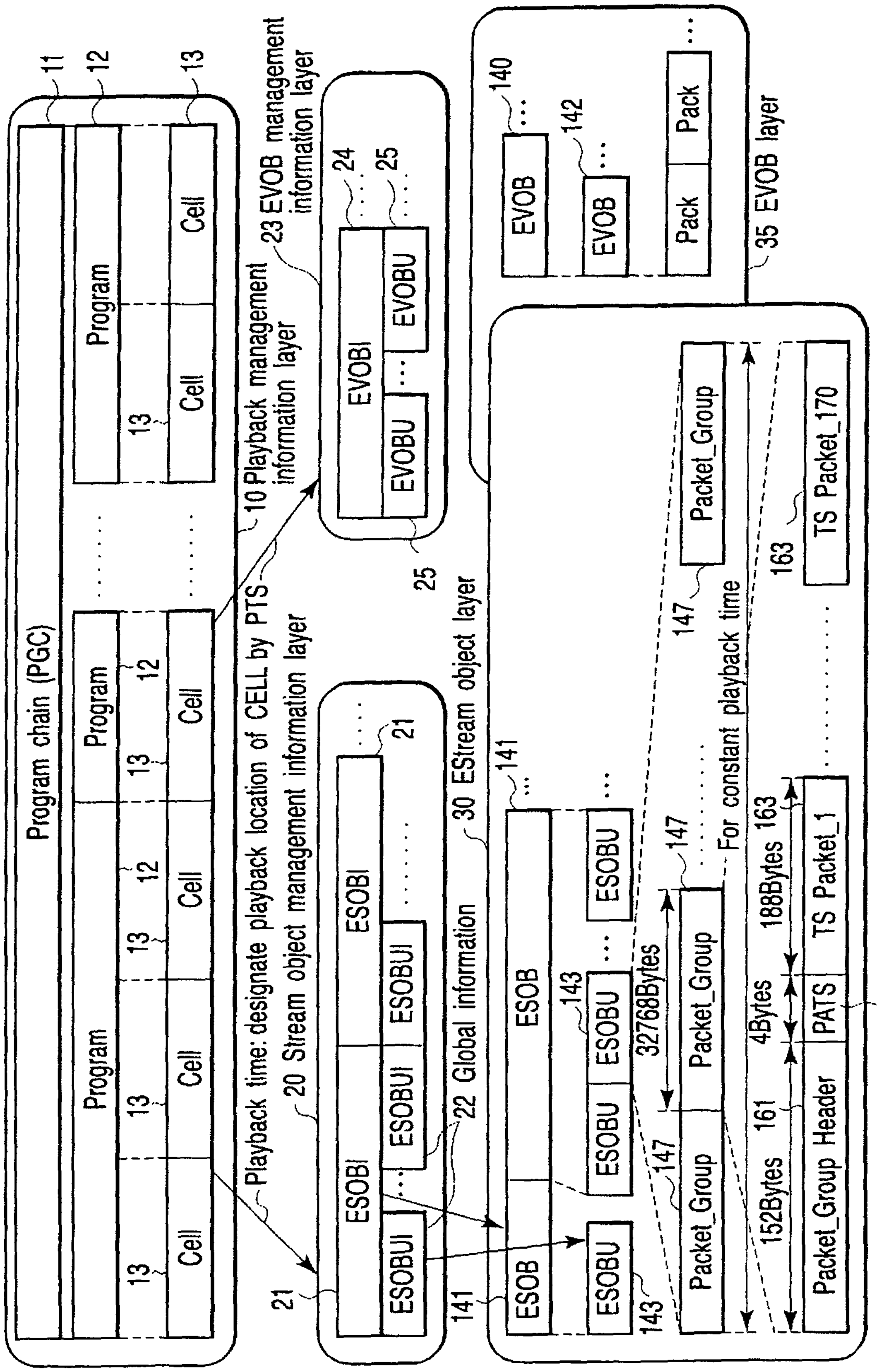
Program chain (PGC)
Program
Cell
10 Playback management information layer
Playback time: designate playback location of CELL by PTS
20 Stream object management information layer
ESOBI
ESOBUI
22 Global information
23 EVOB management information layer
EVOBI
EVOBU
30 EStream object layer
ESOB
ESOBU
Packet_Group
32768Bytes
For constant playback time
152Bytes
4Bytes
188Bytes
Packet_Group Header
PATS
TS Packet_1
TS Packet_170
35 EVOB layer
EVOB
Pack

FIG. 2

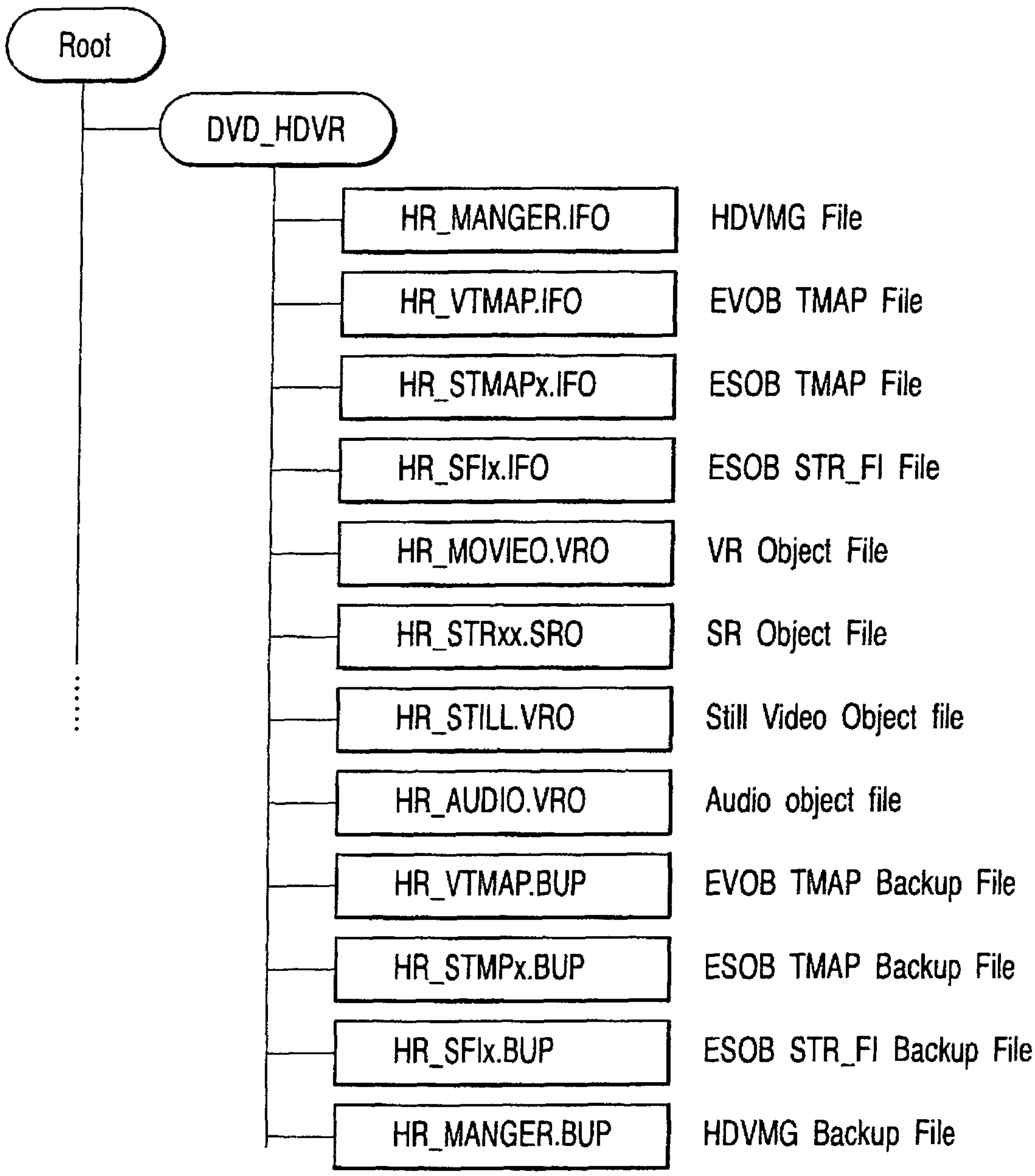
Root
DVD_HDVR
HR_MANGER.IFO
HDVMG File
HR_VTMAP.IFO
EVOB TMAP File
HR_STMAPx.IFO
ESOB TMAP File
HR_SFIx.IFO
ESOB STR_FI File
HR_MOVIEO.VRO
VR Object File
HR_STRxx.SRO
SR Object File
HR_STILL.VRO
Still Video Object file
HR_AUDIO.VRO
Audio object file
HR_VTMAP.BUP
EVOB TMAP Backup File
HR_STMPx.BUP
ESOB TMAP Backup File
HR_SFIx.BUP
ESOB STR_FI Backup File
HR_MANGER.BUP
HDVMG Backup File

F I G. 3

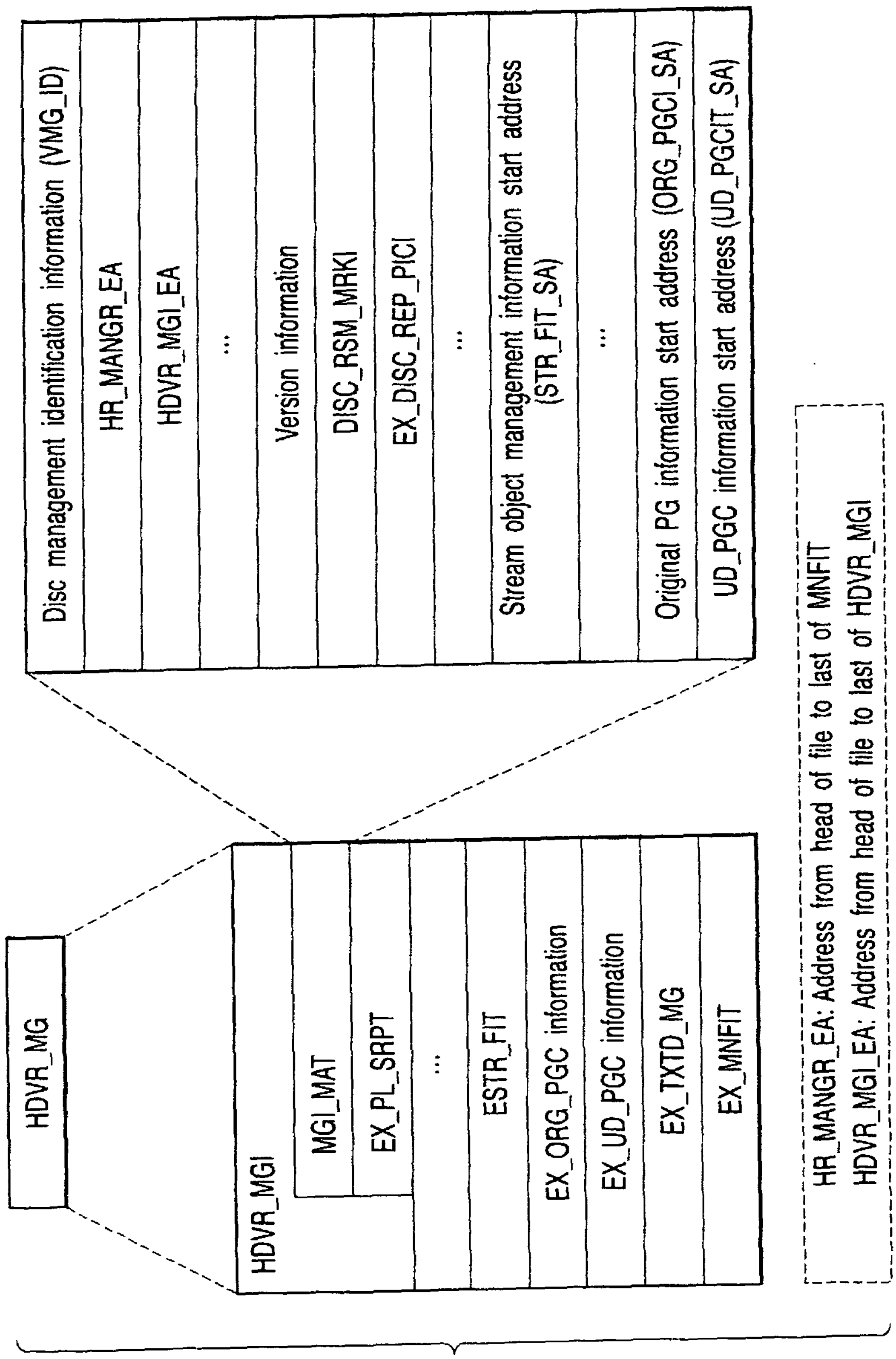
HDVR_MG
HDVR_MGI
MGI_MAT
EX_PL_SRPT
...
ESTR_FIT
EX_ORG_PGC information
EX_UD_PGC information
EX_TXTD_MG
EX_MNFIT
Disc management identification information (VMG_ID)
HR_MANGR_EA
HDVR_MGI_EA
...
Version information
DISC_RSM_MRKI
EX_DISC_REP_PICI
...
Stream object management information start address (STR_FIT_SA)
...
Original PG information start address (ORG_PGCI_SA)
UD_PGC information start address (UD_PGCIT_SA)
HR_MANGR_EA: Address from head of file to last of MNFIT
HDVR_MGI_EA: Address from head of file to last of HDVR_MGI

FIG. 4

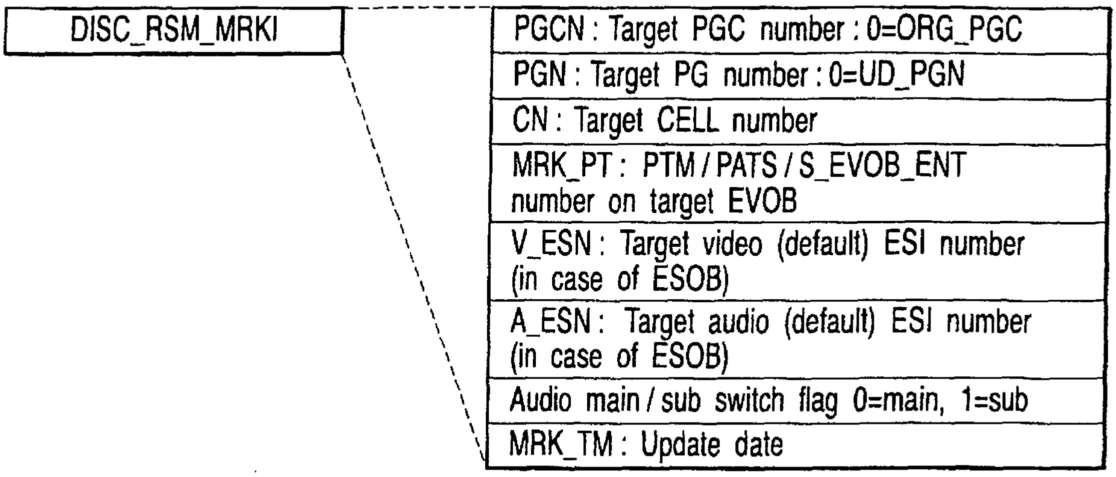
DISC_RSM_MRKI
PGCN : Target PGC number : 0=ORG_PGC
PGN : Target PG number : 0=UD_PGN
CN : Target CELL number
MRK_PT : PTM / PATS / S_EVOB_ENT number on target EVOB
V_ESN : Target video (default) ESI number (in case of ESOB)
A_ESN : Target audio (default) ESI number (in case of ESOB)
Audio main / sub switch flag 0=main, 1=sub
MRK_TM : Update date

FIG. 5

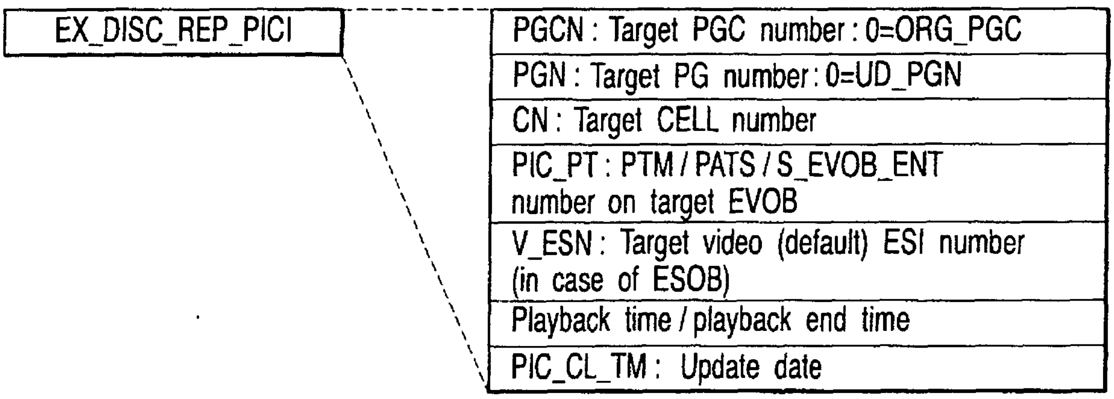
EX_DISC_REP_PICI
PGCN : Target PGC number : 0=ORG_PGC
PGN : Target PG number : 0=UD_PGN
CN : Target CELL number
PIC_PT : PTM / PATS / S_EVOB_ENT number on target EVOB
V_ESN : Target video (default) ESI number (in case of ESOB)
Playback time / playback end time
PIC_CL_TM : Update date

FIG. 6

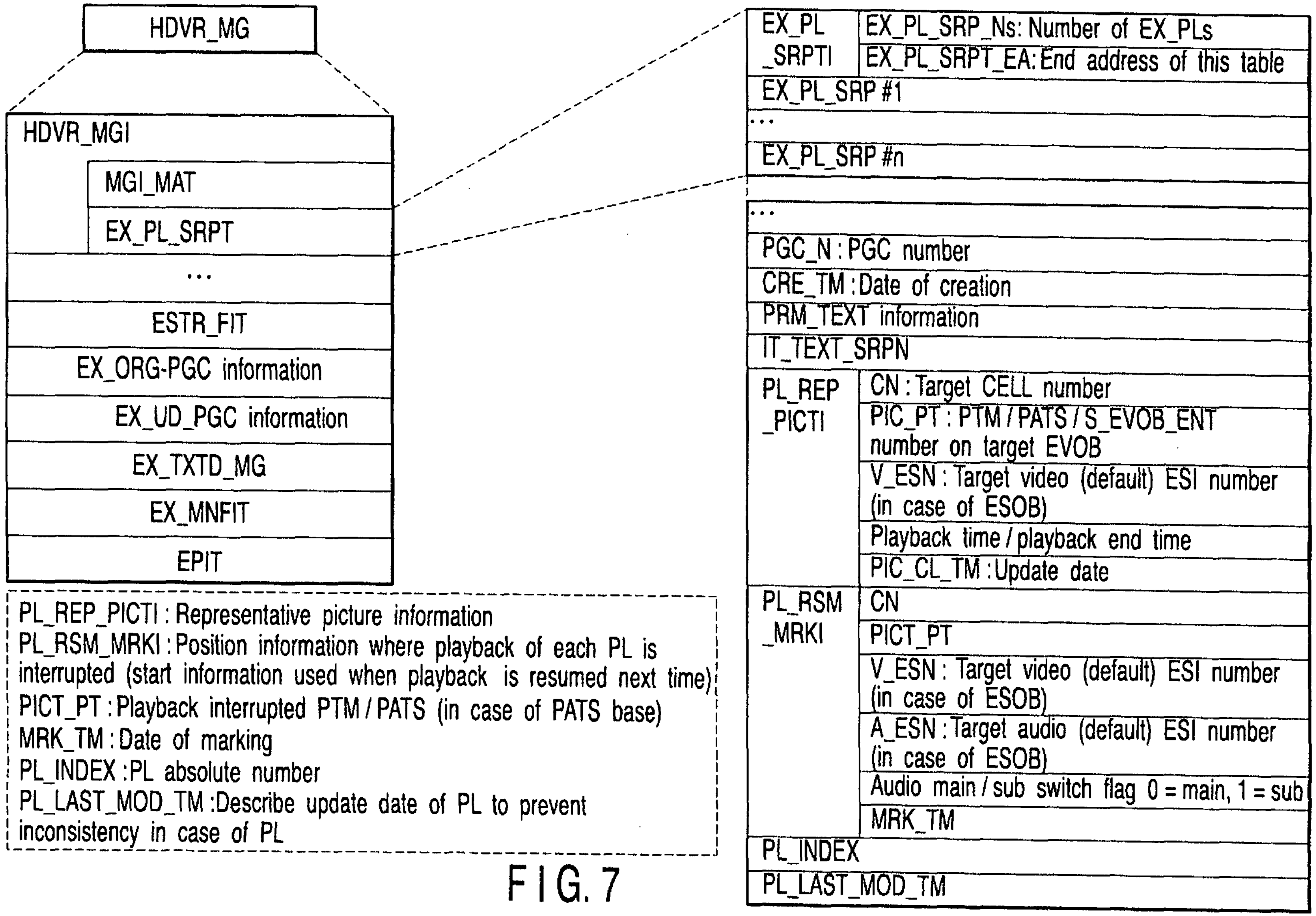
HDVR_MG
HDVR_MGI
MGI_MAT
EX_PL_SRPT
...
ESTR_FIT
EX_ORG-PGC information
EX_UD_PGC information
EX_TXTD_MG
EX_MNFIT
EPIT
EX_PL_SRPTI
EX_PL_SRP_Ns: Number of EX_PLs
EX_PL_SRPT_EA: End address of this table
EX_PL_SRP #1
...
EX_PL_SRP #n
...
PGC_N : PGC number
CRE_TM : Date of creation
PRM_TEXT information
IT_TEXT_SRPN
PL_REP_PICTI
CN : Target CELL number
PIC_PT : PTM / PATS / S_EVOB_ENT number on target EVOB
V_ESN : Target video (default) ESI number (in case of ESOB)
Playback time / playback end time
PIC_CL_TM : Update date
PL_RSM_MRKI
CN
PICT_PT
V_ESN : Target video (default) ESI number (in case of ESOB)
A_ESN : Target audio (default) ESI number (in case of ESOB)
Audio main / sub switch flag 0 = main, 1 = sub
MRK_TM
PL_INDEX
PL_LAST_MOD_TM
PL_REP_PICTI : Representative picture information
PL_RSM_MRKI : Position information where playback of each PL is interrupted (start information used when playback is resumed next time)
PICT_PT : Playback interrupted PTM / PATS (in case of PATS base)
MRK_TM : Date of marking
PL_INDEX : PL absolute number
PL_LAST_MOD_TM : Describe update date of PL to prevent inconsistency in case of PL

FIG. 7

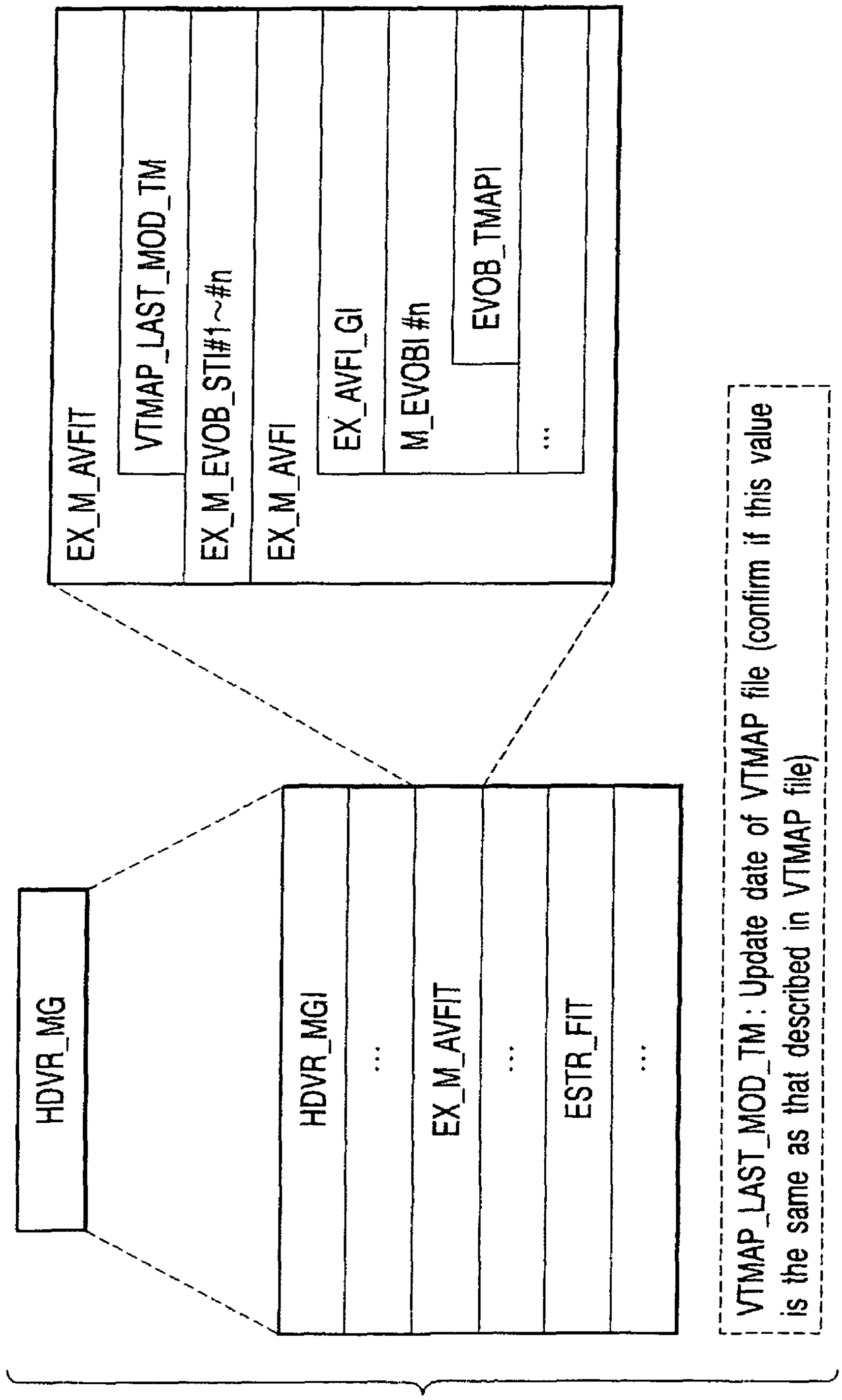
HDVR_MG
HDVR_MGI
...
EX_M_AVFIT
...
ESTR_FIT
...
EX_M_AVFIT
VTMAP_LAST_MOD_TM
EX_M_EVOB_STI#1~#n
EX_M_AVFI
EX_AVFI_GI
M_EVOBI #n
EVOB_TMAPI
...
VTMAP_LAST_MOD_TM : Update date of VTMAP file (confirm if this value is the same as that described in VTMAP file)

FIG. 8

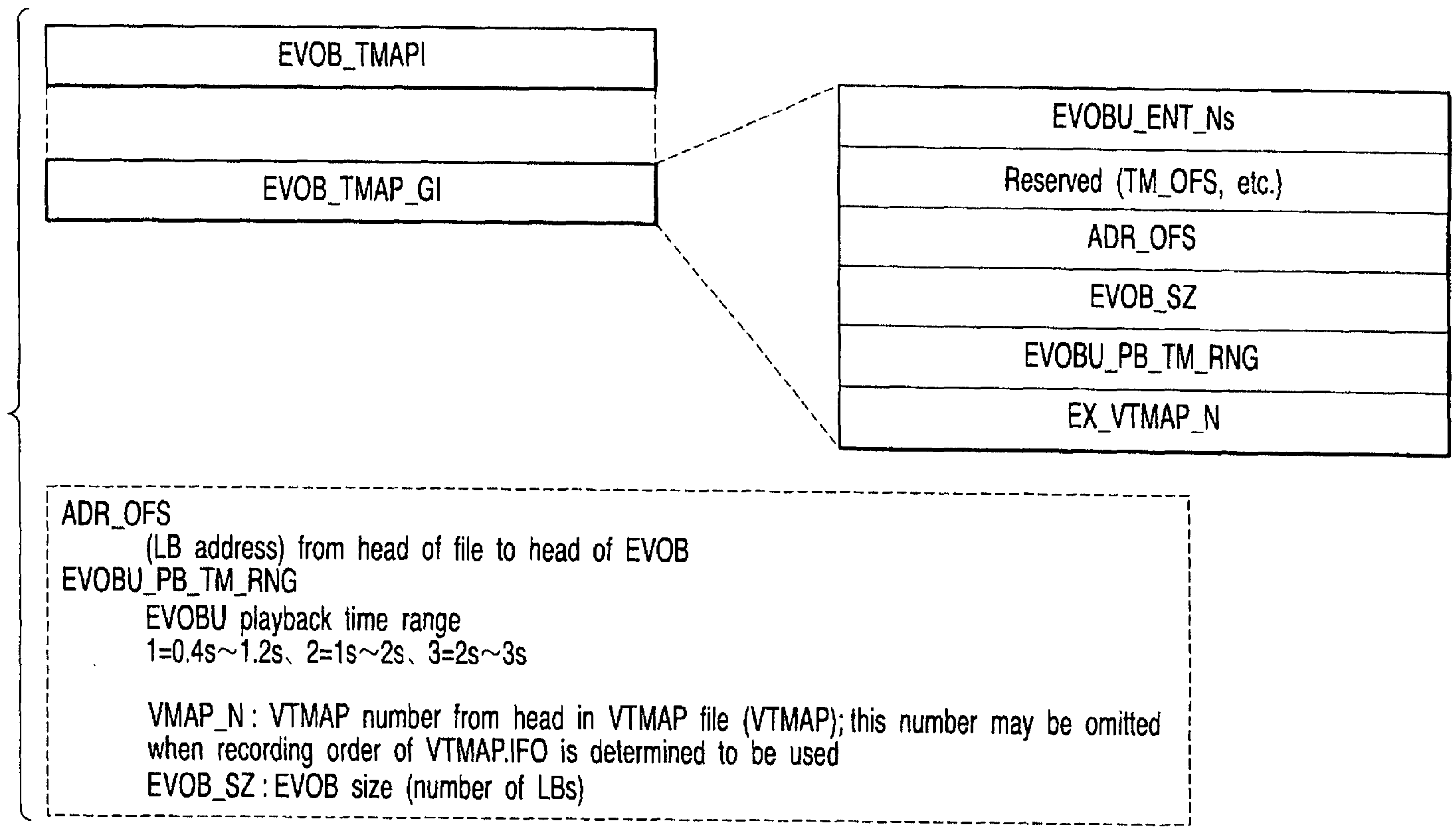
EVOB_TMAPI
EVOB_TMAP_GI
EVOBU_ENT_Ns
Reserved (TM_OFS, etc.)
ADR_OFS
EVOB_SZ
EVOBU_PB_TM_RNG
EX_VTMAP_N
ADR_OFS
(LB address) from head of file to head of EVOB
EVOBU_PB_TM_RNG
EVOBU playback time range
1=0.4s~1.2s、2=1s~2s、3=2s~3s
VMAP_N : VTMAP number from head in VTMAP file (VTMAP); this number may be omitted when recording order of VTMAP.IFO is determined to be used
EVOB_SZ : EVOB size (number of LBs)

FIG. 9

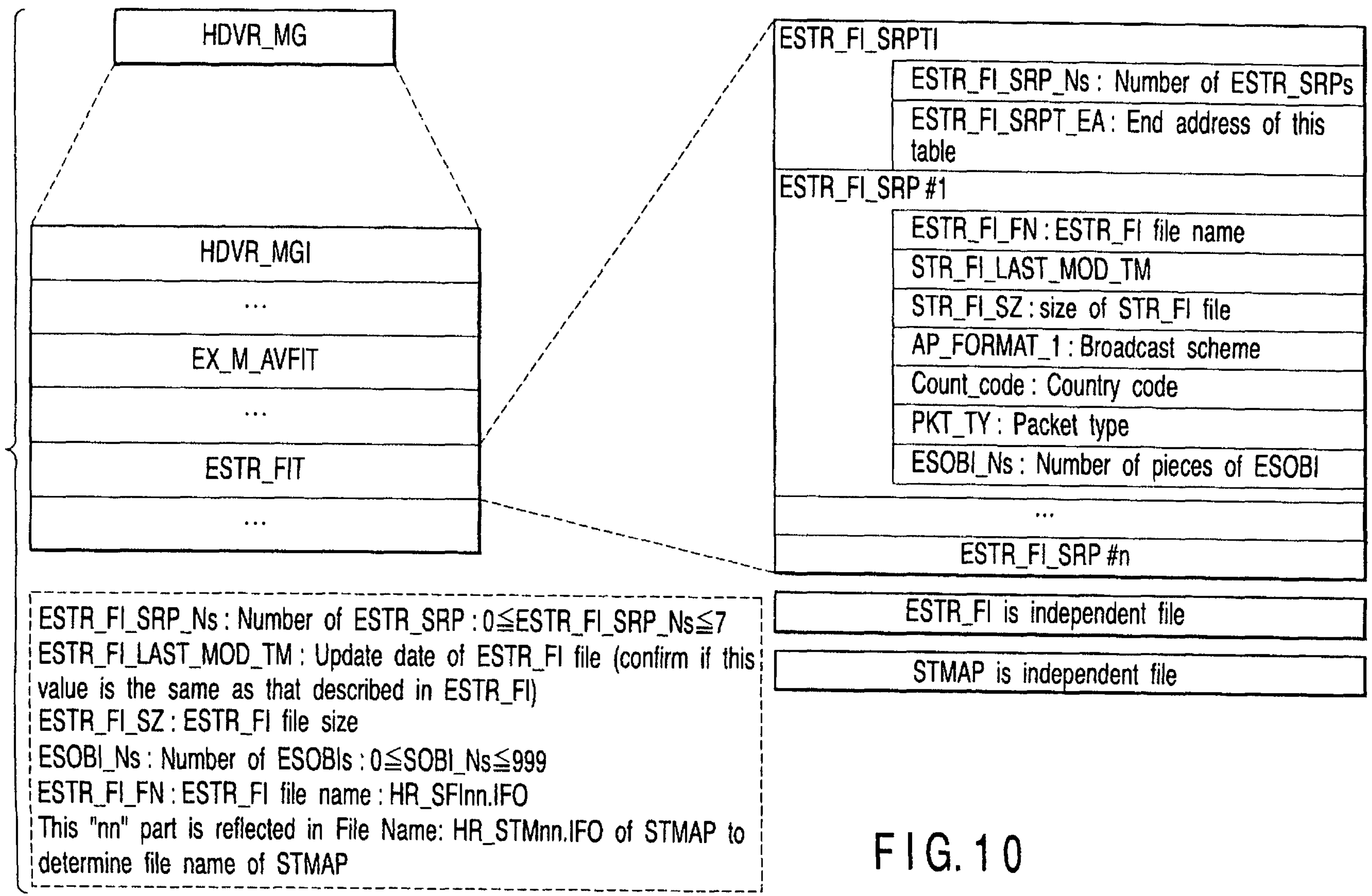
HDVR_MG
HDVR_MGI
...
EX_M_AVFIT
...
ESTR_FIT
...
ESTR_FI_SRPTI
ESTR_FI_SRP_Ns : Number of ESTR_SRPs
ESTR_FI_SRPT_EA : End address of this table
ESTR_FI_SRP #1
ESTR_FI_FN : ESTR_FI file name
STR_FI_LAST_MOD_TM
STR_FI_SZ : size of STR_FI file
AP_FORMAT_1 : Broadcast scheme
Count_code : Country code
PKT_TY : Packet type
ESOBI_Ns : Number of pieces of ESOBI
...
ESTR_FI_SRP #n
ESTR_FI is independent file
STMAP is independent file
ESTR_FI_SRP_Ns : Number of ESTR_SRP : 0≦ESTR_FI_SRP_Ns≦7
ESTR_FI_LAST_MOD_TM : Update date of ESTR_FI file (confirm if this value is the same as that described in ESTR_FI)
ESTR_FI_SZ : ESTR_FI file size
ESOBI_Ns : Number of ESOBIs : 0≦SOBI_Ns≦999
ESTR_FI_FN : ESTR_FI file name : HR_SFInn.IFO
This "nn" part is reflected in File Name: HR_STMnn.IFO of STMAP to determine file name of STMAP

FIG. 10

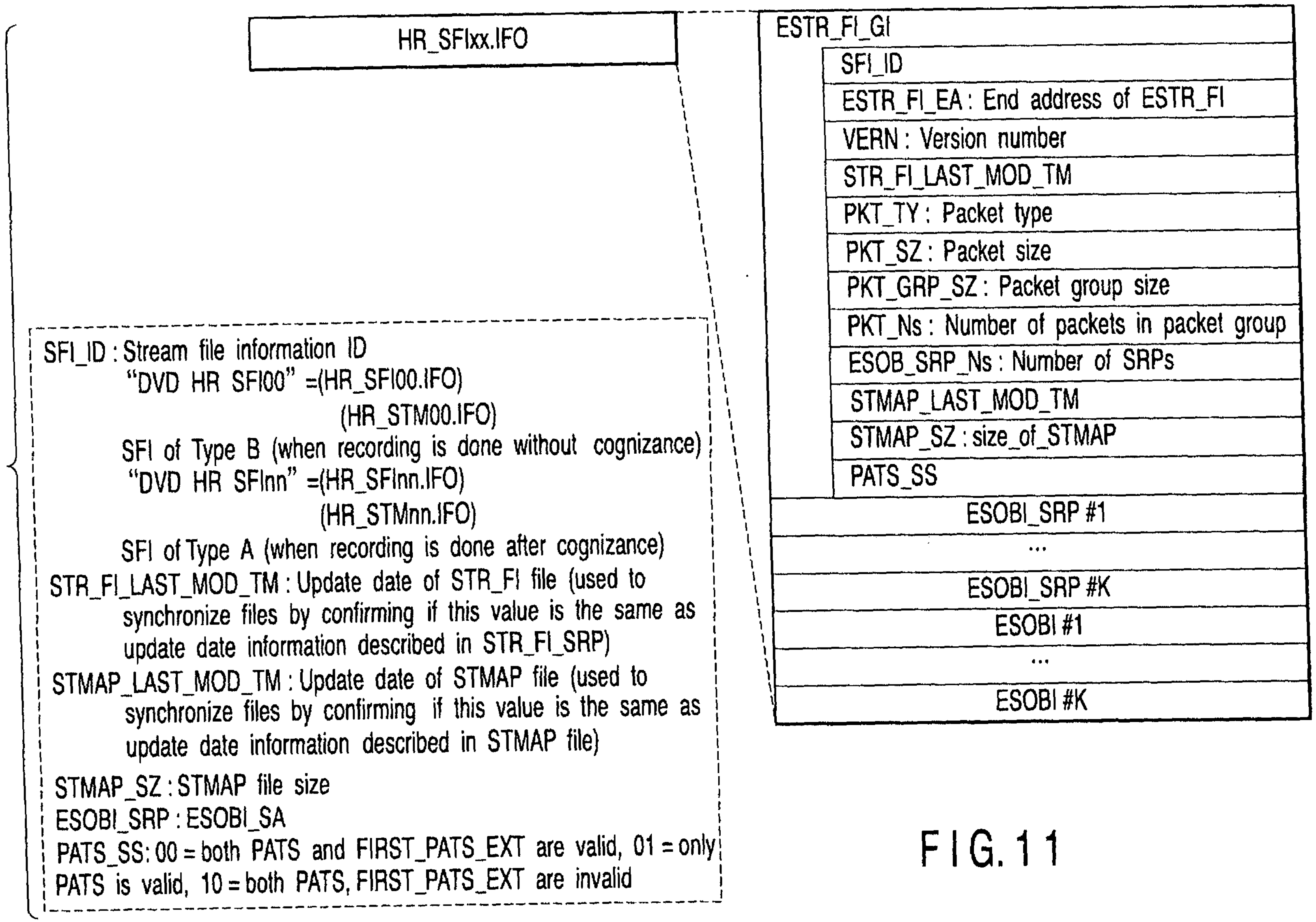
HR_SFIxx.IFO
ESTR_FI_GI
SFI_ID
ESTR_FI_EA : End address of ESTR_FI
VERN : Version number
STR_FI_LAST_MOD_TM
PKT_TY : Packet type
PKT_SZ : Packet size
PKT_GRP_SZ : Packet group size
PKT_Ns : Number of packets in packet group
ESOB_SRP_Ns : Number of SRPs
STMAP_LAST_MOD_TM
STMAP_SZ : size_of_STMAP
PATS_SS
ESOBI_SRP #1
...
ESOBI_SRP #K
ESOBI #1
...
ESOBI #K
SFI_ID : Stream file information ID
"DVD HR SFI00" =(HR_SFI00.IFO)
(HR_STM00.IFO)
SFI of Type B (when recording is done without cognizance)
"DVD HR SFInn" =(HR_SFInn.IFO)
(HR_STMnn.IFO)
SFI of Type A (when recording is done after cognizance)
STR_FI_LAST_MOD_TM : Update date of STR_FI file (used to synchronize files by confirming if this value is the same as update date information described in STR_FI_SRP)
STMAP_LAST_MOD_TM : Update date of STMAP file (used to synchronize files by confirming if this value is the same as update date information described in STMAP file)
STMAP_SZ : STMAP file size
ESOBI_SRP : ESOBI_SA
PATS_SS: 00 = both PATS and FIRST_PATS_EXT are valid, 01 = only PATS is valid, 10 = both PATS, FIRST_PATS_EXT are invalid

FIG. 11

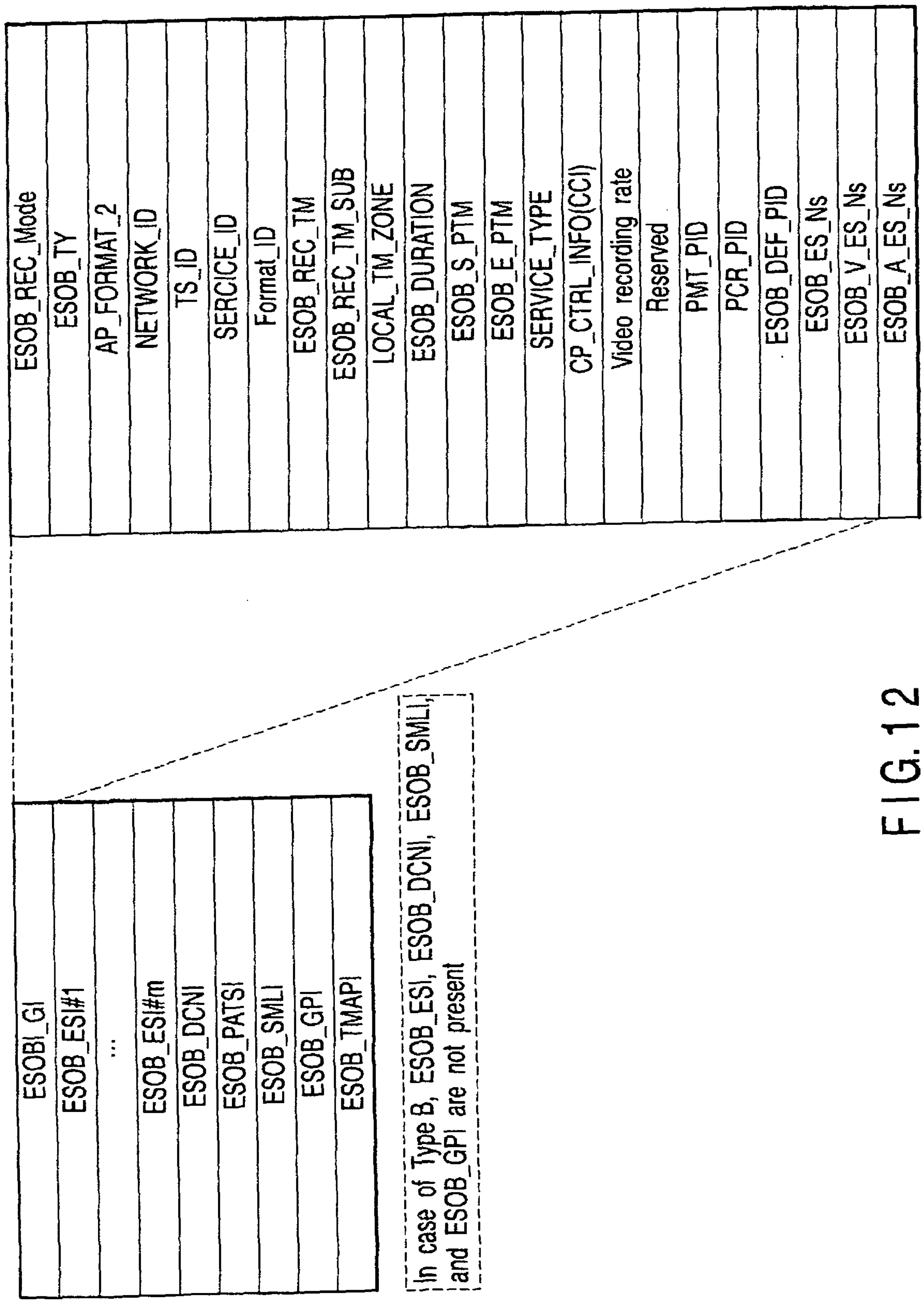
ESOBI_GI
ESOB_ESI#1
...
ESOB_ESI#m
ESOB_DCNI
ESOB_PATSI
ESOB_SMLI
ESOB_GPI
ESOB_TMAPI
In case of Type B, ESOB_ESI, ESOB_DCNI, ESOB_SMLI, and ESOB_GPI are not present
ESOB_REC_Mode
ESOB_TY
AP_FORMAT_2
NETWORK_ID
TS_ID
SERCICE_ID
Format_ID
ESOB_REC_TM
ESOB_REC_TM_SUB
LOCAL_TM_ZONE
ESOB_DURATION
ESOB_S_PTM
ESOB_E_PTM
SERVICE_TYPE
CP_CTRL_INFO(CCI)
Video recording rate
Reserved
PMT_PID
PCR_PID
ESOB_DEF_PID
ESOB_ES_Ns
ESOB_V_ES_Ns
ESOB_A_ES_Ns

FIG.12

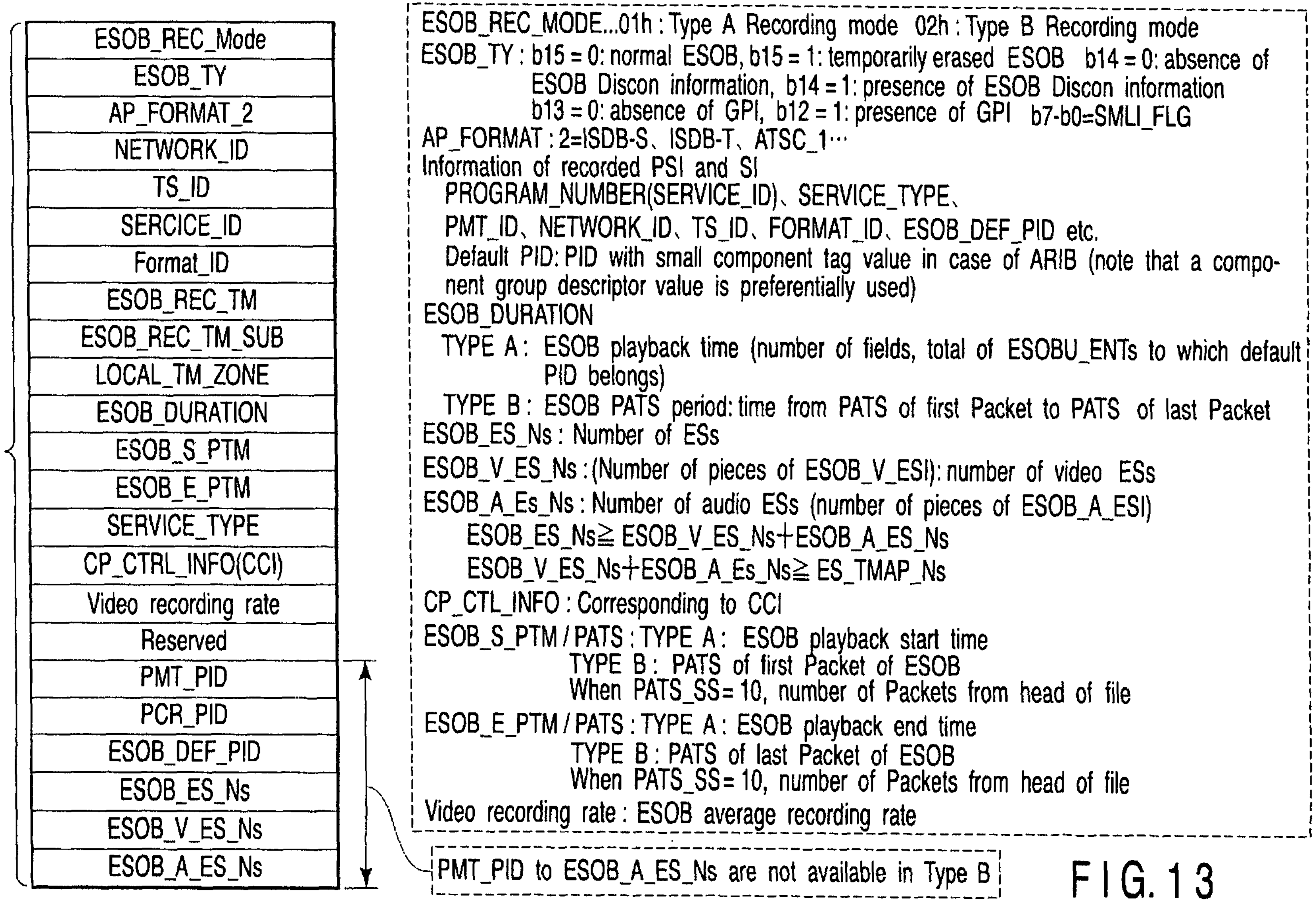
ESOB_REC_Mode
ESOB_TY
AP_FORMAT_2
NETWORK_ID
TS_ID
SERCICE_ID
Format_ID
ESOB_REC_TM
ESOB_REC_TM_SUB
LOCAL_TM_ZONE
ESOB_DURATION
ESOB_S_PTM
ESOB_E_PTM
SERVICE_TYPE
CP_CTRL_INFO(CCI)
Video recording rate
Reserved
PMT_PID
PCR_PID
ESOB_DEF_PID
ESOB_ES_Ns
ESOB_V_ES_Ns
ESOB_A_ES_Ns
ESOB_REC_MODE...01h : Type A Recording mode 02h : Type B Recording mode
ESOB_TY : b15 = 0: normal ESOB, b15 = 1: temporarily erased ESOB b14 = 0: absence of ESOB Discon information, b14 = 1: presence of ESOB Discon information
b13 = 0: absence of GPI, b12 = 1: presence of GPI b7-b0=SMLI_FLG
AP_FORMAT : 2=ISDB-S、ISDB-T、ATSC_1…
Information of recorded PSI and SI
PROGRAM_NUMBER(SERVICE_ID)、SERVICE_TYPE、
PMT_ID、NETWORK_ID、TS_ID、FORMAT_ID、ESOB_DEF_PID etc.
Default PID: PID with small component tag value in case of ARIB (note that a component group descriptor value is preferentially used)
ESOB_DURATION
TYPE A : ESOB playback time (number of fields, total of ESOBU_ENTs to which default PID belongs)
TYPE B : ESOB PATS period: time from PATS of first Packet to PATS of last Packet
ESOB_ES_Ns : Number of ESs
ESOB_V_ES_Ns : (Number of pieces of ESOB_V_ESI): number of video ESs
ESOB_A_Es_Ns : Number of audio ESs (number of pieces of ESOB_A_ESI)
ESOB_ES_Ns≧ ESOB_V_ES_Ns+ESOB_A_ES_Ns
ESOB_V_ES_Ns+ESOB_A_Es_Ns≧ ES_TMAP_Ns
CP_CTL_INFO : Corresponding to CCI
ESOB_S_PTM / PATS : TYPE A : ESOB playback start time
TYPE B : PATS of first Packet of ESOB
When PATS_SS= 10, number of Packets from head of file
ESOB_E_PTM / PATS : TYPE A : ESOB playback end time
TYPE B : PATS of last Packet of ESOB
When PATS_SS= 10, number of Packets from head of file
Video recording rate : ESOB average recording rate
PMT_PID to ESOB_A_ES_Ns are not available in Type B

FIG. 13

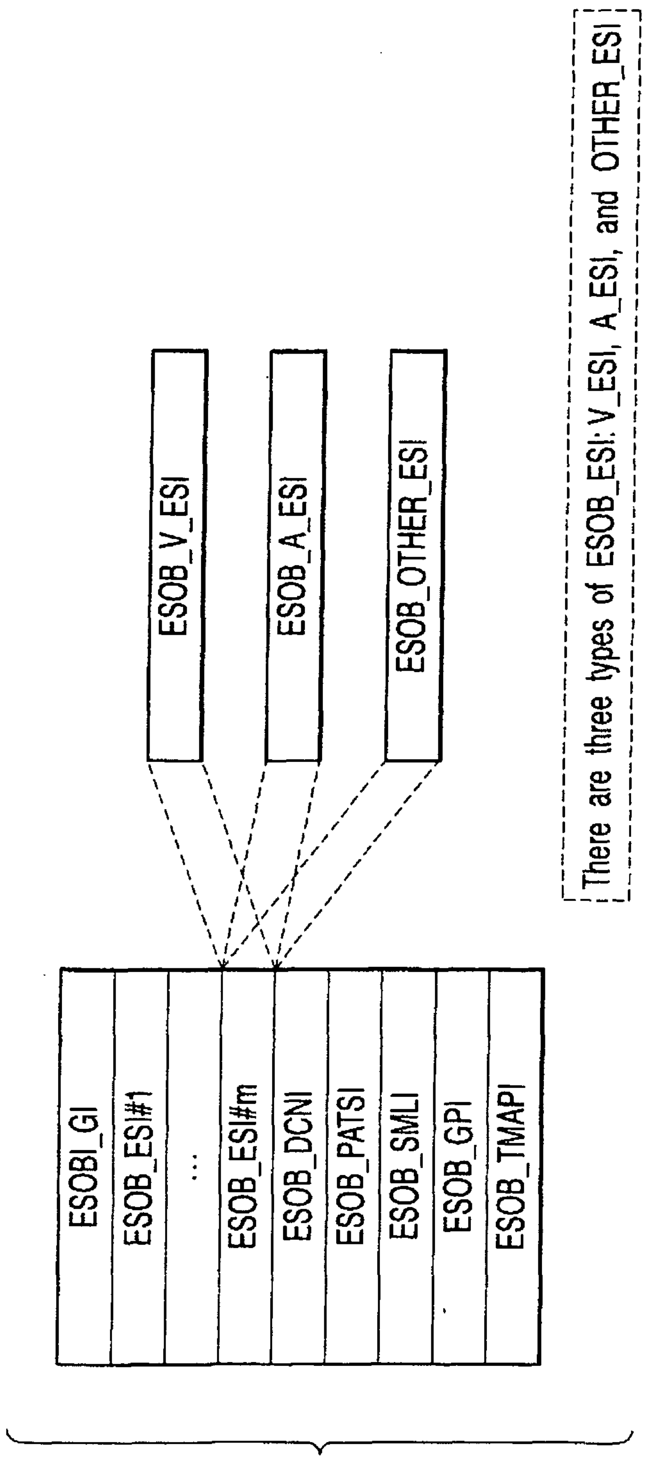
ESOBI_GI
ESOB_ESI#1
...
ESOB_ESI#m
ESOB_DCNI
ESOB_PATSI
ESOB_SMLI
ESOB_GPI
ESOB_TMAPI
ESOB_V_ESI
ESOB_A_ESI
ESOB_OTHER_ESI
There are three types of ESOB_ESI: V_ESI, A_ESI, and OTHER_ESI

FIG.14

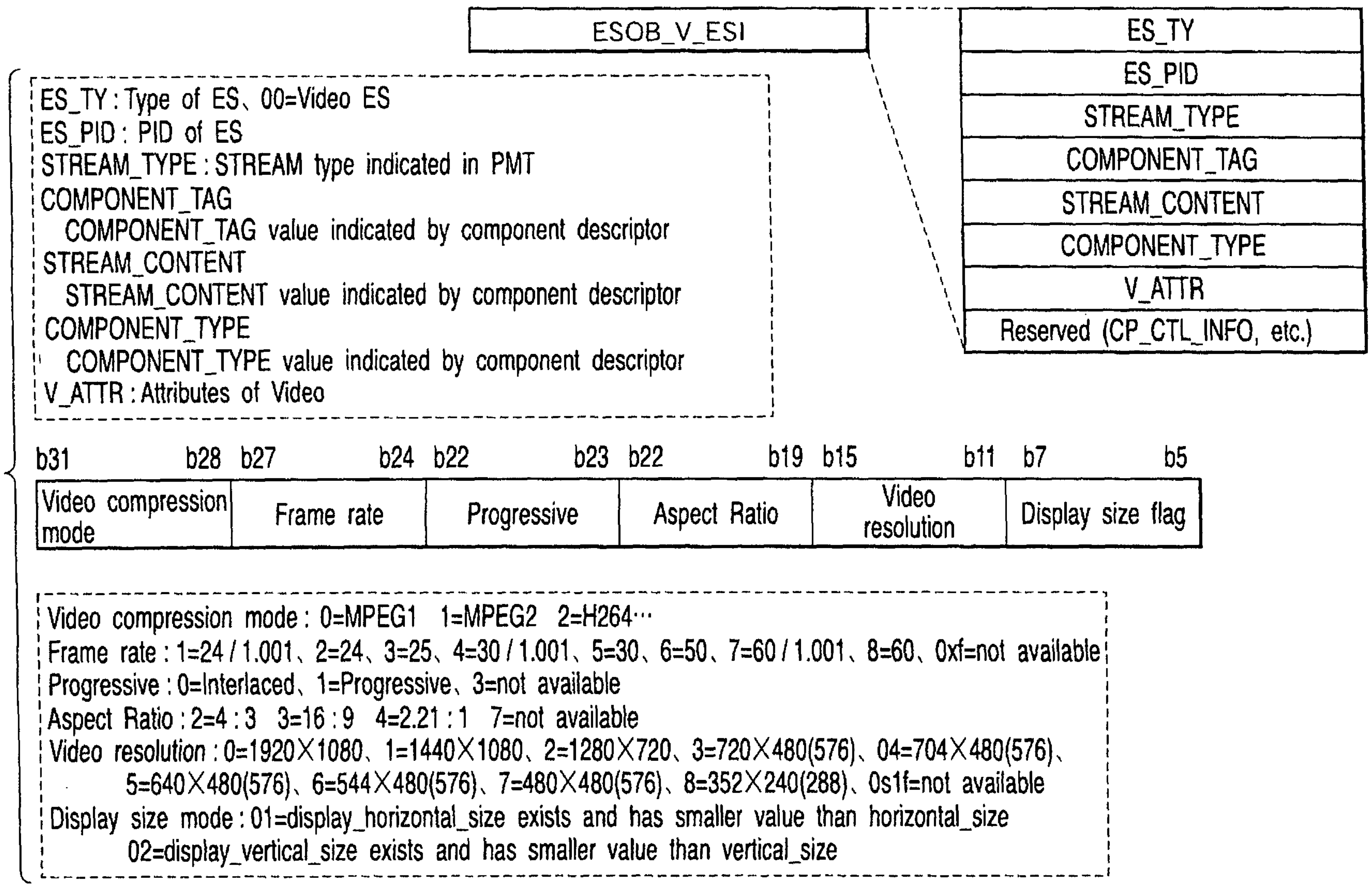
ESOB_V_ESI
ES_TY
ES_PID
STREAM_TYPE
COMPONENT_TAG
STREAM_CONTENT
COMPONENT_TYPE
V_ATTR
Reserved (CP_CTL_INFO, etc.)
ES_TY : Type of ES、00=Video ES
ES_PID : PID of ES
STREAM_TYPE : STREAM type indicated in PMT
COMPONENT_TAG
COMPONENT_TAG value indicated by component descriptor
STREAM_CONTENT
STREAM_CONTENT value indicated by component descriptor
COMPONENT_TYPE
COMPONENT_TYPE value indicated by component descriptor
V_ATTR : Attributes of Video
b31 b28 b27 b24 b22 b23 b22 b19 b15 b11 b7 b5
Video compression mode
Frame rate
Progressive
Aspect Ratio
Video resolution
Display size flag
Video compression mode : 0=MPEG1 1=MPEG2 2=H264…
Frame rate : 1=24 / 1.001、2=24、3=25、4=30 / 1.001、5=30、6=50、7=60 / 1.001、8=60、0xf=not available
Progressive : 0=Interlaced、1=Progressive、3=not available
Aspect Ratio : 2=4 : 3 3=16 : 9 4=2.21 : 1 7=not available
Video resolution : 0=1920X1080、1=1440X1080、2=1280X720、3=720X480(576)、04=704X480(576)、
5=640X480(576)、6=544X480(576)、7=480X480(576)、8=352X240(288)、0s1f=not available
Display size mode : 01=display_horizontal_size exists and has smaller value than horizontal_size
02=display_vertical_size exists and has smaller value than vertical_size

FIG. 15

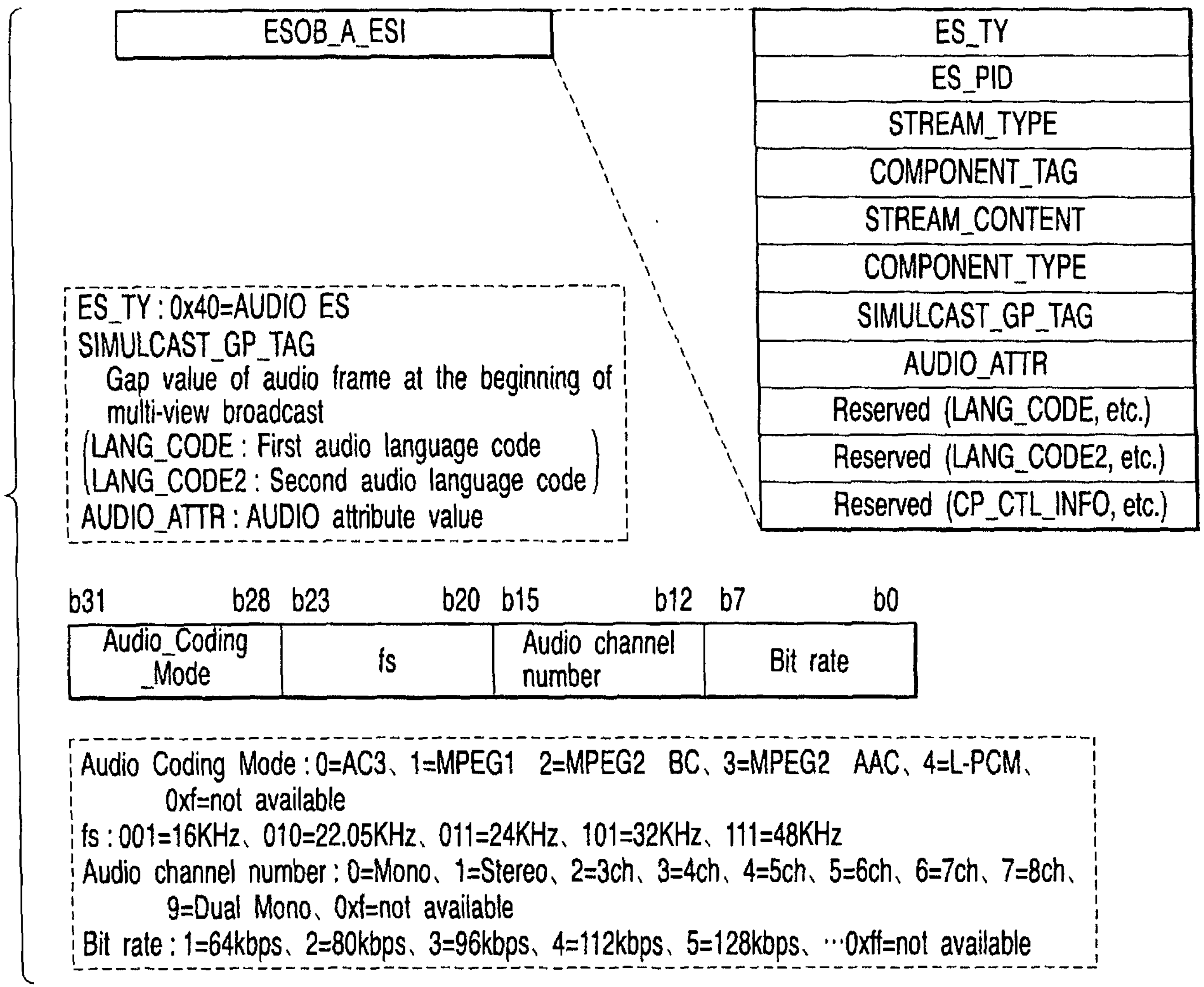
ESOB_A_ESI
ES_TY
ES_PID
STREAM_TYPE
COMPONENT_TAG
STREAM_CONTENT
COMPONENT_TYPE
SIMULCAST_GP_TAG
AUDIO_ATTR
Reserved (LANG_CODE, etc.)
Reserved (LANG_CODE2, etc.)
Reserved (CP_CTL_INFO, etc.)
ES_TY : 0x40=AUDIO ES
SIMULCAST_GP_TAG
Gap value of audio frame at the beginning of multi-view broadcast
(LANG_CODE : First audio language code
LANG_CODE2 : Second audio language code)
AUDIO_ATTR : AUDIO attribute value
b31 b28 b23 b20 b15 b12 b7 b0
Audio_Coding_Mode
fs
Audio channel number
Bit rate
Audio Coding Mode : 0=AC3、1=MPEG1 2=MPEG2 BC、3=MPEG2 AAC、4=L-PCM、0xf=not available
fs : 001=16KHz、010=22.05KHz、011=24KHz、101=32KHz、111=48KHz
Audio channel number : 0=Mono、1=Stereo、2=3ch、3=4ch、4=5ch、5=6ch、6=7ch、7=8ch、9=Dual Mono、0xf=not available
Bit rate : 1=64kbps、2=80kbps、3=96kbps、4=112kbps、5=128kbps、···0xff=not available

FIG. 16

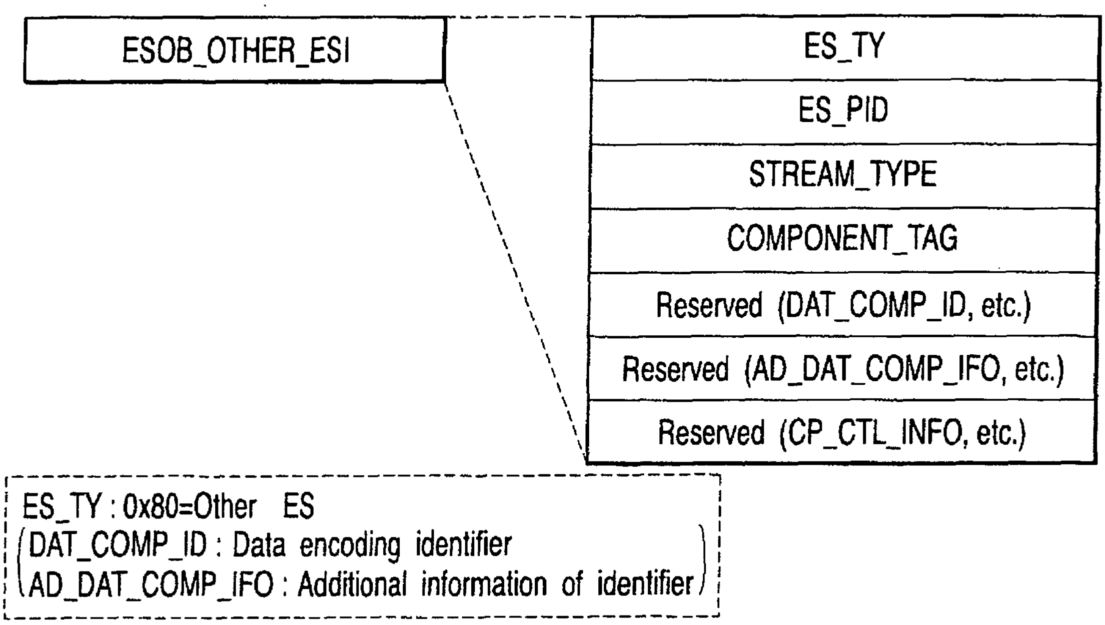
ESOB_OTHER_ESI
ES_TY
ES_PID
STREAM_TYPE
COMPONENT_TAG
Reserved (DAT_COMP_ID, etc.)
Reserved (AD_DAT_COMP_IFO, etc.)
Reserved (CP_CTL_INFO, etc.)
ES_TY : 0x80=Other ES
DAT_COMP_ID : Data encoding identifier
AD_DAT_COMP_IFO : Additional information of identifier

FIG. 17

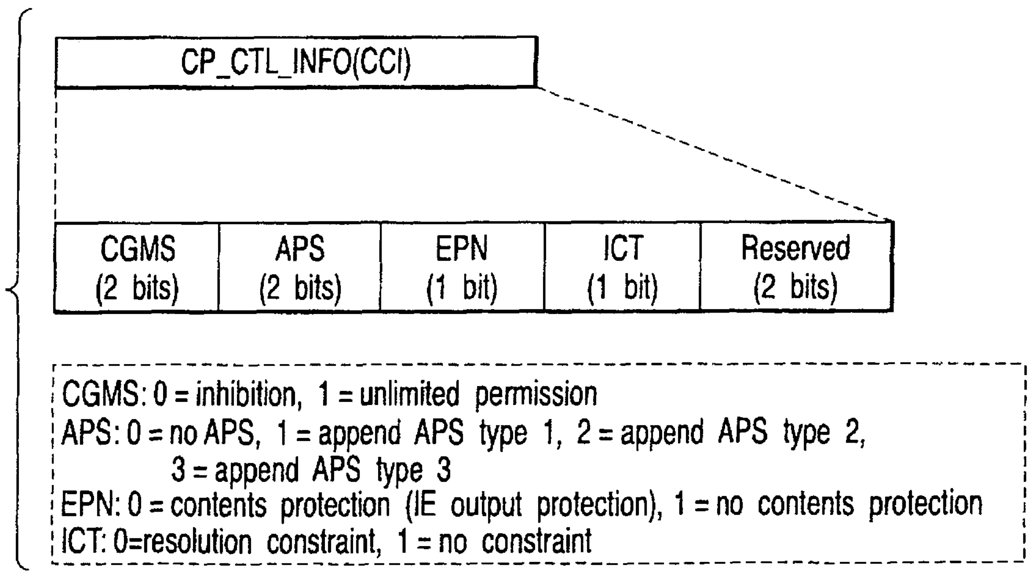
CP_CTL_INFO(CCI)
CGMS (2 bits)
APS (2 bits)
EPN (1 bit)
ICT (1 bit)
Reserved (2 bits)
CGMS: 0 = inhibition, 1 = unlimited permission
APS: 0 = no APS, 1 = append APS type 1, 2 = append APS type 2, 3 = append APS type 3
EPN: 0 = contents protection (IE output protection), 1 = no contents protection
ICT: 0=resolution constraint, 1 = no constraint

FIG. 18

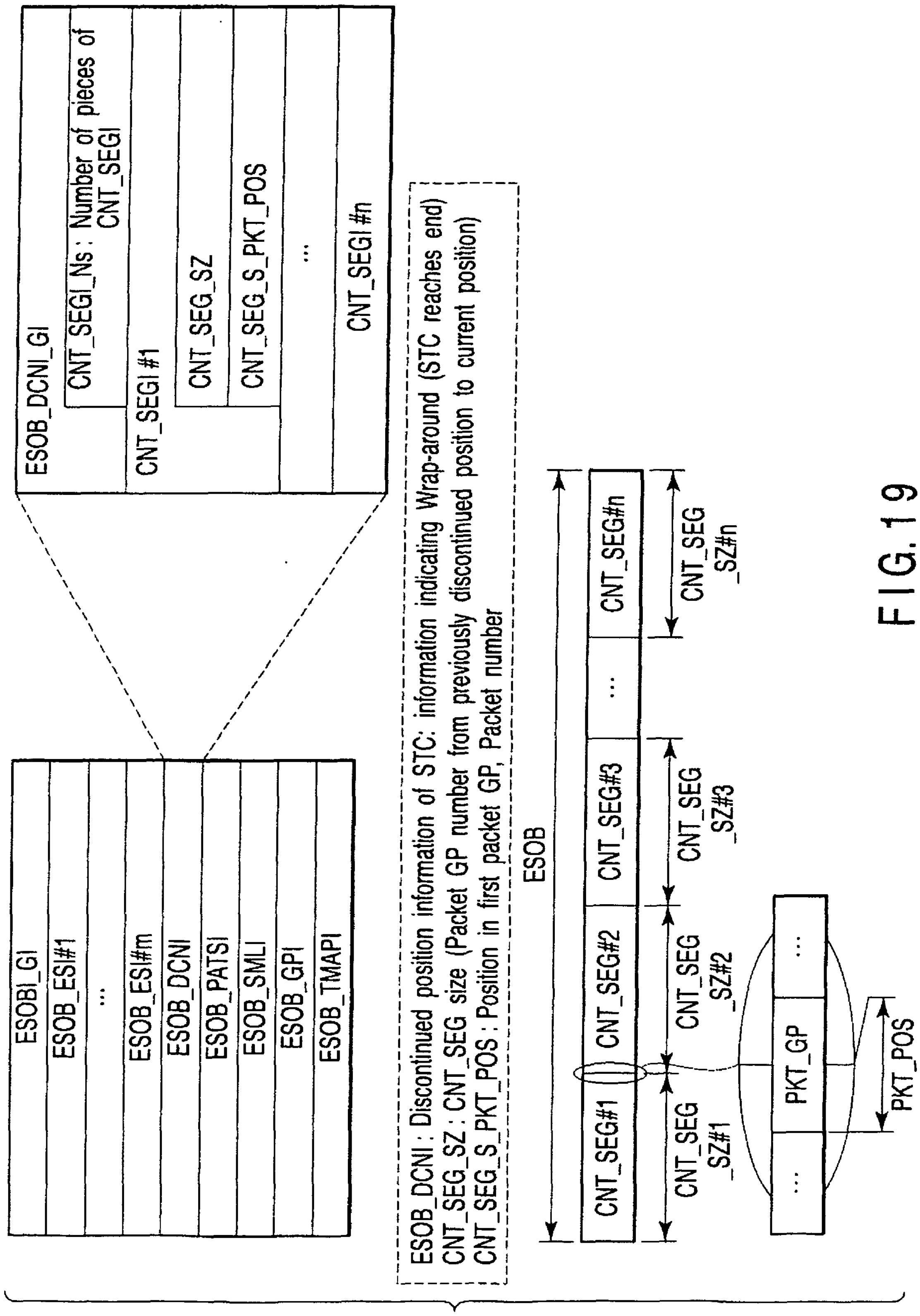
ESOBI_GI
ESOB_ESI#1
...
ESOB_ESI#m
ESOB_DCNI
ESOB_PATSI
ESOB_SMLI
ESOB_GPI
ESOB_TMAPI
ESOB_DCNI_GI
CNT_SEGI_Ns : Number of pieces of CNT_SEGI
CNT_SEGI #1
CNT_SEG_SZ
CNT_SEG_S_PKT_POS
...
CNT_SEGI #n
ESOB_DCNI : Discontinued position information of STC: information indicating Wrap-around (STC reaches end)
CNT_SEG_SZ : CNT_SEG size (Packet GP number from previously discontinued position to current position)
CNT_SEG_S_PKT_POS : Position in first packet GP, Packet number
ESOB
CNT_SEG#1
CNT_SEG#2
CNT_SEG#3
...
CNT_SEG#n
CNT_SEG _SZ#1
CNT_SEG _SZ#2
CNT_SEG _SZ#3
CNT_SEG _SZ#n
...
PKT_GP
...
PKT_POS

FIG.19

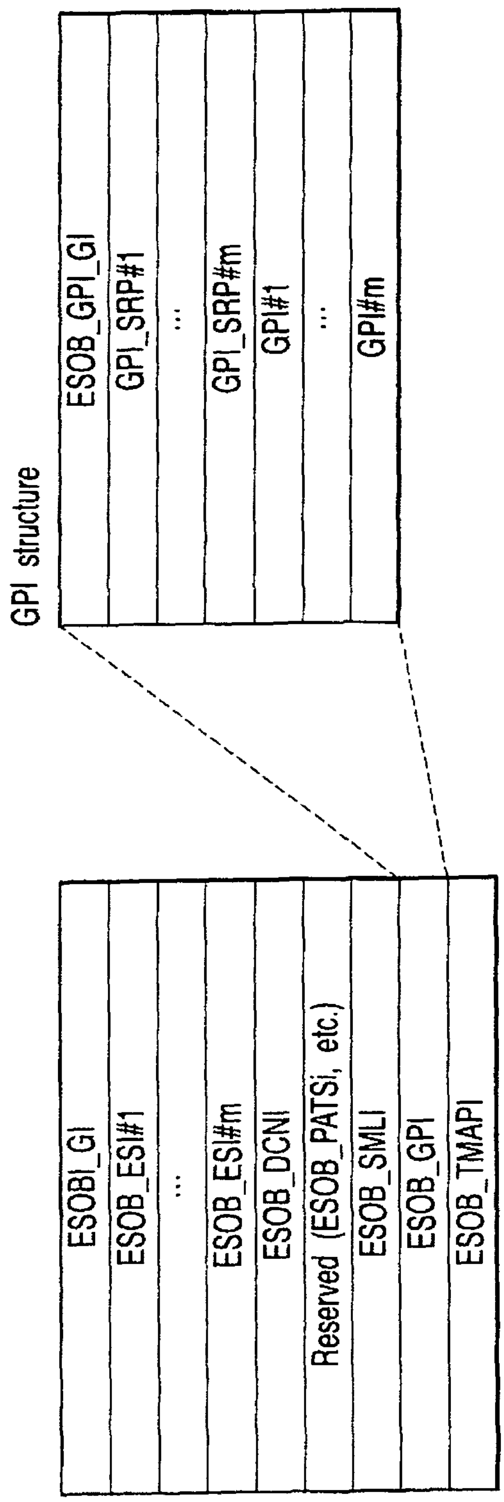
GPI structure
ESOB_GPI_GI
GPI_SRP#1
...
GPI_SRP#m
GPI#1
...
GPI#m
ESOBI_GI
ESOB_ESI#1
...
ESOB_ESI#m
ESOB_DCNI
Reserved (ESOB_PATSi, etc.)
ESOB_SMLI
ESOB_GPI
ESOB_TMAPI

FIG. 20

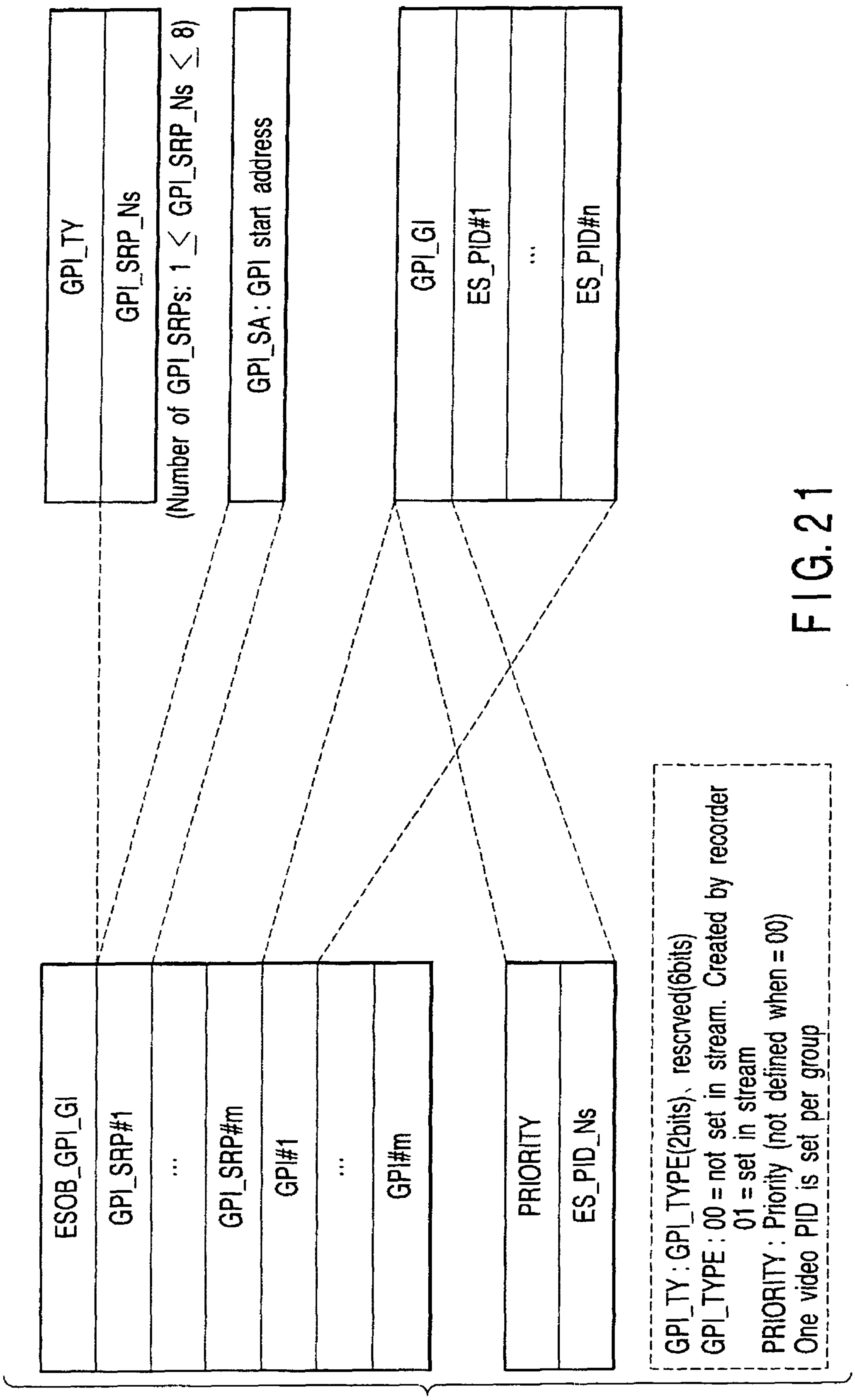
ESOB_GPI_GI
GPI_SRP#1
...
GPI_SRP#m
GPI#1
...
GPI#m
PRIORITY
ES_PID_Ns
GPI_TY
GPI_SRP_Ns
(Number of GPI_SRPs: 1 ≤ GPI_SRP_Ns ≤ 8)
GPI_SA : GPI start address
GPI_GI
ES_PID#1
...
ES_PID#n
GPI_TY : GPI_TYPE(2bits), rescrved(6bits)
GPI_TYPE : 00 = not set in stream. Created by recorder
01 = set in stream
PRIORITY : Priority (not defined when = 00)
One video PID is set per group

FIG. 21

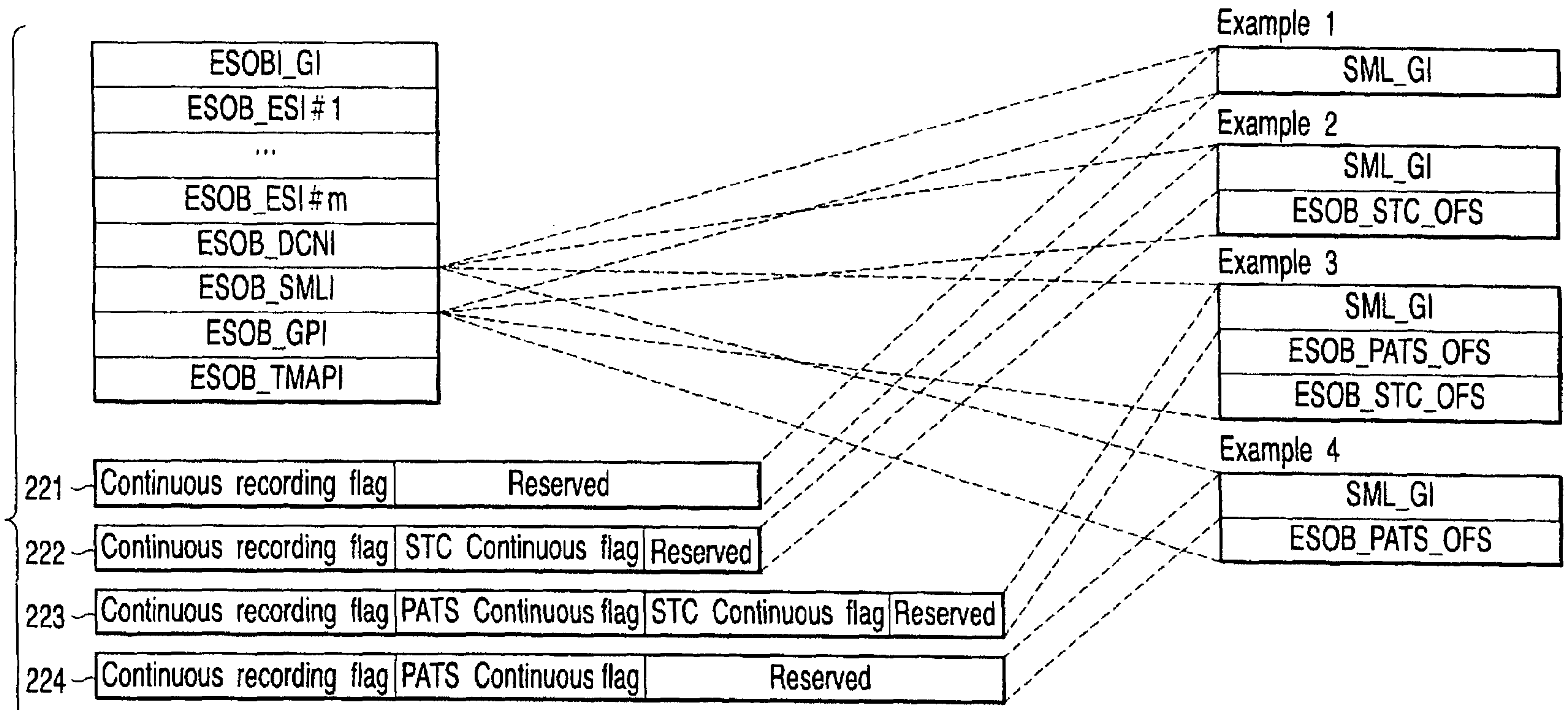


Seamless information with immediately preceding ESOB with continuous ESOB_ID
Continuous recording flag: flag indicating that current ESOB is recorded continuously with immediately preceding ESOB
STC continuous flag: 0 = STC values are continuous between ESOBs, 1 = STC values are not continuous
ESOB_STC_OFS: STC offset values between ESOBs (this value is 0 when STC continuous flag = 0)
PATS Continuous flag: 0 = PATS data are continuous; 1 = PATS data are discontinuous
ESOB_PATS_OFS: time after transfer of TS of previous ESOB until transmission of first TS of next ESOB (this value is 0 when PATS continuous flag = 0)

FIG. 22

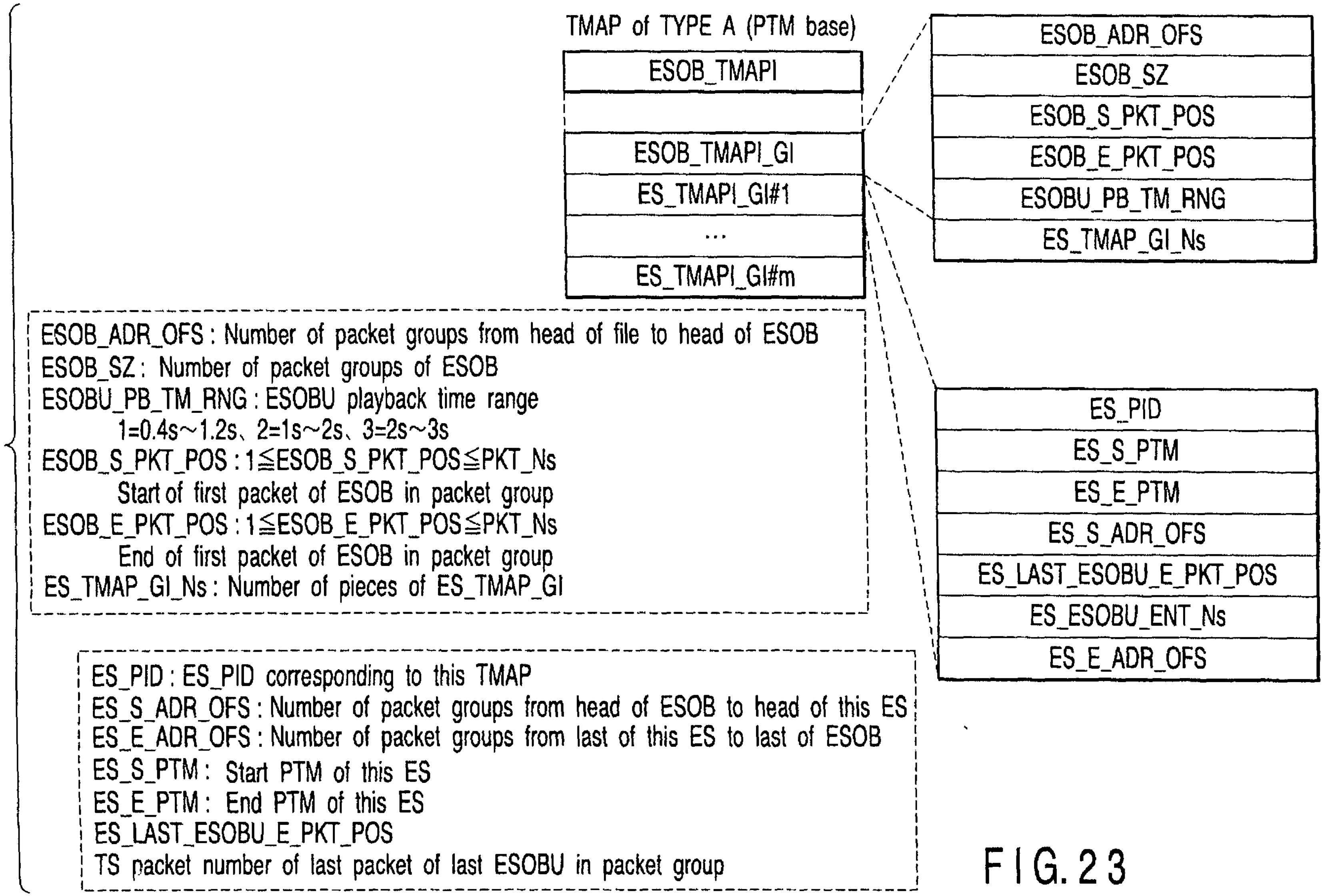
TMAP of TYPE A (PTM base)
ESOB_TMAPI
ESOB_TMAPI_GI
ES_TMAPI_GI#1
...
ES_TMAPI_GI#m
ESOB_ADR_OFS
ESOB_SZ
ESOB_S_PKT_POS
ESOB_E_PKT_POS
ESOBU_PB_TM_RNG
ES_TMAP_GI_Ns
ES_PID
ES_S_PTM
ES_E_PTM
ES_S_ADR_OFS
ES_LAST_ESOBU_E_PKT_POS
ES_ESOBU_ENT_Ns
ES_E_ADR_OFS
ESOB_ADR_OFS : Number of packet groups from head of file to head of ESOB
ESOB_SZ : Number of packet groups of ESOB
ESOBU_PB_TM_RNG : ESOBU playback time range
1=0.4s~1.2s、2=1s~2s、3=2s~3s
ESOB_S_PKT_POS : 1≦ESOB_S_PKT_POS≦PKT_Ns
Start of first packet of ESOB in packet group
ESOB_E_PKT_POS : 1≦ESOB_E_PKT_POS≦PKT_Ns
End of first packet of ESOB in packet group
ES_TMAP_GI_Ns : Number of pieces of ES_TMAP_GI
ES_PID : ES_PID corresponding to this TMAP
ES_S_ADR_OFS : Number of packet groups from head of ESOB to head of this ES
ES_E_ADR_OFS : Number of packet groups from last of this ES to last of ESOB
ES_S_PTM : Start PTM of this ES
ES_E_PTM : End PTM of this ES
ES_LAST_ESOBU_E_PKT_POS
TS packet number of last packet of last ESOBU in packet group

FIG. 23

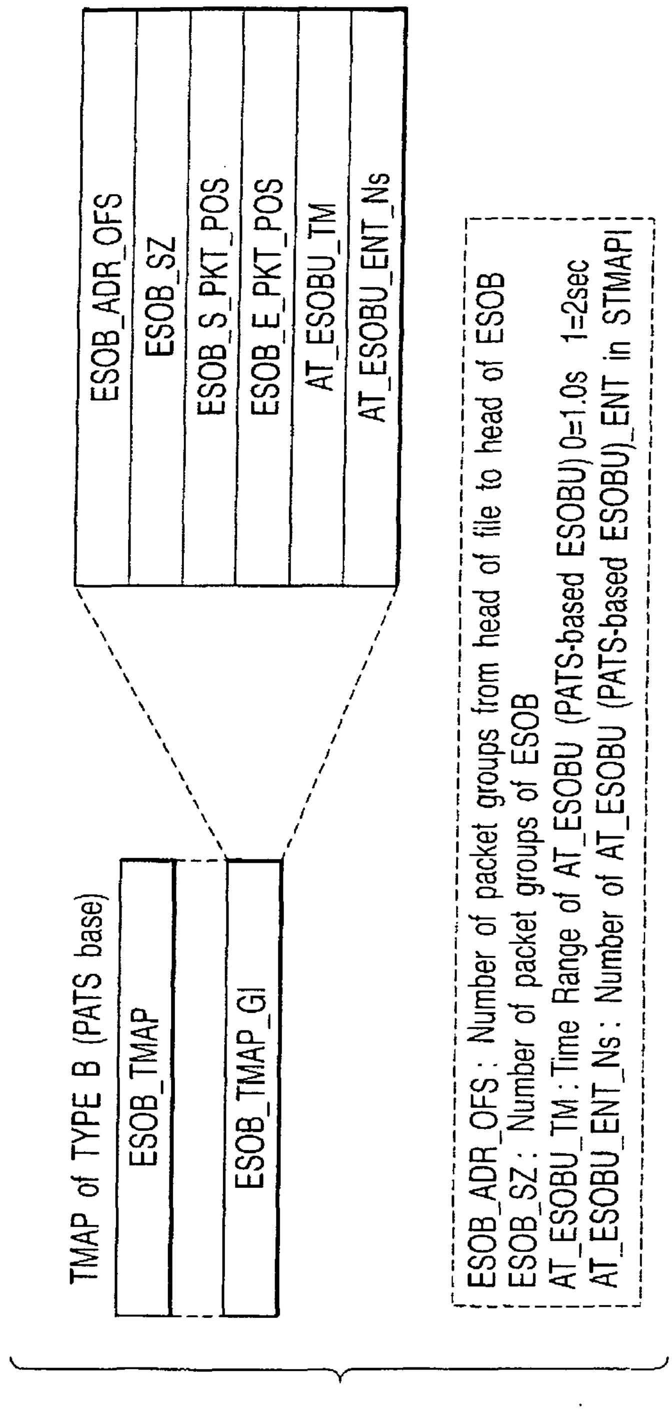
TMAP of TYPE B (PATS base)
ESOB_TMAP
ESOB_TMAP_GI
ESOB_ADR_OFS
ESOB_SZ
ESOB_S_PKT_POS
ESOB_E_PKT_POS
AT_ESOBU_TM
AT_ESOBU_ENT_Ns
ESOB_ADR_OFS : Number of packet groups from head of file to head of ESOB
ESOB_SZ : Number of packet groups of ESOB
AT_ESOBU_TM : Time Range of AT_ESOBU (PATS-based ESOBU) 0=1.0s 1=2sec
AT_ESOBU_ENT_Ns : Number of AT_ESOBU (PATS-based ESOBU)_ENT in STMAPI

F I G. 2 4

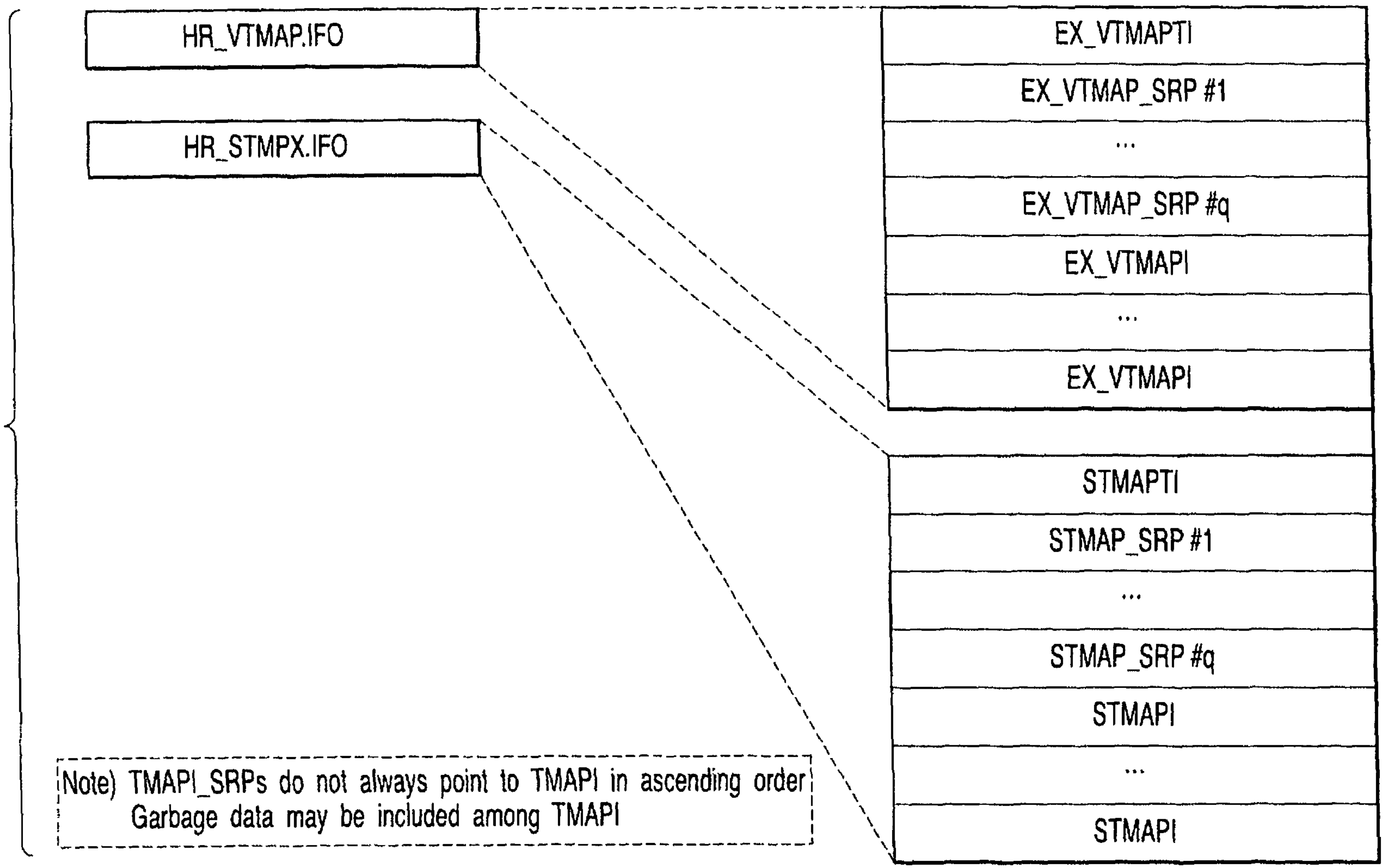
HR_VTMAP.IFO
HR_STMPX.IFO
EX_VTMAPTI
EX_VTMAP_SRP #1
...
EX_VTMAP_SRP #q
EX_VTMAPI
...
EX_VTMAPI
STMAPTI
STMAP_SRP #1
...
STMAP_SRP #q
STMAPI
...
STMAPI
Note) TMAPI_SRPs do not always point to TMAPI in ascending order
Garbage data may be included among TMAPI

F I G. 2 5

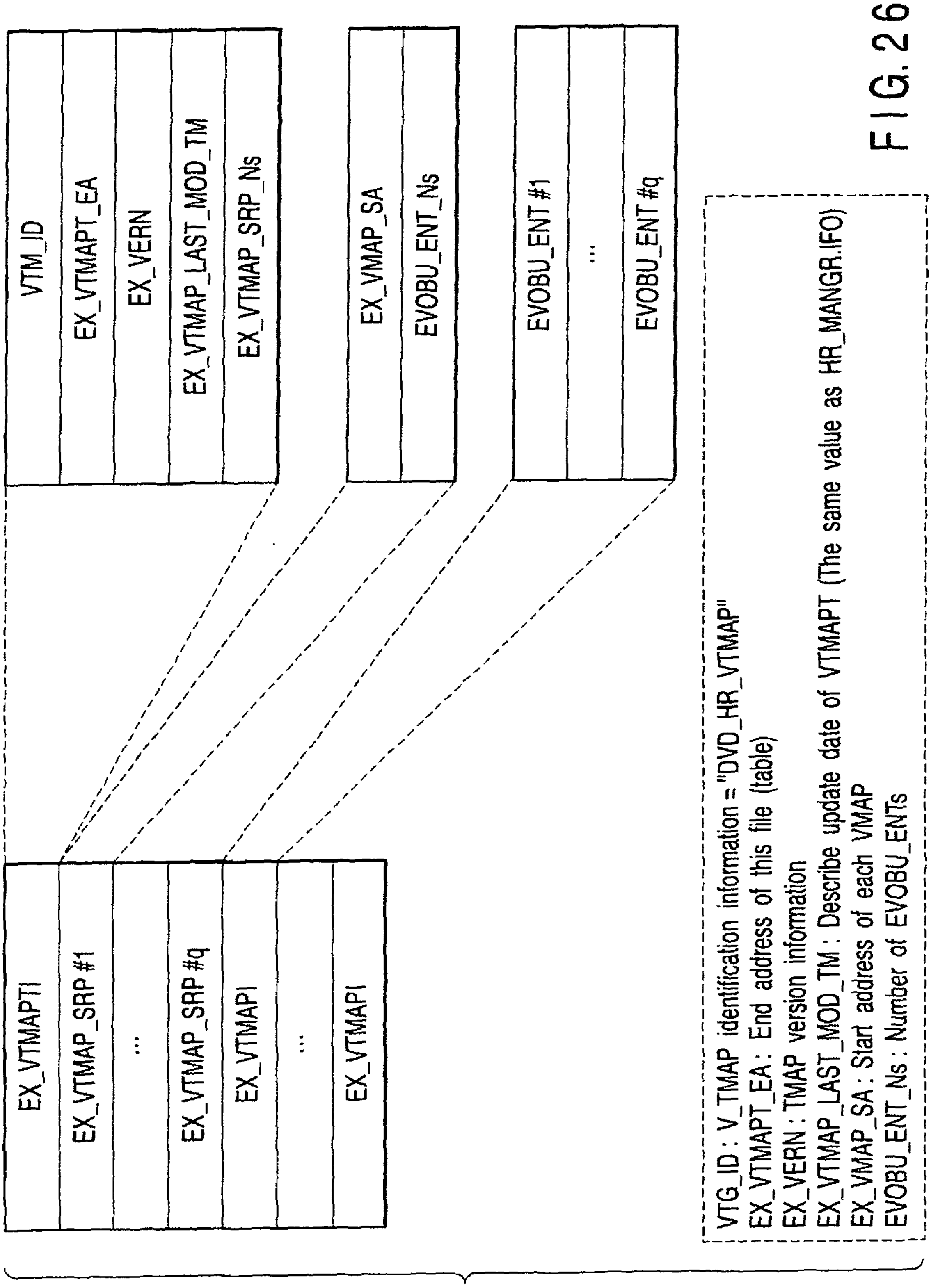
EX_VTMAPTI
EX_VTMAP_SRP #1
...
EX_VTMAP_SRP #q
EX_VTMAPI
...
EX_VTMAPI
VTM_ID
EX_VTMAPT_EA
EX_VERN
EX_VTMAP_LAST_MOD_TM
EX_VTMAP_SRP_Ns
EX_VMAP_SA
EVOBU_ENT_Ns
EVOBU_ENT #1
...
EVOBU_ENT #q
VTG_ID : V_TMAP identification information = "DVD_HR_VTMAP"
EX_VTMAPT_EA : End address of this file (table)
EX_VERN : TMAP version information
EX_VTMAP_LAST_MOD_TM : Describe update date of VTMAPT (The same value as HR_MANGR.IFO)
EX_VMAP_SA : Start address of each VMAP
EVOBU_ENT_Ns : Number of EVOBU_ENTs

FIG. 26

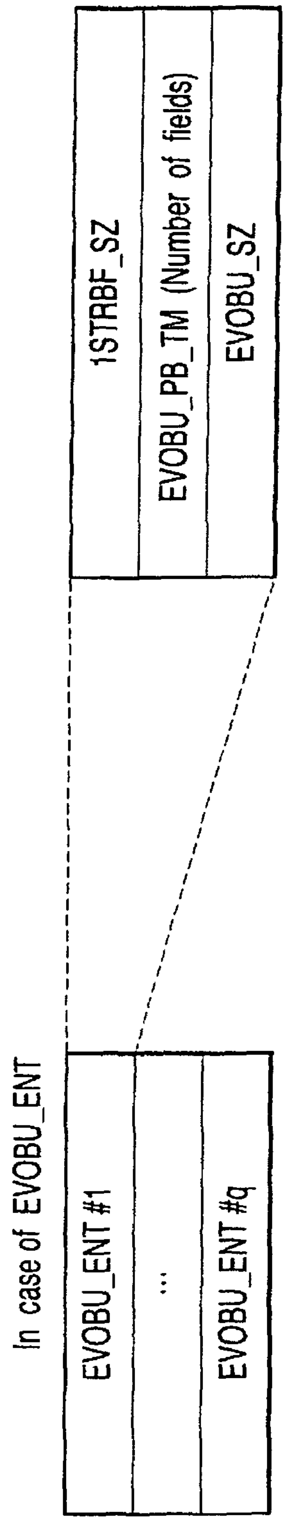
In case of EVOBU_ENT
EVOBU_ENT #1
...
EVOBU_ENT #q
1STRBF_SZ
EVOBU_PB_TM (Number of fields)
EVOBU_SZ

FIG. 27

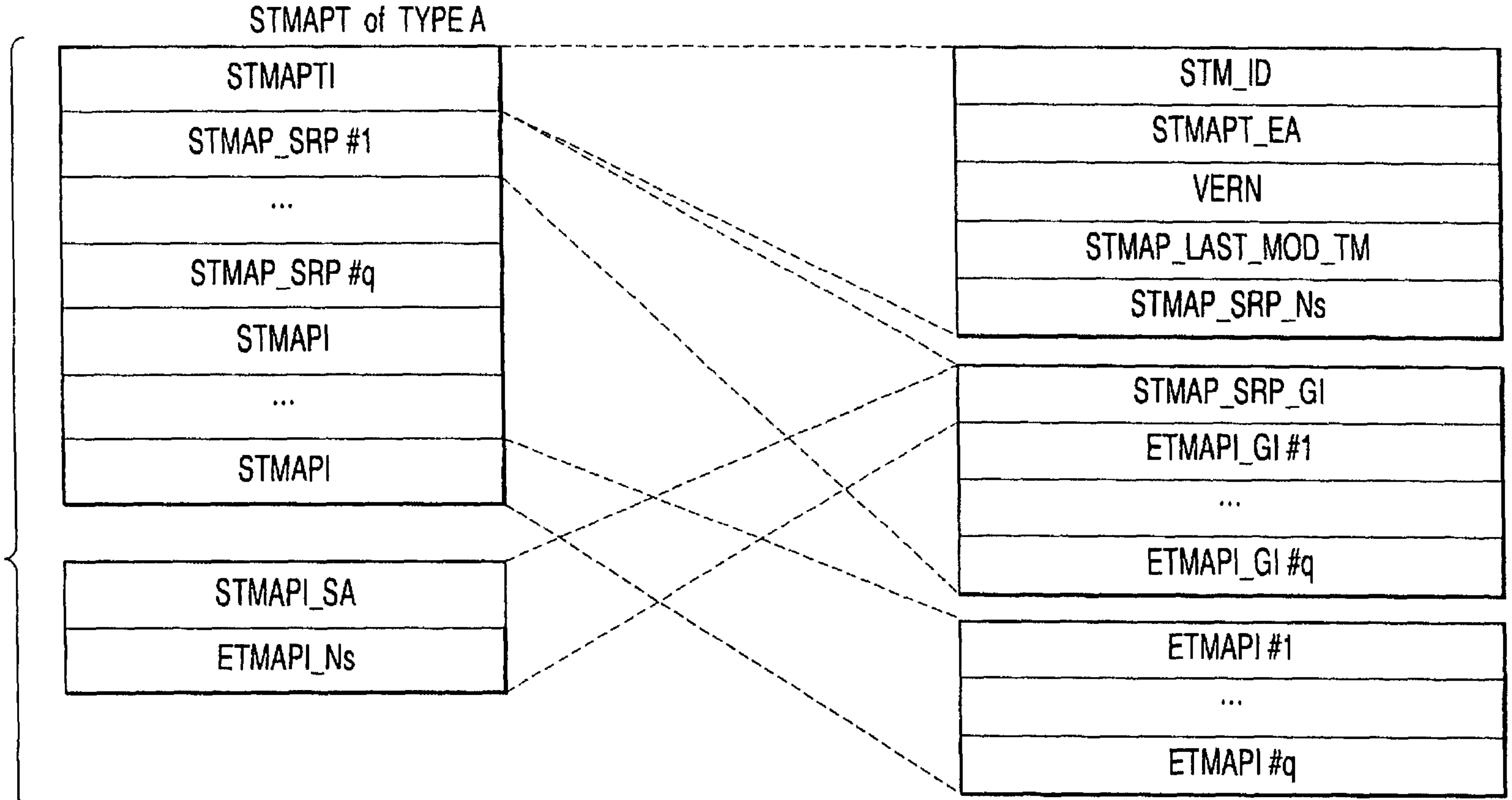


STM_ID : STMAP identification information "DVD_HR_STRnn" TYPE A: nn is integer other than 0
STMAPT_EA : End address of this file
VERN : TMAP version information
STMAP_LAST_MOD_TM : Describe update date of STMAPT (The same value as HR_MANGR.IFO)
SMAP_SA : Start address of each SMAP
ES_TMAPI_Ns : In case of PTM base: number of pieces of ES_TMAPI, in case of ATS base: set 1

FIG. 28

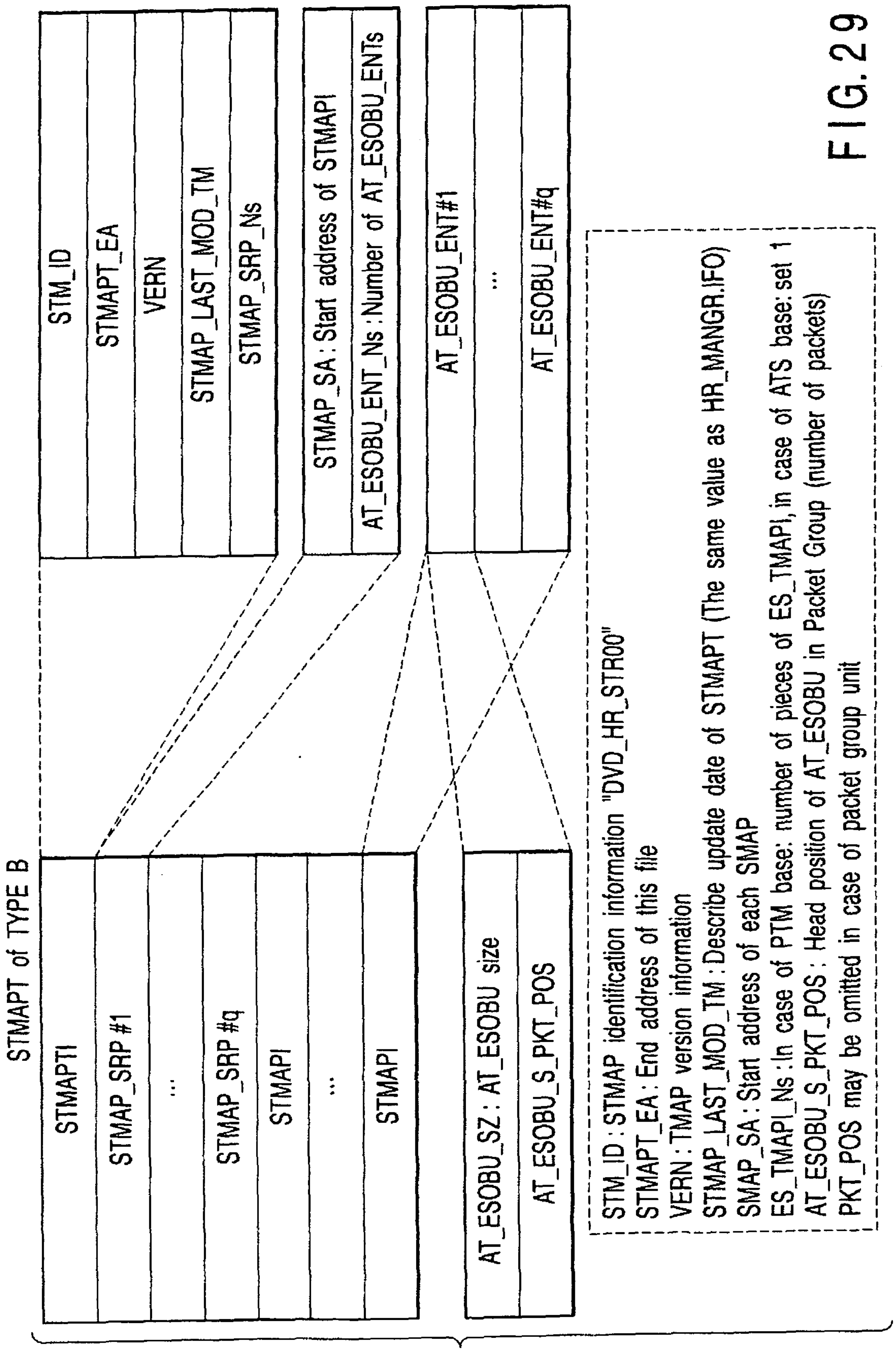
STMAPT of TYPE B
STMAPTI
STMAP_SRP #1
...
STMAP_SRP #q
STMAPI
...
STMAPI
STM_ID
STMAPT_EA
VERN
STMAP_LAST_MOD_TM
STMAP_SRP_Ns
STMAP_SA : Start address of STMAPI
AT_ESOBU_ENT_Ns : Number of AT_ESOBU_ENTs
AT_ESOBU_ENT#1
...
AT_ESOBU_ENT#q
AT_ESOBU_SZ : AT_ESOBU size
AT_ESOBU_S_PKT_POS
STM_ID : STMAP identification information "DVD_HR_STR00"
STMAPT_EA : End address of this file
VERN : TMAP version information
STMAP_LAST_MOD_TM : Describe update date of STMAPT (The same value as HR_MANGR.IFO)
SMAP_SA : Start address of each SMAP
ES_TMAPI_Ns : In case of PTM base: number of pieces of ES_TMAPI, in case of ATS base: set 1
AT_ESOBU_S_PKT_POS : Head position of AT_ESOBU in Packet Group (number of packets)
PKT_POS may be omitted in case of packet group unit

FIG. 29

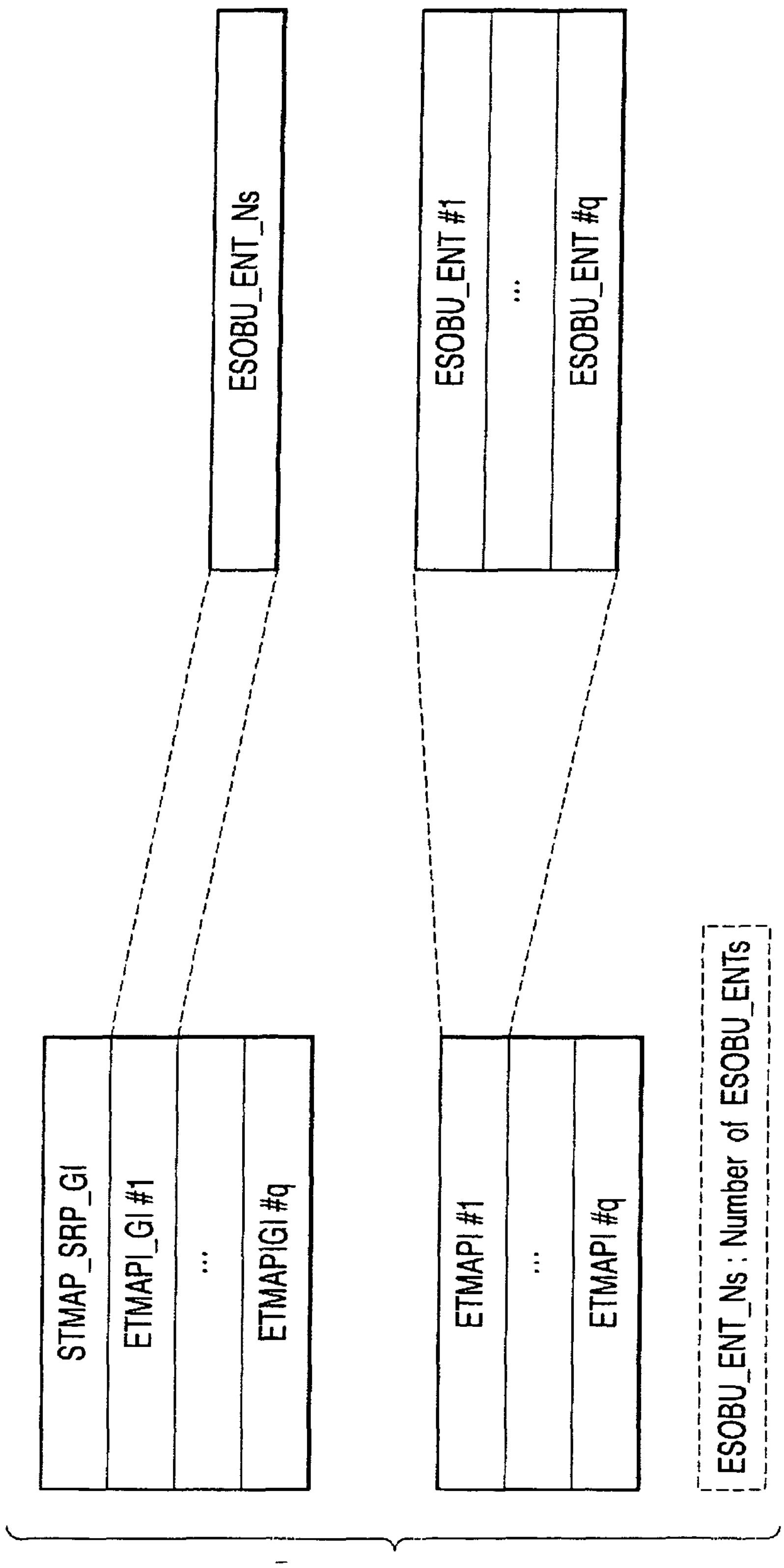
ESOBU_ENT_Ns
ESOBU_ENT #1
...
ESOBU_ENT #q
STMAP_SRP_GI
ETMAPI_GI #1
...
ETMAPIGI #q
ETMAPI #1
...
ETMAPI #q
ESOBU_ENT_Ns : Number of ESOBU_ENTs

FIG. 30

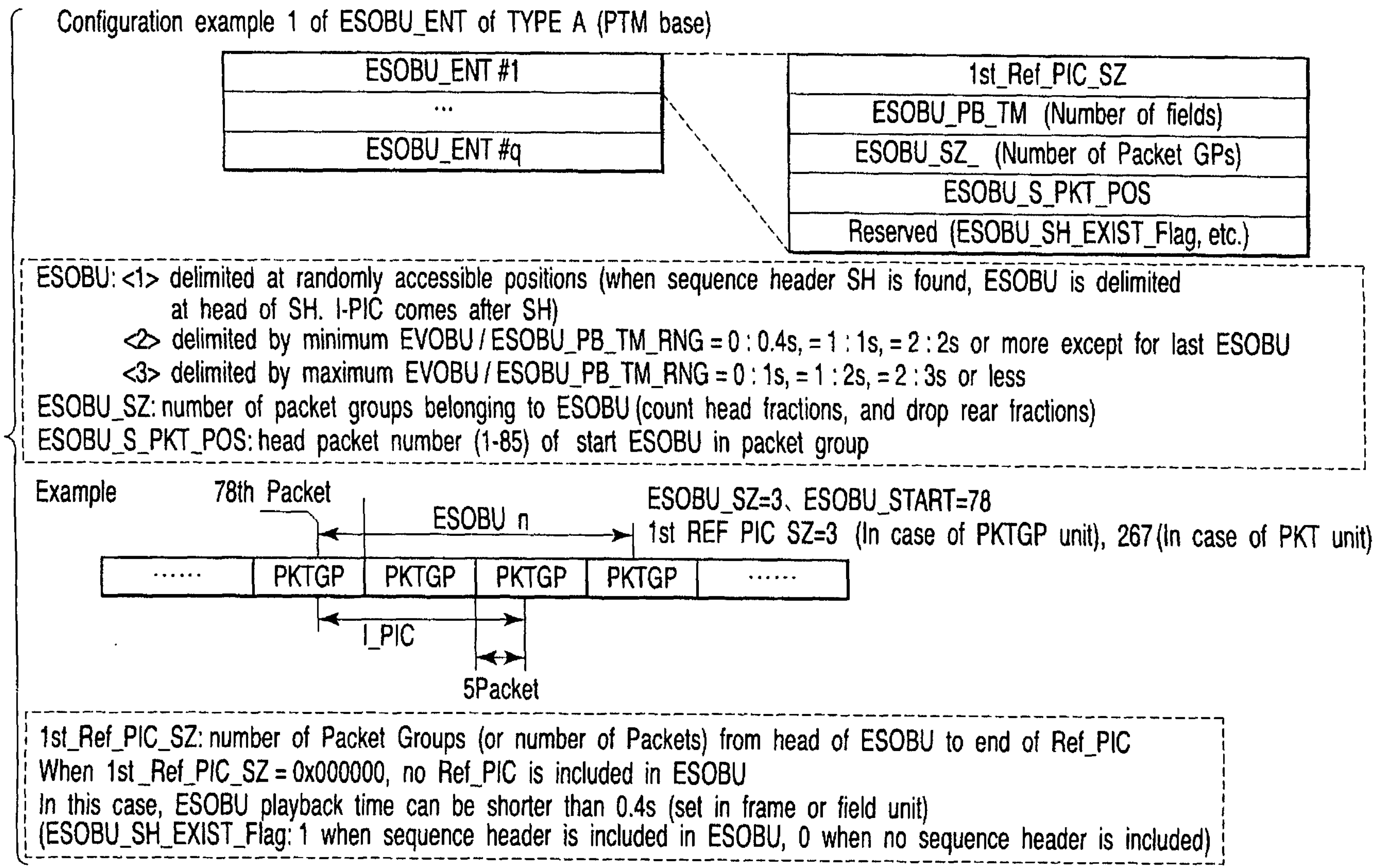
Configuration example 1 of ESOBU_ENT of TYPE A (PTM base)
ESOBU_ENT #1
...
ESOBU_ENT #q
1st_Ref_PIC_SZ
ESOBU_PB_TM (Number of fields)
ESOBU_SZ_ (Number of Packet GPs)
ESOBU_S_PKT_POS
Reserved (ESOBU_SH_EXIST_Flag, etc.)
ESOBU: <1> delimited at randomly accessible positions (when sequence header SH is found, ESOBU is delimited at head of SH. I-PIC comes after SH)
<2> delimited by minimum EVOBU / ESOBU_PB_TM_RNG = 0 : 0.4s, = 1 : 1s, = 2 : 2s or more except for last ESOBU
<3> delimited by maximum EVOBU / ESOBU_PB_TM_RNG = 0 : 1s, = 1 : 2s, = 2 : 3s or less
ESOBU_SZ: number of packet groups belonging to ESOBU (count head fractions, and drop rear fractions)
ESOBU_S_PKT_POS: head packet number (1-85) of start ESOBU in packet group
Example
78th Packet
ESOBU n
ESOBU_SZ=3、ESOBU_START=78
1st REF PIC SZ=3 (In case of PKTGP unit), 267 (In case of PKT unit)
......
PKTGP
PKTGP
PKTGP
PKTGP
......
I_PIC
5Packet
1st_Ref_PIC_SZ: number of Packet Groups (or number of Packets) from head of ESOBU to end of Ref_PIC
When 1st_Ref_PIC_SZ = 0x000000, no Ref_PIC is included in ESOBU
In this case, ESOBU playback time can be shorter than 0.4s (set in frame or field unit)
(ESOBU_SH_EXIST_Flag: 1 when sequence header is included in ESOBU, 0 when no sequence header is included)

FIG. 31

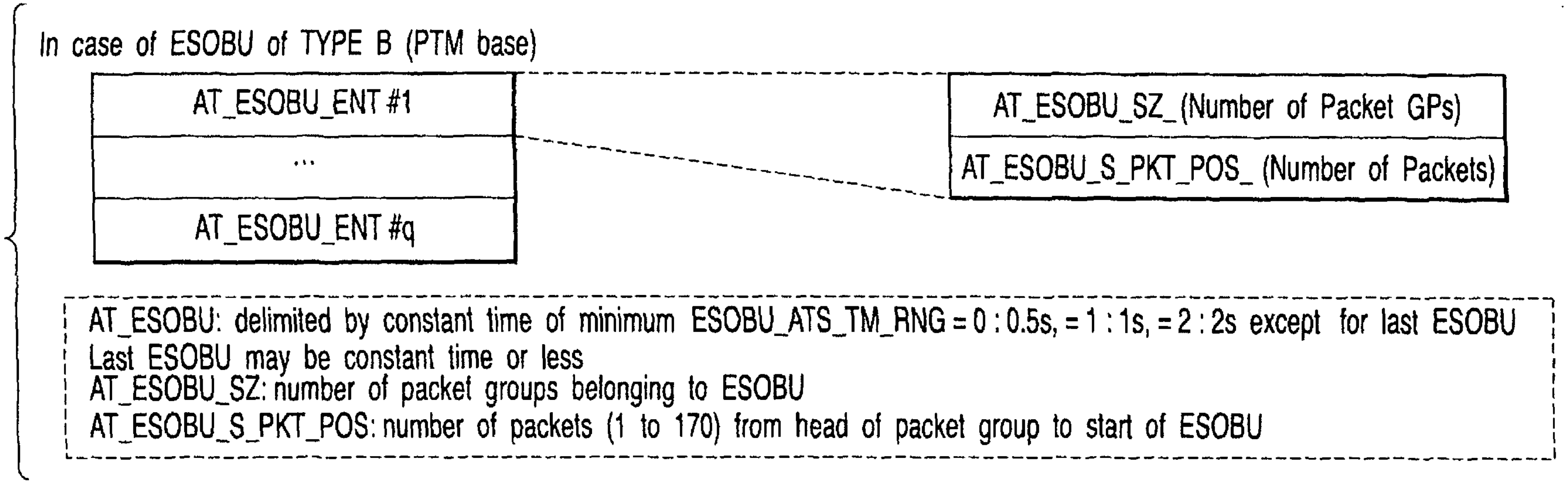
In case of ESOBU of TYPE B (PTM base)
AT_ESOBU_ENT #1
...
AT_ESOBU_ENT #q
AT_ESOBU_SZ_(Number of Packet GPs)
AT_ESOBU_S_PKT_POS_ (Number of Packets)
AT_ESOBU: delimited by constant time of minimum ESOBU_ATS_TM_RNG = 0 : 0.5s, = 1 : 1s, = 2 : 2s except for last ESOBU
Last ESOBU may be constant time or less
AT_ESOBU_SZ: number of packet groups belonging to ESOBU
AT_ESOBU_S_PKT_POS: number of packets (1 to 170) from head of packet group to start of ESOBU

FIG. 32

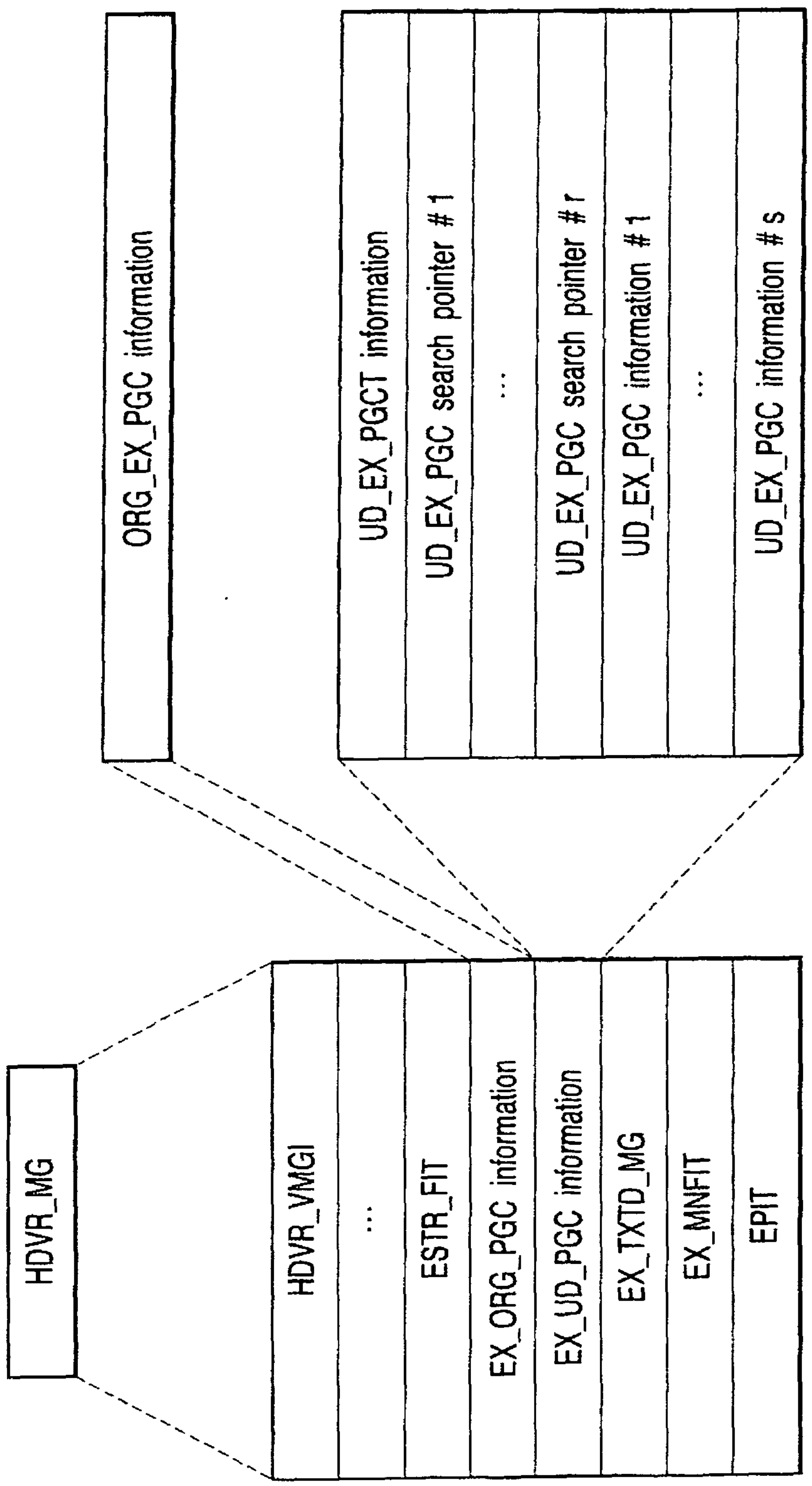
HDVR_MG
HDVR_VMGI
...
ESTR_FIT
EX_ORG_PGC information
EX_UD_PGC information
EX_TXTD_MG
EX_MNFIT
EPIT
ORG_EX_PGC information
UD_EX_PGCT information
UD_EX_PGC search pointer #1
...
UD_EX_PGC search pointer #r
UD_EX_PGC information #1
...
UD_EX_PGC information #s

FIG.33

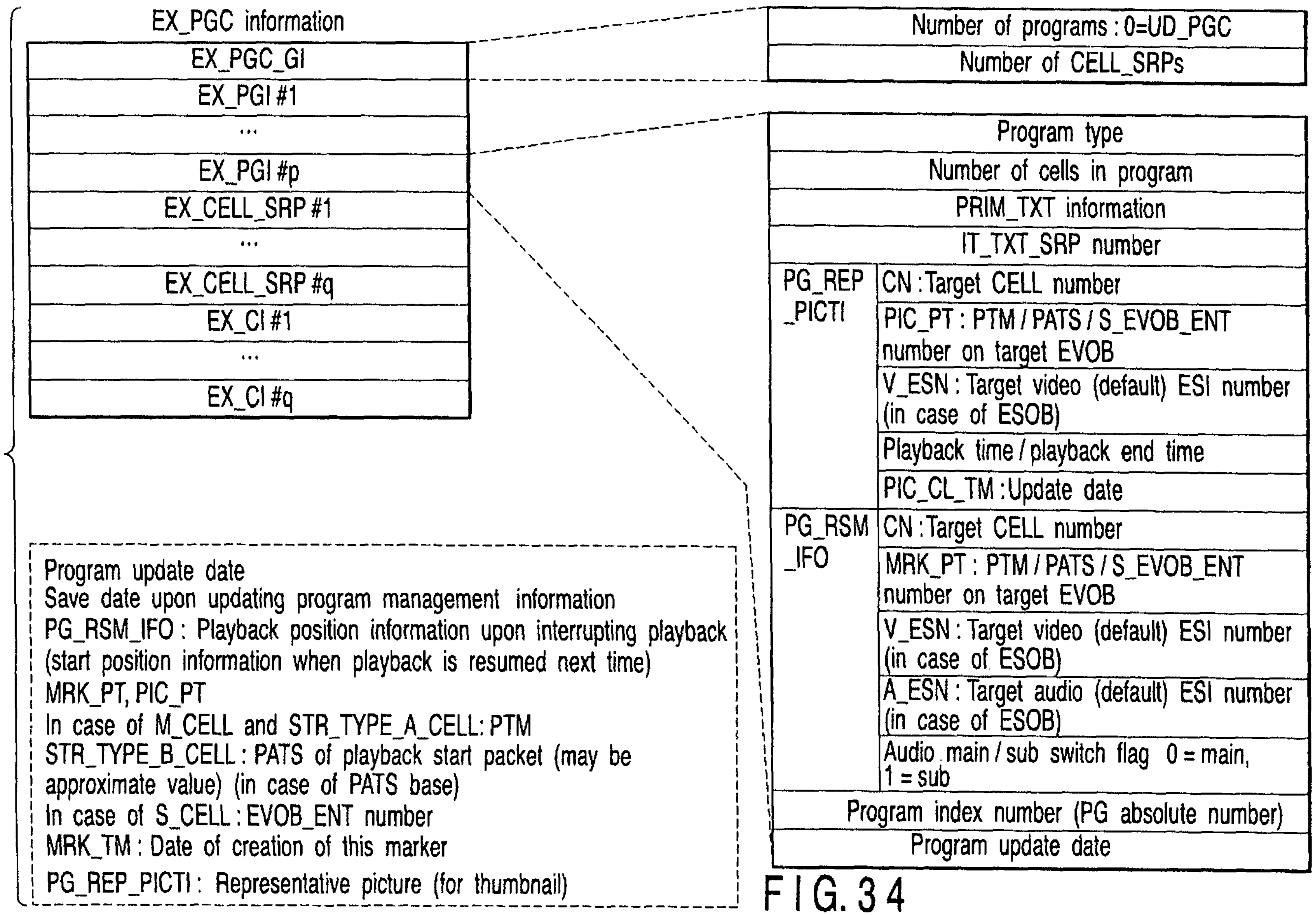
EX_PGC information
EX_PGC_GI
EX_PGI #1
...
EX_PGI #p
EX_CELL_SRP #1
...
EX_CELL_SRP #q
EX_CI #1
...
EX_CI #q
Number of programs : 0=UD_PGC
Number of CELL_SRPs
Program type
Number of cells in program
PRIM_TXT information
IT_TXT_SRP number
PG_REP_PICTI
CN : Target CELL number
PIC_PT : PTM / PATS / S_EVOB_ENT number on target EVOB
V_ESN : Target video (default) ESI number (in case of ESOB)
Playback time / playback end time
PIC_CL_TM : Update date
PG_RSM_IFO
CN : Target CELL number
MRK_PT : PTM / PATS / S_EVOB_ENT number on target EVOB
V_ESN : Target video (default) ESI number (in case of ESOB)
A_ESN : Target audio (default) ESI number (in case of ESOB)
Audio main / sub switch flag 0 = main, 1 = sub
Program index number (PG absolute number)
Program update date
Program update date
Save date upon updating program management information
PG_RSM_IFO : Playback position information upon interrupting playback (start position information when playback is resumed next time)
MRK_PT, PIC_PT
In case of M_CELL and STR_TYPE_A_CELL: PTM
STR_TYPE_B_CELL : PATS of playback start packet (may be approximate value) (in case of PATS base)
In case of S_CELL : EVOB_ENT number
MRK_TM : Date of creation of this marker
PG_REP_PICTI : Representative picture (for thumbnail)

FIG. 34

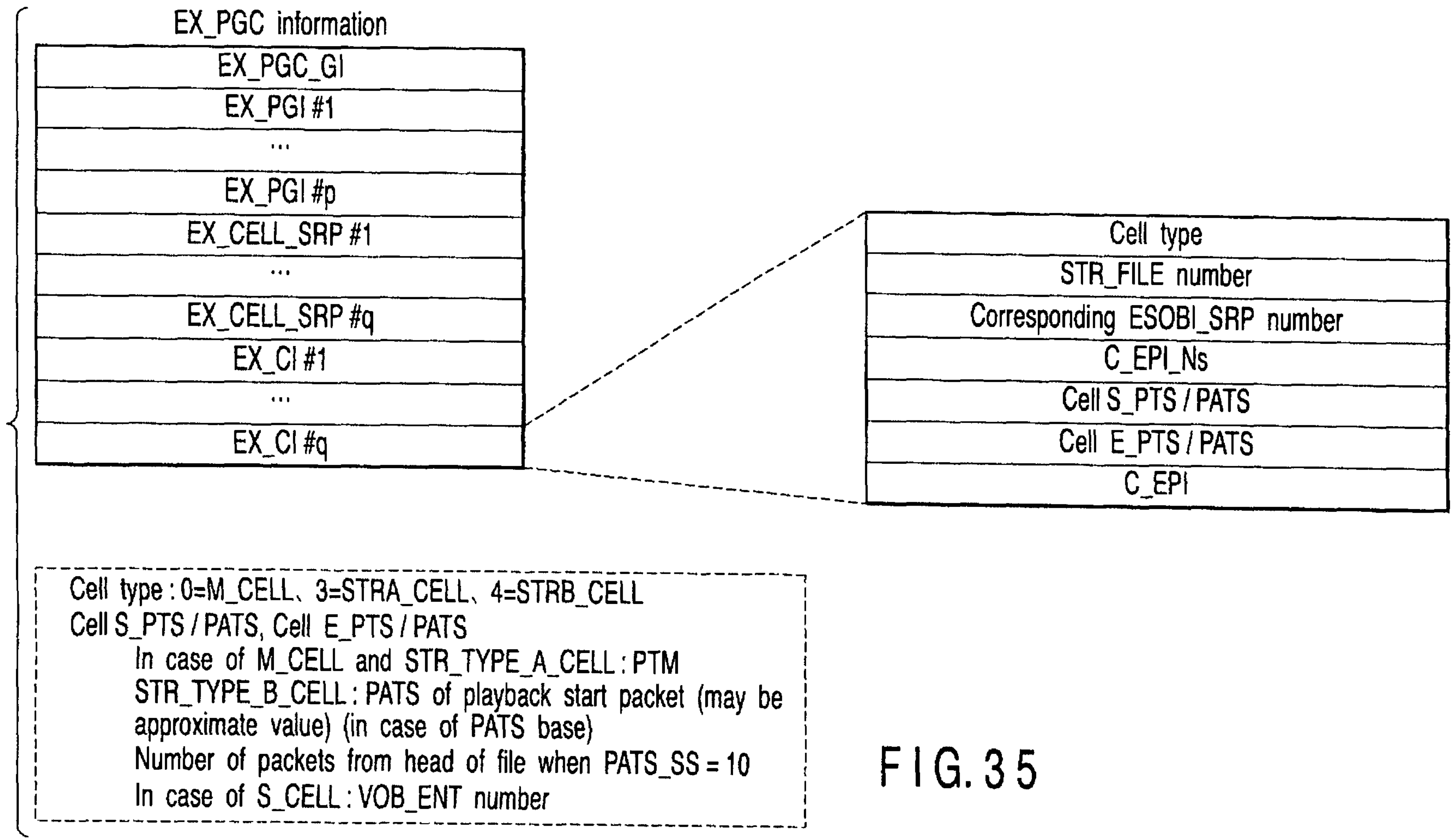
EX_PGC information
EX_PGC_GI
EX_PGI #1
...
EX_PGI #p
EX_CELL_SRP #1
...
EX_CELL_SRP #q
EX_CI #1
...
EX_CI #q
Cell type
STR_FILE number
Corresponding ESOBI_SRP number
C_EPI_Ns
Cell S_PTS / PATS
Cell E_PTS / PATS
C_EPI
Cell type : 0=M_CELL、3=STRA_CELL、4=STRB_CELL
Cell S_PTS / PATS, Cell E_PTS / PATS
In case of M_CELL and STR_TYPE_A_CELL : PTM
STR_TYPE_B_CELL : PATS of playback start packet (may be approximate value) (in case of PATS base)
Number of packets from head of file when PATS_SS = 10
In case of S_CELL : VOB_ENT number

FIG. 35

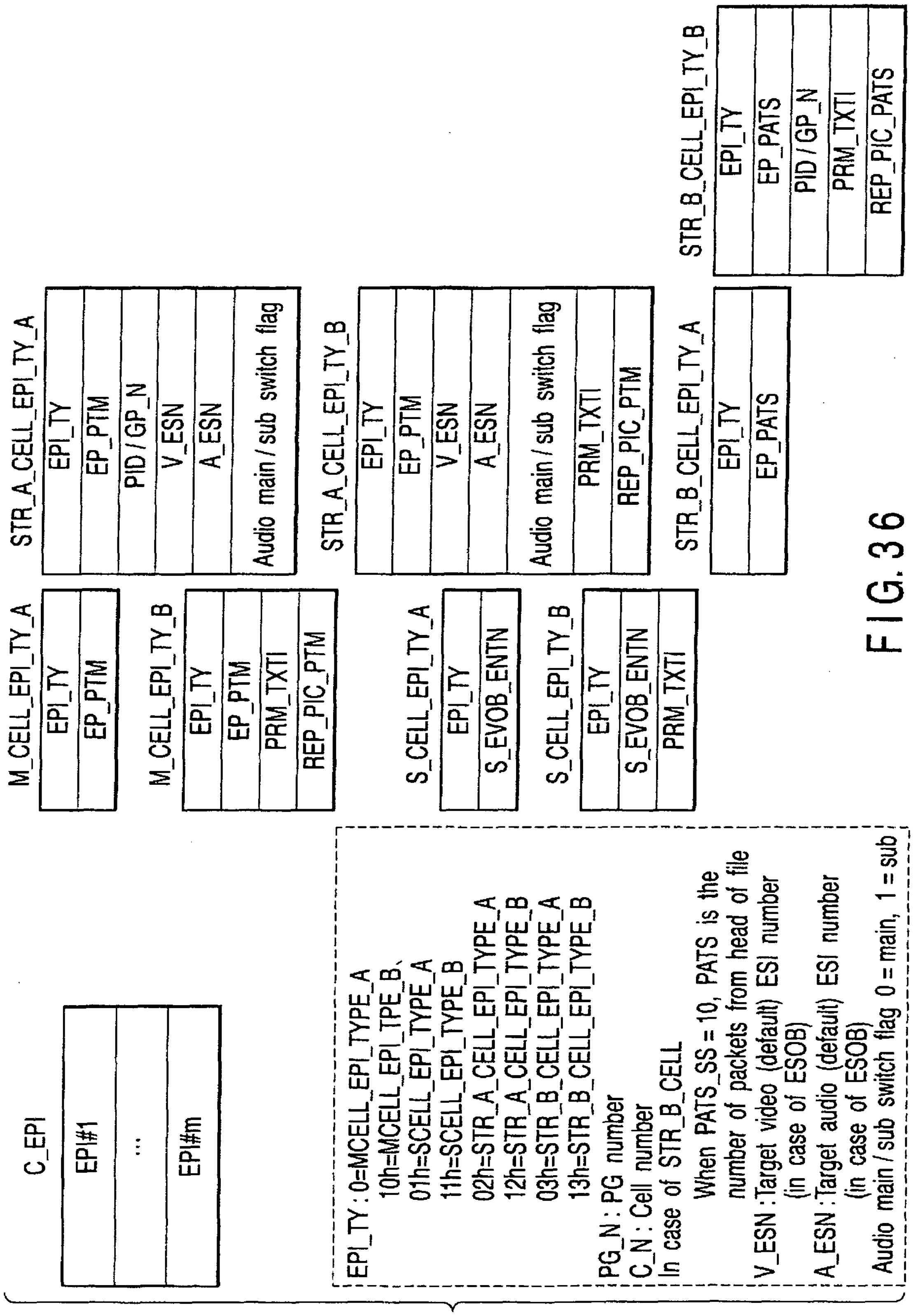
C_EPI
EPI#1
...
EPI#m
EPI_TY : 0=MCELL_EPI_TYPE_A
10h=MCELL_EPI_TPE_B,
01h=SCELL_EPI_TYPE_A
11h=SCELL_EPI_TYPE_B
02h=STR_A_CELL_EPI_TYPE_A
12h=STR_A_CELL_EPI_TYPE_B
03h=STR_B_CELL_EPI_TYPE_A
13h=STR_B_CELL_EPI_TYPE_B
PG_N : PG number
C_N : Cell number
In case of STR_B_CELL
When PATS_SS = 10, PATS is the
number of packets from head of file
V_ESN :Target video (default) ESI number
(in case of ESOB)
A_ESN :Target audio (default) ESI number
(in case of ESOB)
Audio main / sub switch flag 0 = main, 1 = sub
M_CELL_EPI_TY_A
EPI_TY
EP_PTM
M_CELL_EPI_TY_B
EPI_TY
EP_PTM
PRM_TXTI
REP_PIC_PTM
S_CELL_EPI_TY_A
EPI_TY
S_EVOB_ENTN
S_CELL_EPI_TY_B
EPI_TY
S_EVOB_ENTN
PRM_TXTI
STR_A_CELL_EPI_TY_A
EPI_TY
EP_PTM
PID / GP_N
V_ESN
A_ESN
Audio main / sub switch flag
STR_A_CELL_EPI_TY_B
EPI_TY
EP_PTM
V_ESN
A_ESN
Audio main / sub switch flag
PRM_TXTI
REP_PIC_PTM
STR_B_CELL_EPI_TY_A
EPI_TY
EP_PATS
STR_B_CELL_EPI_TY_B
EPI_TY
EP_PATS
PID / GP_N
PRM_TXTI
REP_PIC_PATS

FIG. 36

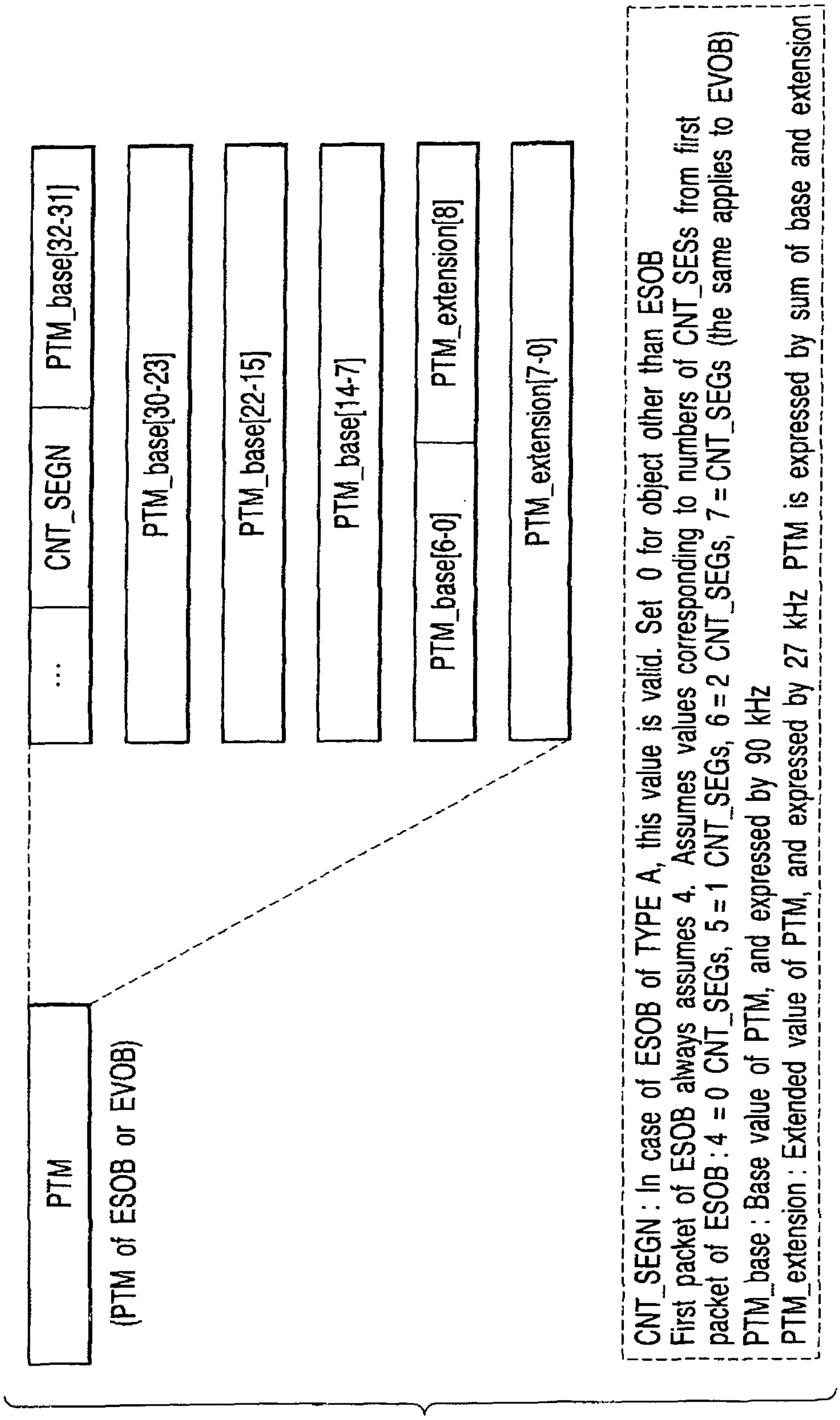
PTM
(PTM of ESOB or EVOB)
...
CNT_SEGN
PTM_base[32-31]
PTM_base[30-23]
PTM_base[22-15]
PTM_base[14-7]
PTM_base[6-0]
PTM_extension[8]
PTM_extension[7-0]
CNT_SEGN : In case of ESOB of TYPE A, this value is valid. Set 0 for object other than ESOB
First packet of ESOB always assumes 4. Assumes values corresponding to numbers of CNT_SESs from first
packet of ESOB : 4 = 0 CNT_SEGs, 5 = 1 CNT_SEGs, 6 = 2 CNT_SEGs, 7 = CNT_SEGs (the same applies to EVOB)
PTM_base : Base value of PTM, and expressed by 90 kHz
PTM_extension : Extended value of PTM, and expressed by 27 kHz PTM is expressed by sum of base and extension

FIG.37

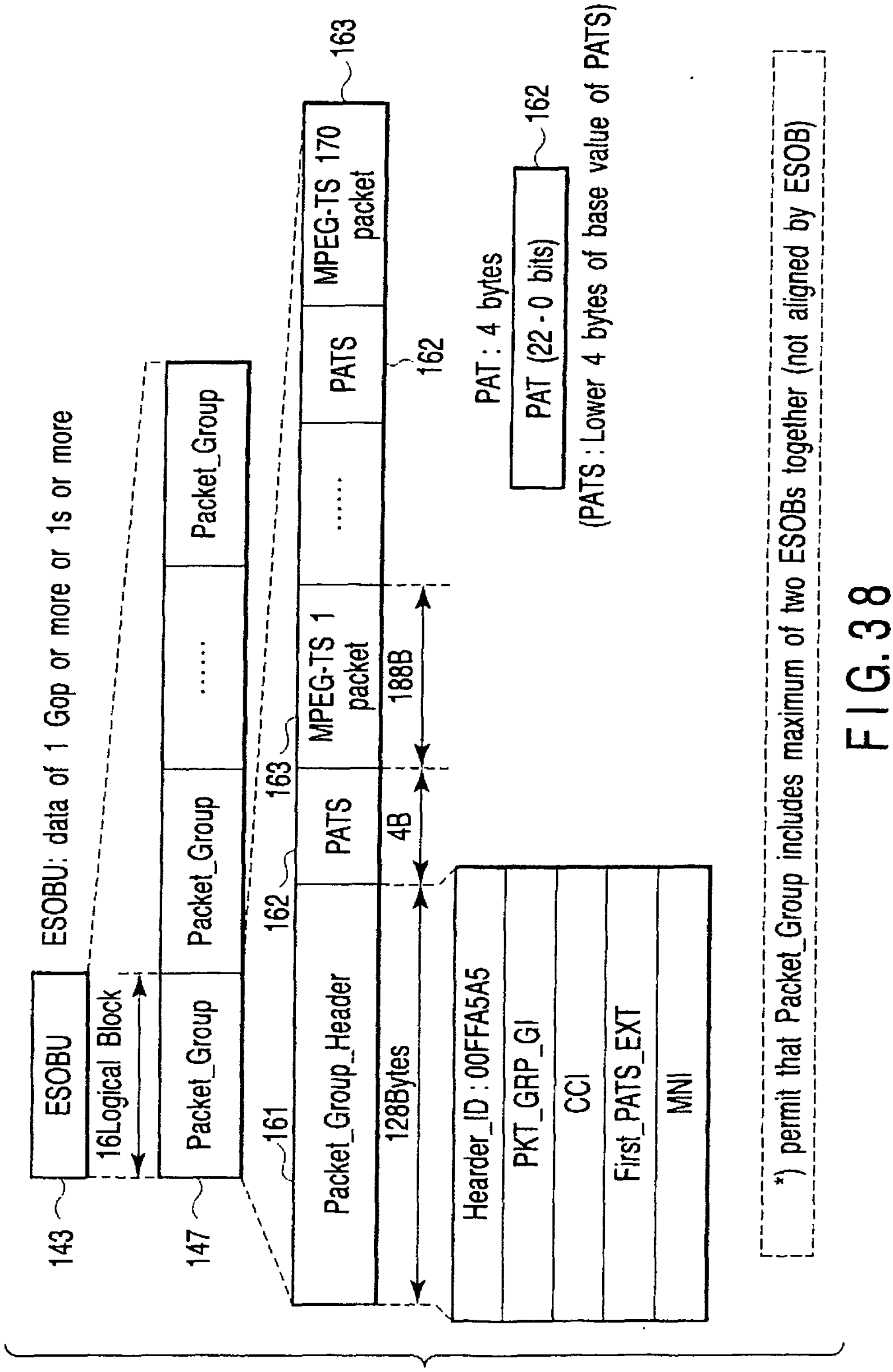
ESOBU: data of 1 Gop or more or 1s or more
143
ESOBU
16Logical Block
147
Packet_Group
Packet_Group
......
Packet_Group
161
162
163
Packet_Group_Header
PATS
MPEG-TS 1 packet
......
PATS
MPEG-TS 170 packet
163
162
128Bytes
4B
188B
Hearder_ID : 00FFA5A5
PKT_GRP_GI
CCI
First_PATS_EXT
MNI
PAT : 4 bytes
PAT (22 - 0 bits)
162
(PATS : Lower 4 bytes of base value of PATS)
*) permit that Packet_Group includes maximum of two ESOBs together (not aligned by ESOB)

F I G. 3 8

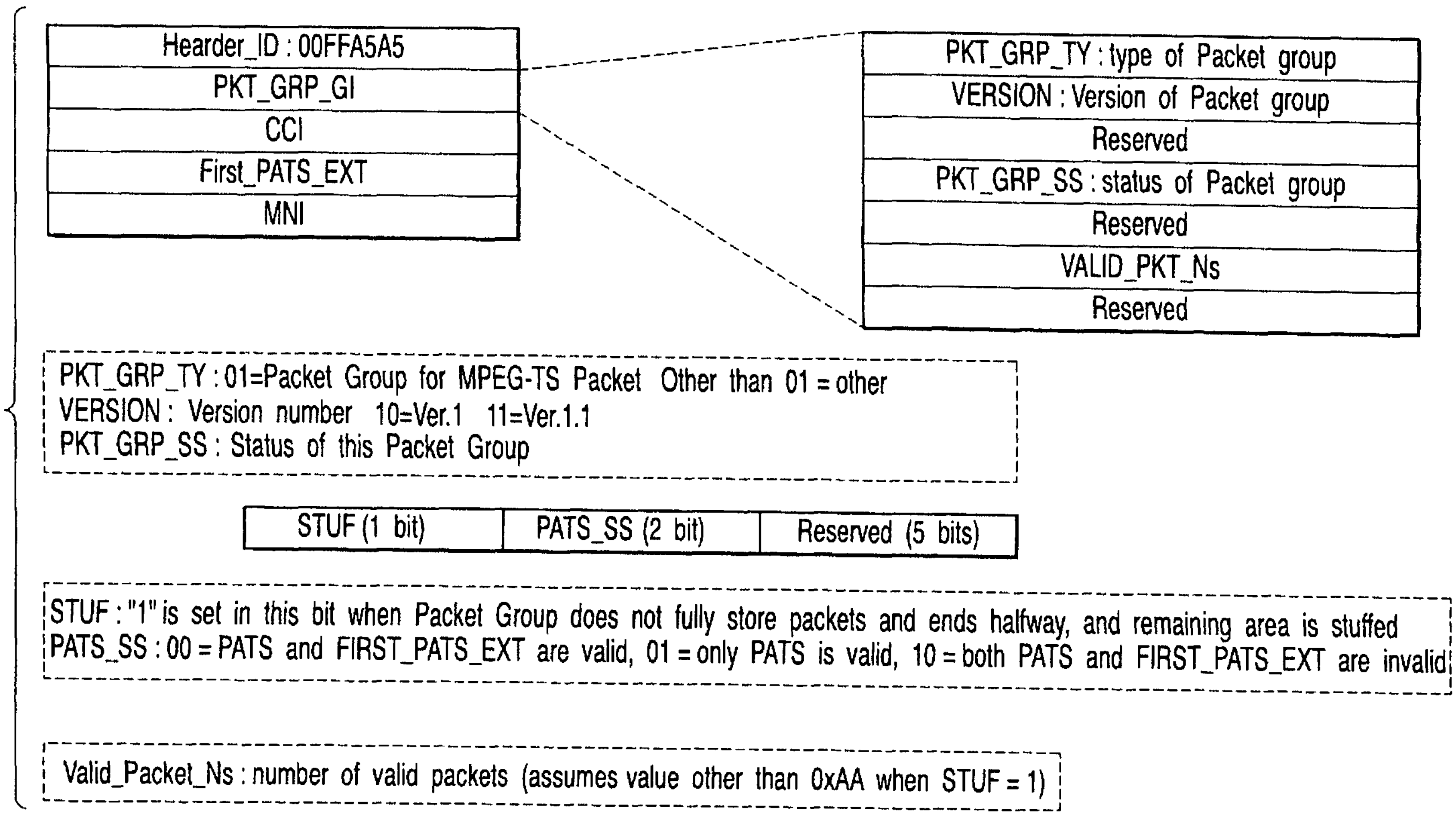
Hearder_ID : 00FFA5A5
PKT_GRP_GI
CCI
First_PATS_EXT
MNI
PKT_GRP_TY : type of Packet group
VERSION : Version of Packet group
Reserved
PKT_GRP_SS : status of Packet group
Reserved
VALID_PKT_Ns
Reserved
PKT_GRP_TY : 01=Packet Group for MPEG-TS Packet Other than 01 = other
VERSION : Version number 10=Ver.1 11=Ver.1.1
PKT_GRP_SS : Status of this Packet Group
STUF (1 bit)
PATS_SS (2 bit)
Reserved (5 bits)
STUF : "1" is set in this bit when Packet Group does not fully store packets and ends halfway, and remaining area is stuffed
PATS_SS : 00 = PATS and FIRST_PATS_EXT are valid, 01 = only PATS is valid, 10 = both PATS and FIRST_PATS_EXT are invalid
Valid_Packet_Ns : number of valid packets (assumes value other than 0xAA when STUF = 1)

FIG. 39

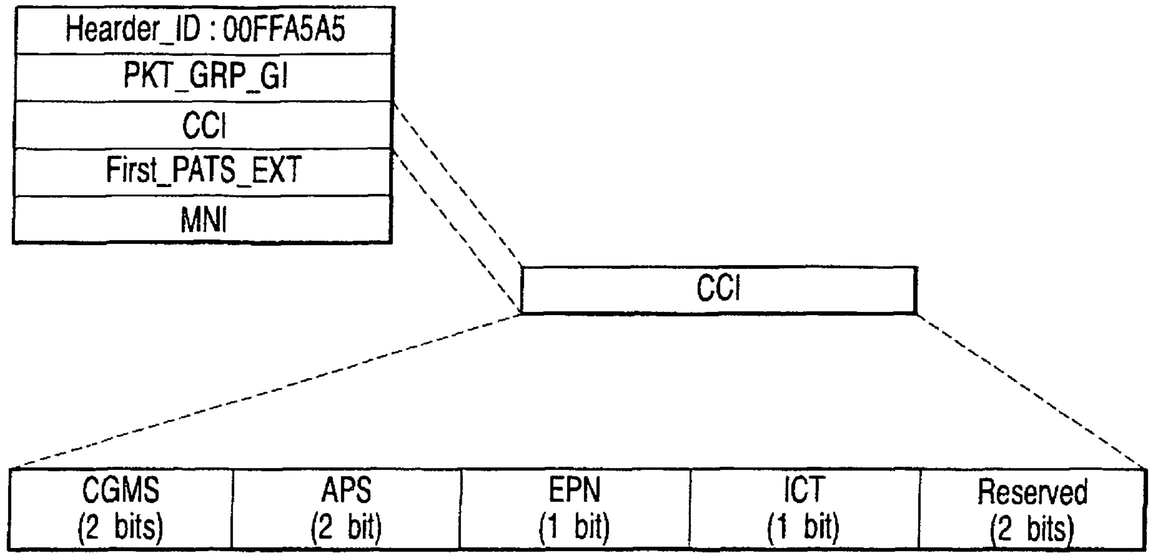
Hearder_ID : 00FFA5A5
PKT_GRP_GI
CCI
First_PATS_EXT
MNI
CCI
CGMS (2 bits)
APS (2 bit)
EPN (1 bit)
ICT (1 bit)
Reserved (2 bits)

FIG. 40

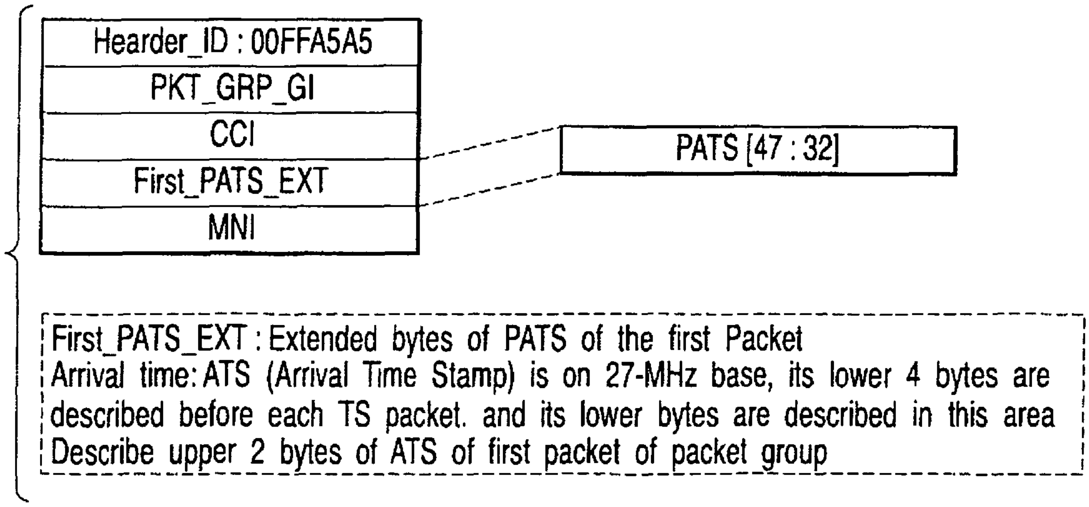
Hearder_ID : 00FFA5A5
PKT_GRP_GI
CCI
First_PATS_EXT
MNI
PATS [47 : 32]
First_PATS_EXT : Extended bytes of PATS of the first Packet
Arrival time: ATS (Arrival Time Stamp) is on 27-MHz base, its lower 4 bytes are described before each TS packet. and its lower bytes are described in this area
Describe upper 2 bytes of ATS of first packet of packet group

FIG. 41

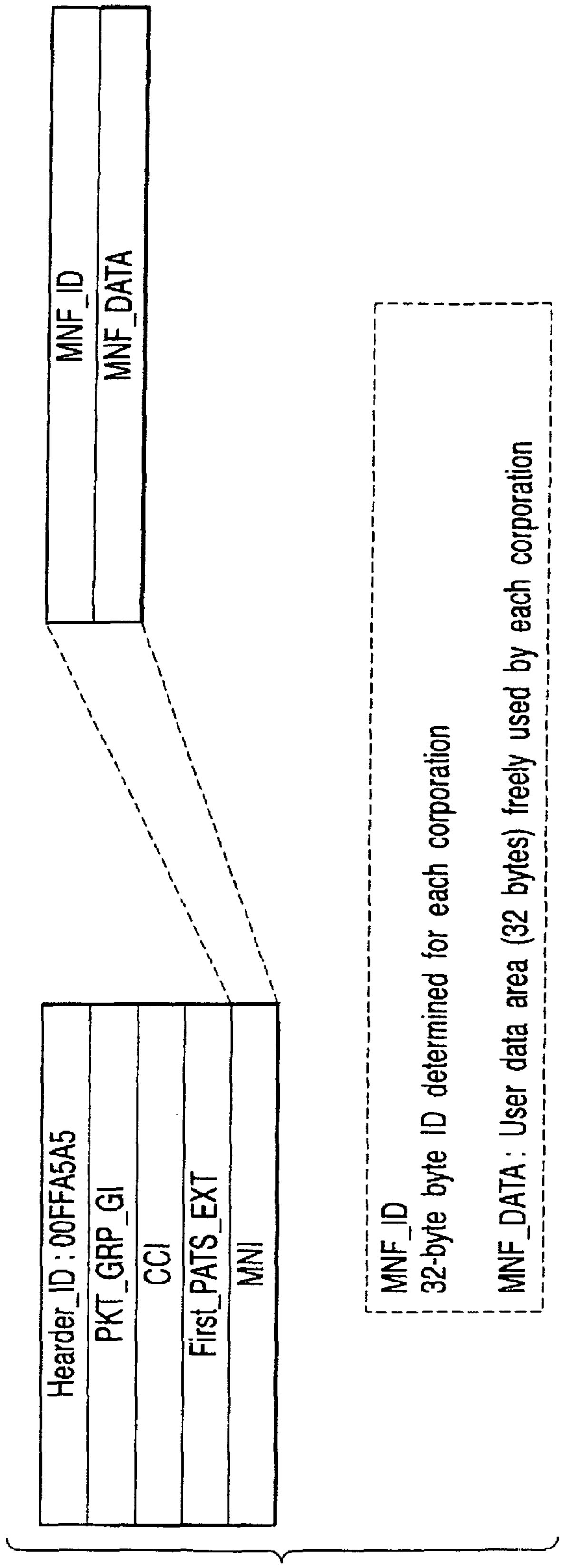
Hearder_ID : 00FFA5A5
PKT_GRP_GI
CCI
First_PATS_EXT
MNI
MNF_ID
MNF_DATA
MNF_ID
32-byte byte ID determined for each corporation
MNF_DATA : User data area (32 bytes) freely used by each corporation

FIG. 42

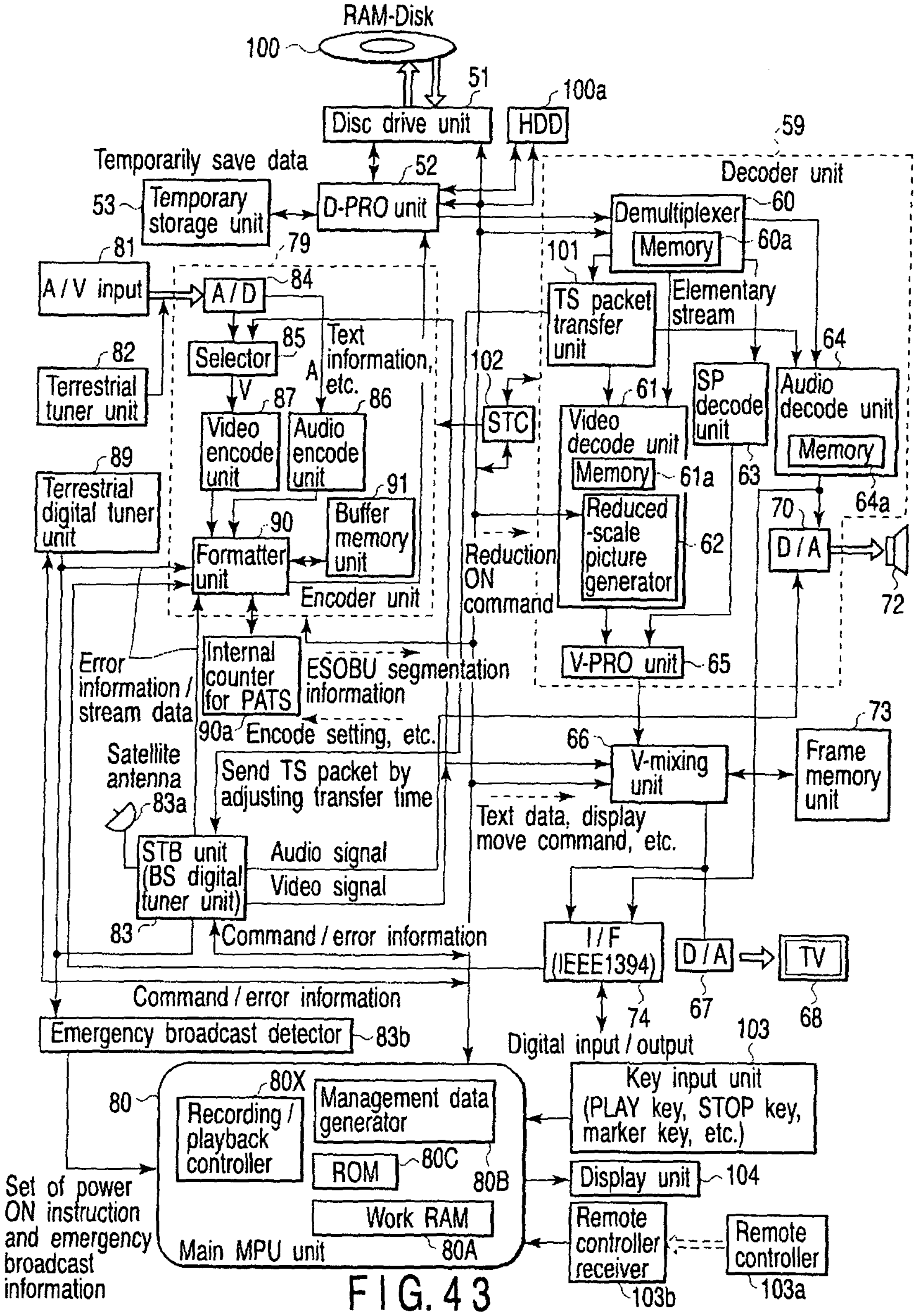
RAM-Disk
100
51
Disc drive unit
100a
HDD
59
Temporarily save data
52
Decoder unit
53
Temporary storage unit
D-PRO unit
Demultiplexer
60
Memory
60a
81
79
101
A / V input
A / D
84
TS packet transfer unit
Elementary stream
82
Selector
85
Text information, etc.
64
Terrestrial tuner unit
102
SP decode unit
Audio decode unit
87
86
STC
61
Video encode unit
Audio encode unit
Video decode unit
Memory
89
91
Memory
61a
63
Terrestrial digital tuner unit
90
Buffer memory unit
Reduced -scale picture generator
62
70
64a
Formatter unit
Reduction ON command
D / A
72
Encoder unit
Error information / stream data
Internal counter for PATS
ESOBU segmentation information
V-PRO unit
65
90a
Encode setting, etc.
73
Satellite antenna
66
V-mixing unit
Frame memory unit
83a
Send TS packet by adjusting transfer time
Text data, display move command, etc.
STB unit (BS digital tuner unit)
Audio signal
Video signal
83
Command / error information
I / F (IEEE1394)
D / A
TV
Command / error information
74
67
68
Emergency broadcast detector
83b
Digital input / output
103
80X
Key input unit (PLAY key, STOP key, marker key, etc.)
80
Recording / playback controller
Management data generator
ROM
80C
80B
Display unit
104
Set of power ON instruction and emergency broadcast information
Work RAM
Remote controller receiver
Remote controller
Main MPU unit
80A
103b
103a

FIG. 43

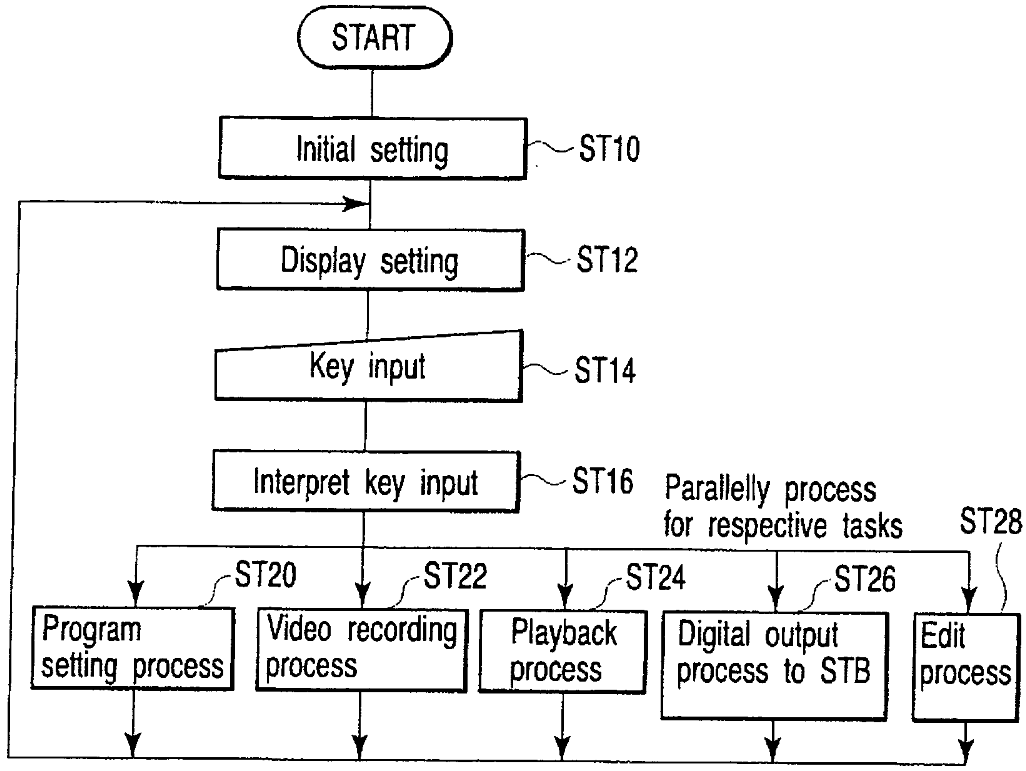
START
Initial setting
ST10
Display setting
ST12
Key input
ST14
Interpret key input
ST16
Parallelly process for respective tasks
ST28
ST20
ST22
ST24
ST26
Program setting process
Video recording process
Playback process
Digital output process to STB
Edit process

FIG. 44

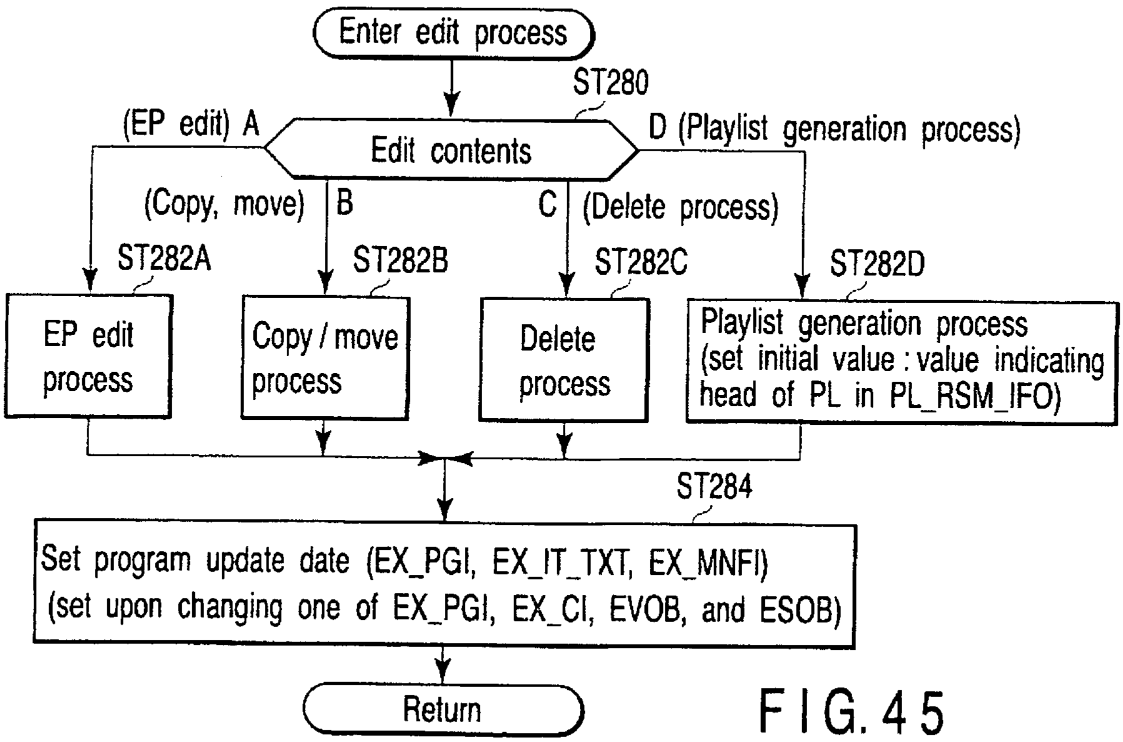
Enter edit process
ST280
(EP edit) A
Edit contents
D (Playlist generation process)
(Copy, move) B
C (Delete process)
ST282A
ST282B
ST282C
ST282D
EP edit process
Copy / move process
Delete process
Playlist generation process (set initial value : value indicating head of PL in PL_RSM_IFO)
ST284
Set program update date (EX_PGI, EX_IT_TXT, EX_MNFI) (set upon changing one of EX_PGI, EX_CI, EVOB, and ESOB)
Return

FIG. 45

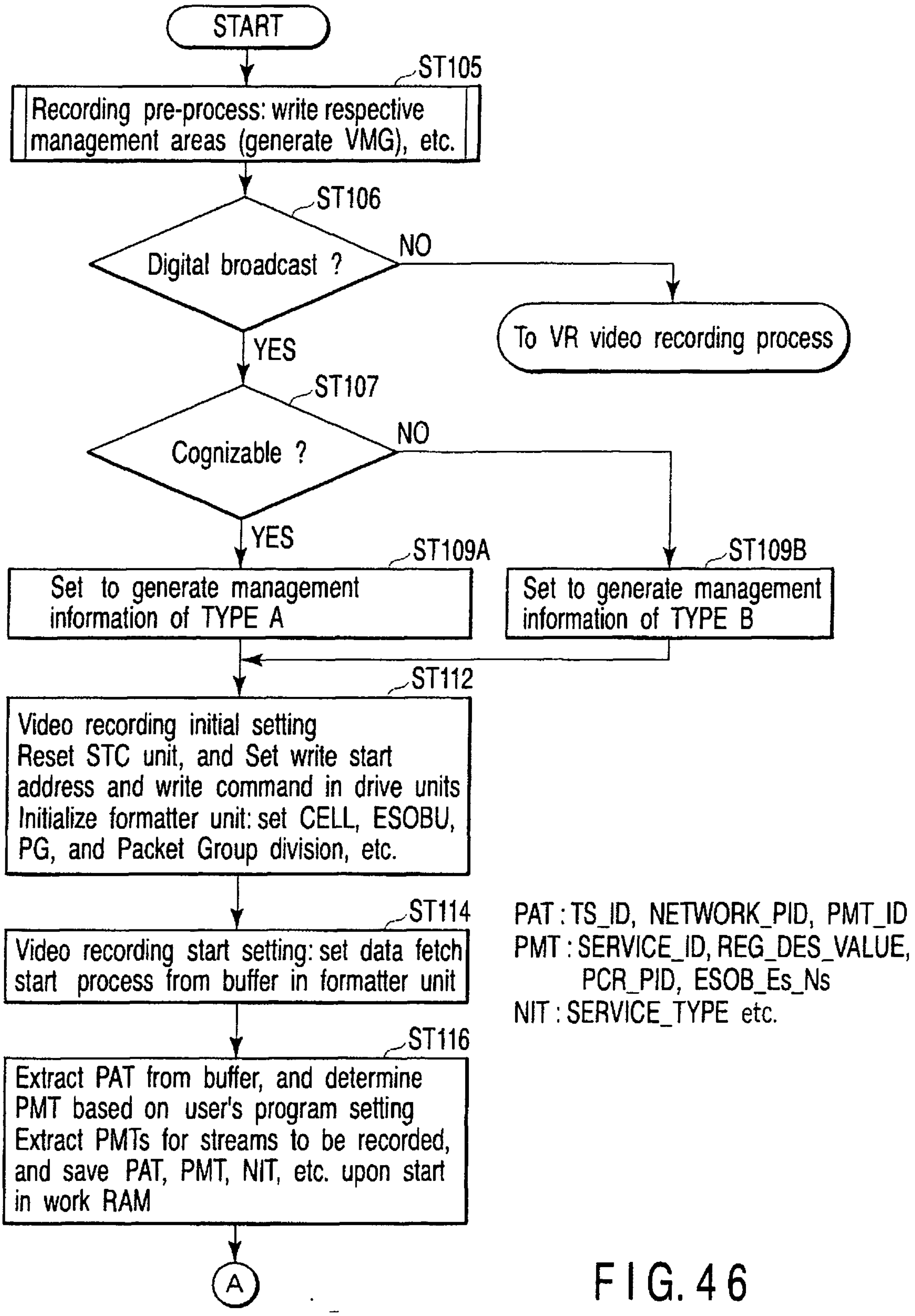
START
ST105
Recording pre-process: write respective management areas (generate VMG), etc.
ST106
Digital broadcast ?
NO
To VR video recording process
YES
ST107
Cognizable ?
NO
YES
ST109A
Set to generate management information of TYPE A
ST109B
Set to generate management information of TYPE B
ST112
Video recording initial setting
Reset STC unit, and Set write start address and write command in drive units
Initialize formatter unit: set CELL, ESOBU, PG, and Packet Group division, etc.
ST114
Video recording start setting: set data fetch start process from buffer in formatter unit
PAT : TS_ID, NETWORK_PID, PMT_ID
PMT : SERVICE_ID, REG_DES_VALUE, PCR_PID, ESOB_Es_Ns
NIT : SERVICE_TYPE etc.
ST116
Extract PAT from buffer, and determine PMT based on user's program setting
Extract PMTs for streams to be recorded, and save PAT, PMT, NIT, etc. upon start in work RAM
A

FIG. 46

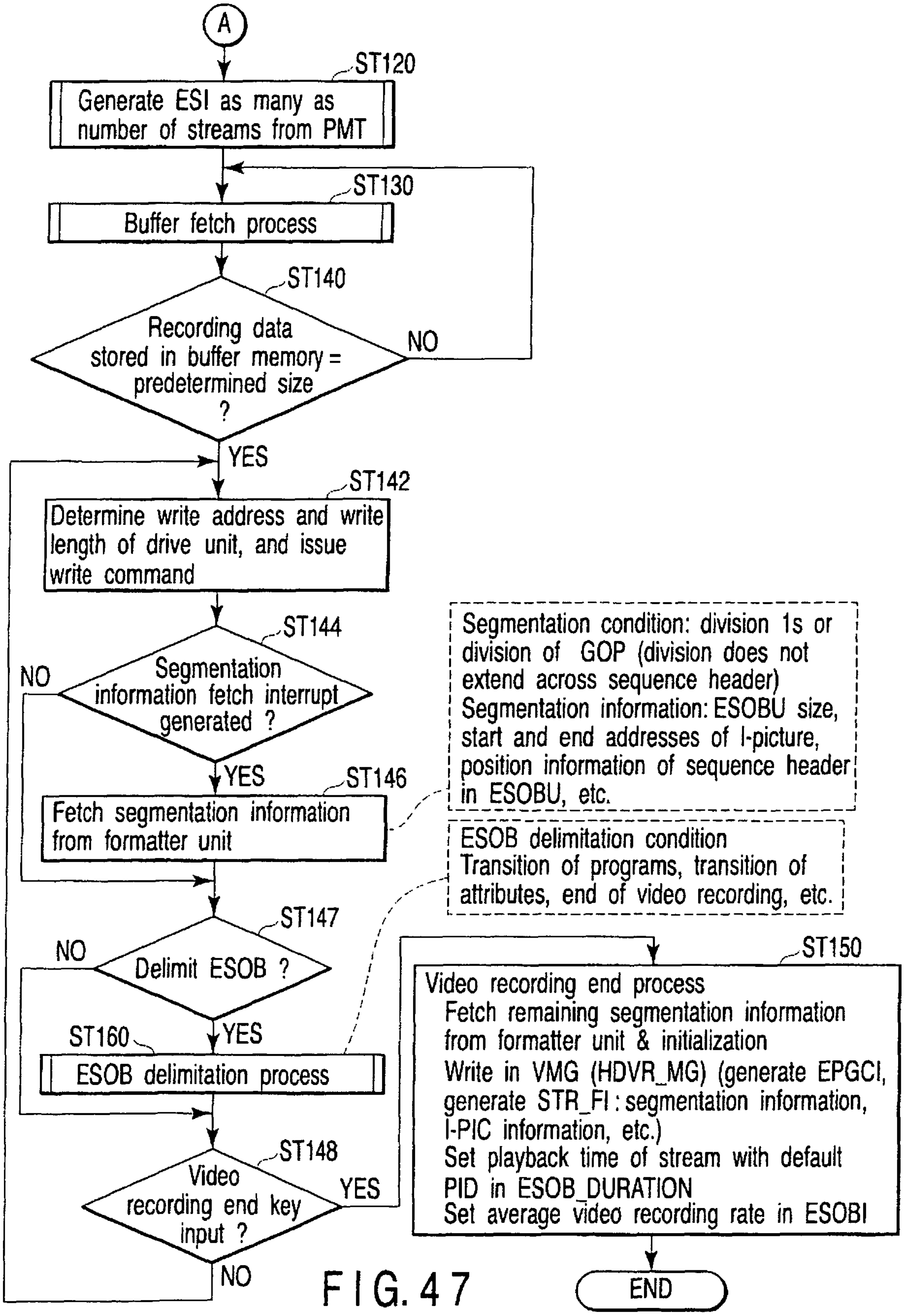
A
ST120
Generate ESI as many as number of streams from PMT
ST130
Buffer fetch process
ST140
Recording data stored in buffer memory = predetermined size ?
NO
YES
ST142
Determine write address and write length of drive unit, and issue write command
ST144
Segmentation information fetch interrupt generated ?
NO
YES
ST146
Fetch segmentation information from formatter unit
Segmentation condition: division 1s or division of GOP (division does not extend across sequence header)
Segmentation information: ESOBU size, start and end addresses of I-picture, position information of sequence header in ESOBU, etc.
ESOB delimitation condition
Transition of programs, transition of attributes, end of video recording, etc.
ST147
Delimit ESOB ?
NO
YES
ST160
ESOB delimitation process
ST148
Video recording end key input ?
YES
NO
ST150
Video recording end process
Fetch remaining segmentation information from formatter unit & initialization
Write in VMG (HDVR_MG) (generate EPGCI, generate STR_FI : segmentation information, I-PIC information, etc.)
Set playback time of stream with default PID in ESOB_DURATION
Set average video recording rate in ESOBI
END

FIG. 47

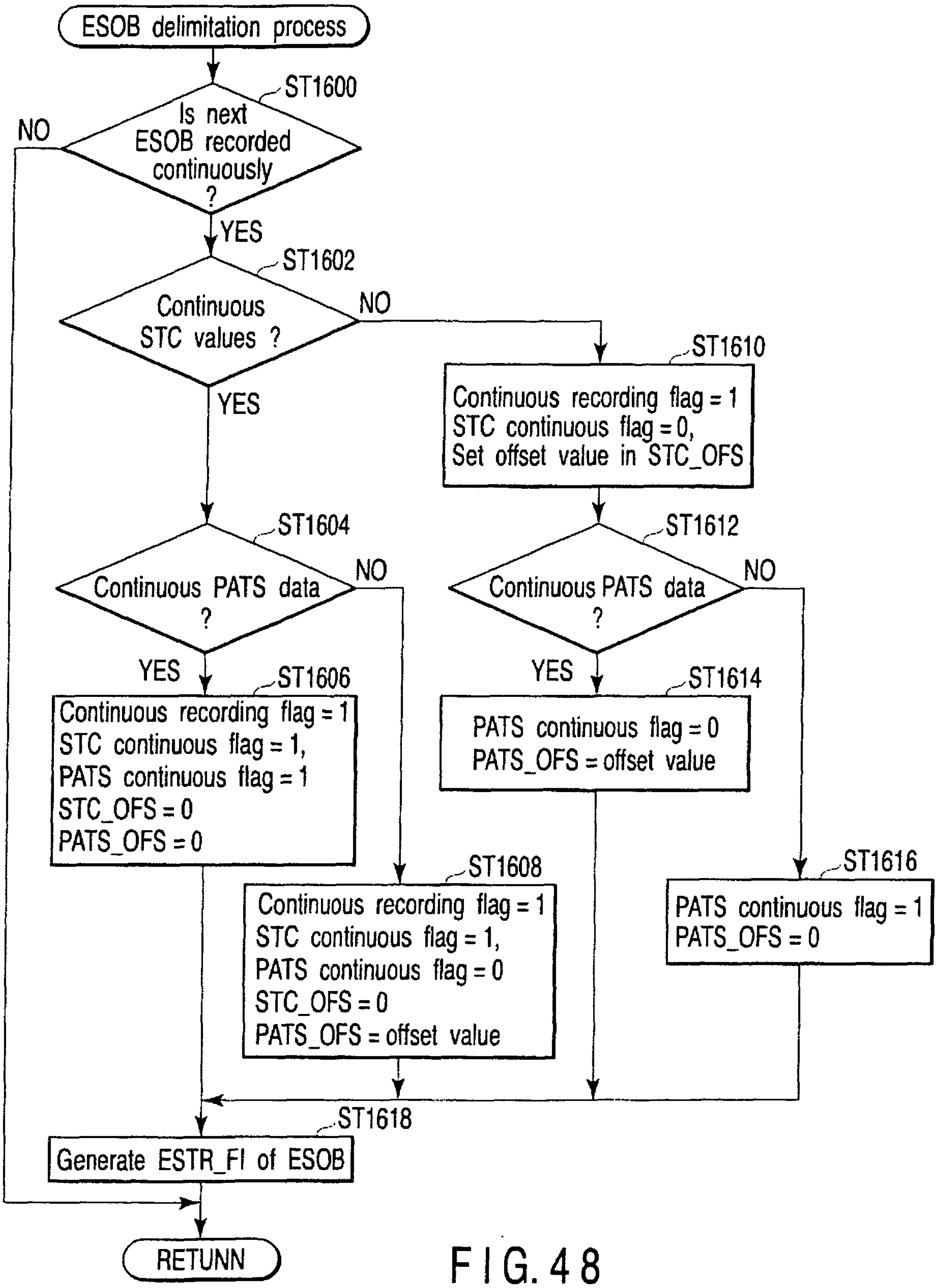
ESOB delimitation process
ST1600
Is next ESOB recorded continuously ?
NO
YES
ST1602
Continuous STC values ?
NO
YES
ST1610
Continuous recording flag = 1
STC continuous flag = 0,
Set offset value in STC_OFS
ST1604
Continuous PATS data ?
NO
YES
ST1606
Continuous recording flag = 1
STC continuous flag = 1,
PATS continuous flag = 1
STC_OFS = 0
PATS_OFS = 0
ST1612
Continuous PATS data ?
NO
YES
ST1614
PATS continuous flag = 0
PATS_OFS = offset value
ST1608
Continuous recording flag = 1
STC continuous flag = 1,
PATS continuous flag = 0
STC_OFS = 0
PATS_OFS = offset value
ST1616
PATS continuous flag = 1
PATS_OFS = 0
ST1618
Generate ESTR_FI of ESOB
RETUNN

F I G. 4 8

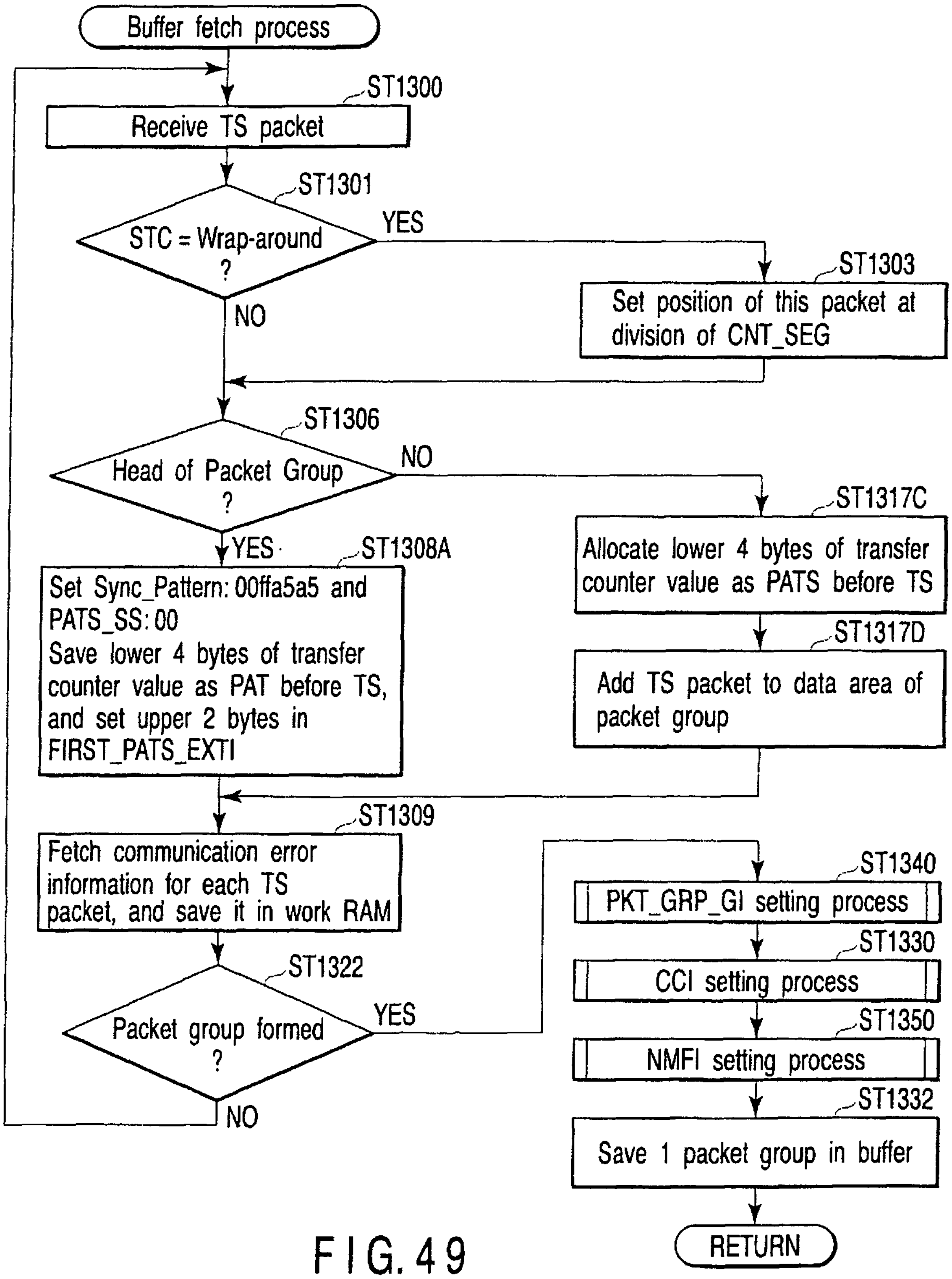
Buffer fetch process
ST1300
Receive TS packet
ST1301
STC = Wrap-around ?
YES
NO
ST1303
Set position of this packet at division of CNT_SEG
ST1306
Head of Packet Group ?
NO
YES
ST1308A
Set Sync_Pattern: 00ffa5a5 and PATS_SS: 00
Save lower 4 bytes of transfer counter value as PAT before TS, and set upper 2 bytes in FIRST_PATS_EXTI
ST1317C
Allocate lower 4 bytes of transfer counter value as PATS before TS
ST1317D
Add TS packet to data area of packet group
ST1309
Fetch communication error information for each TS packet, and save it in work RAM
ST1322
Packet group formed ?
YES
NO
ST1340
PKT_GRP_GI setting process
ST1330
CCI setting process
ST1350
NMFI setting process
ST1332
Save 1 packet group in buffer
RETURN

FIG. 49

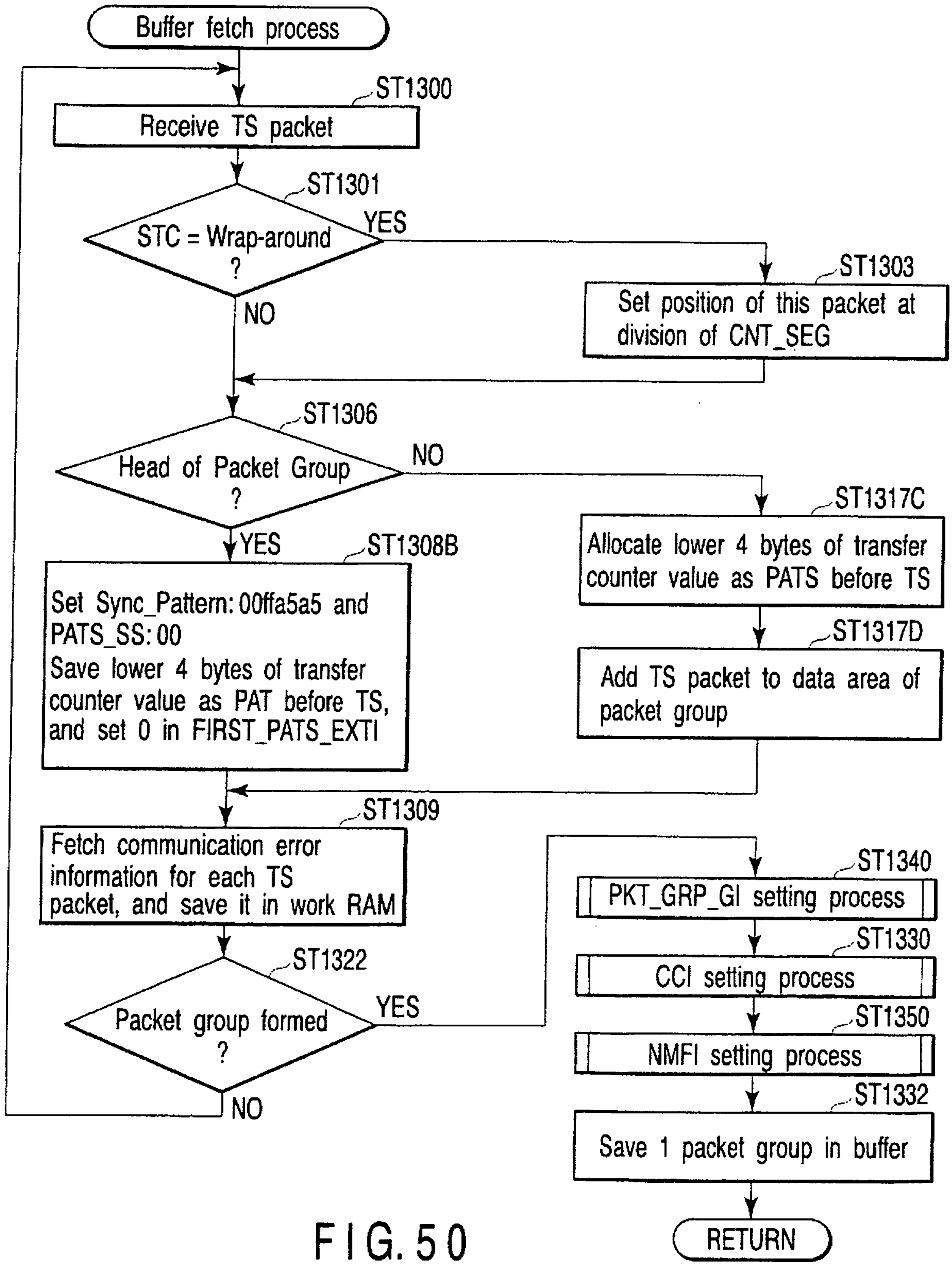
Buffer fetch process
ST1300
Receive TS packet
ST1301
STC = Wrap-around ?
YES
NO
ST1303
Set position of this packet at division of CNT_SEG
ST1306
Head of Packet Group ?
NO
YES
ST1308B
Set Sync_Pattern: 00ffa5a5 and PATS_SS: 00
Save lower 4 bytes of transfer counter value as PAT before TS, and set 0 in FIRST_PATS_EXTI
ST1317C
Allocate lower 4 bytes of transfer counter value as PATS before TS
ST1317D
Add TS packet to data area of packet group
ST1309
Fetch communication error information for each TS packet, and save it in work RAM
ST1322
Packet group formed ?
YES
NO
ST1340
PKT_GRP_GI setting process
ST1330
CCI setting process
ST1350
NMFI setting process
ST1332
Save 1 packet group in buffer
RETURN

FIG. 50

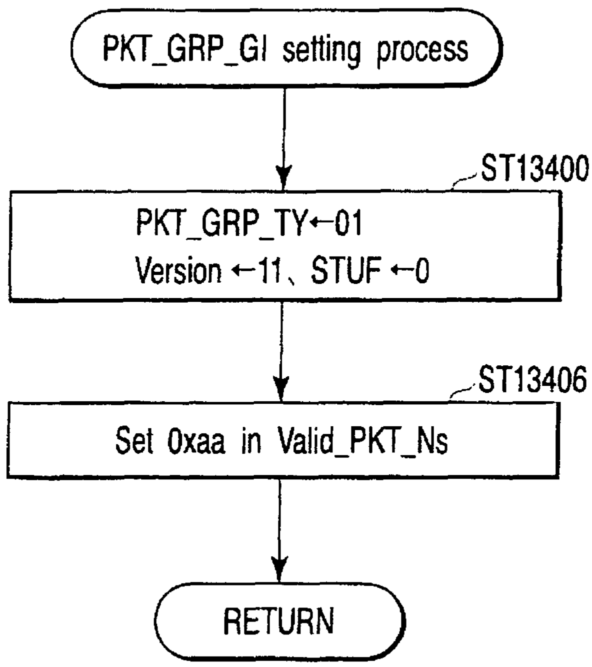
PKT_GRP_GI setting process
ST13400
PKT_GRP_TY←01
Version ←11、STUF ←0
ST13406
Set 0xaa in Valid_PKT_Ns
RETURN

FIG.51

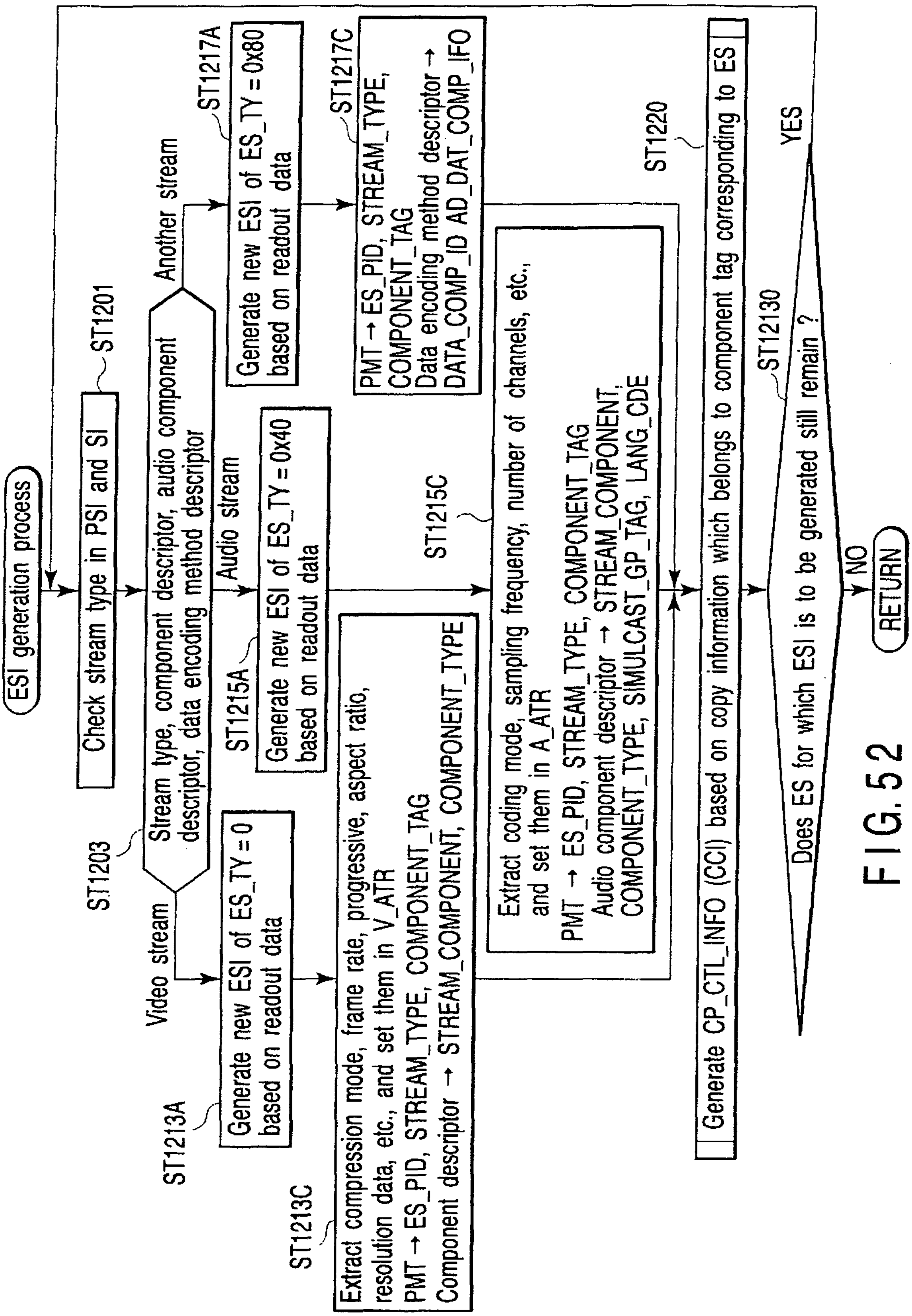
ESI generation process
Check stream type in PSI and SI
ST1201
Stream type, component descriptor, audio component descriptor, data encoding method descriptor
ST1203
Video stream
Audio stream
Another stream
Generate new ESI of ES_TY = 0 based on readout data
ST1213A
Generate new ESI of ES_TY = 0x40 based on readout data
ST1215A
Generate new ESI of ES_TY = 0x80 based on readout data
ST1217A
Extract compression mode, frame rate, progressive, aspect ratio, resolution data, etc., and set them in V_ATR
PMT → ES_PID, STREAM_TYPE, COMPONENT_TAG
Component descriptor → STREAM_COMPONENT, COMPONENT_TYPE
ST1213C
Extract coding mode, sampling frequency, number of channels, etc., and set them in A_ATR
PMT → ES_PID, STREAM_TYPE, COMPONENT_TAG
Audio component descriptor → STREAM_COMPONENT, COMPONENT_TYPE, SIMULCAST_GP_TAG, LANG_CDE
ST1215C
PMT → ES_PID, STREAM_TYPE, COMPONENT_TAG
Data encoding method descriptor → DATA_COMP_ID AD_DAT_COMP_IFO
ST1217C
Generate CP_CTL_INFO (CCI) based on copy information which belongs to component tag corresponding to ES
ST1220
Does ES for which ESI is to be generated still remain ?
ST12130
YES
NO
RETURN

FIG. 52

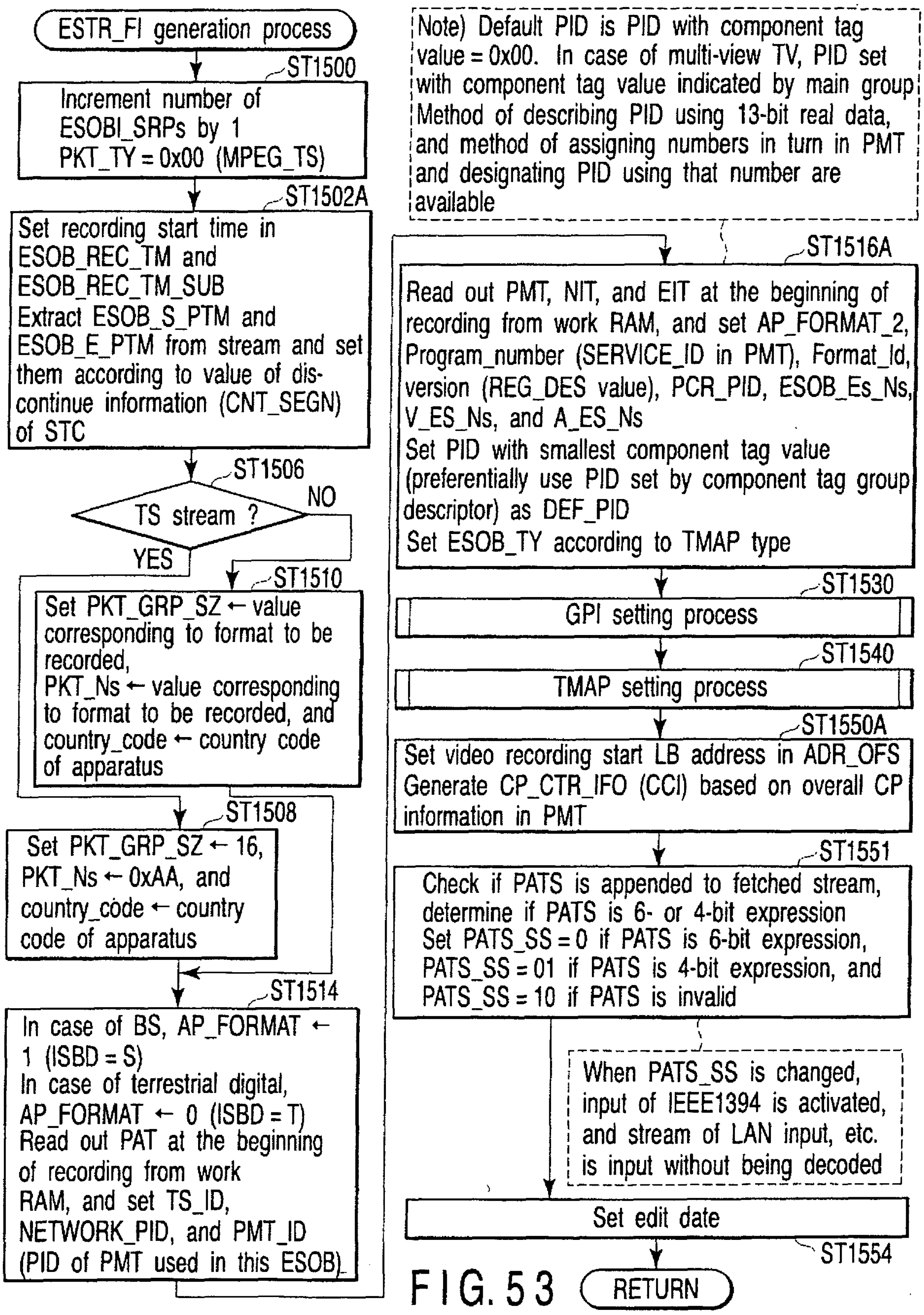
ESTR_FI generation process
ST1500
Increment number of ESOBI_SRPs by 1
PKT_TY = 0x00 (MPEG_TS)
ST1502A
Set recording start time in ESOB_REC_TM and ESOB_REC_TM_SUB
Extract ESOB_S_PTM and ESOB_E_PTM from stream and set them according to value of dis-continue information (CNT_SEGN) of STC
ST1506
TS stream ?
NO
YES
ST1510
Set PKT_GRP_SZ ← value corresponding to format to be recorded,
PKT_Ns ← value corresponding to format to be recorded, and
country_code ← country code of apparatus
ST1508
Set PKT_GRP_SZ ← 16,
PKT_Ns ← 0xAA, and
country_code ← country code of apparatus
ST1514
In case of BS, AP_FORMAT ← 1 (ISBD = S)
In case of terrestrial digital, AP_FORMAT ← 0 (ISBD = T)
Read out PAT at the beginning of recording from work RAM, and set TS_ID, NETWORK_PID, and PMT_ID (PID of PMT used in this ESOB)
Note) Default PID is PID with component tag value = 0x00. In case of multi-view TV, PID set with component tag value indicated by main group Method of describing PID using 13-bit real data, and method of assigning numbers in turn in PMT and designating PID using that number are available
ST1516A
Read out PMT, NIT, and EIT at the beginning of recording from work RAM, and set AP_FORMAT_2, Program_number (SERVICE_ID in PMT), Format_Id, version (REG_DES value), PCR_PID, ESOB_Es_Ns, V_ES_Ns, and A_ES_Ns
Set PID with smallest component tag value (preferentially use PID set by component tag group descriptor) as DEF_PID
Set ESOB_TY according to TMAP type
ST1530
GPI setting process
ST1540
TMAP setting process
ST1550A
Set video recording start LB address in ADR_OFS
Generate CP_CTR_IFO (CCI) based on overall CP information in PMT
ST1551
Check if PATS is appended to fetched stream, determine if PATS is 6- or 4-bit expression
Set PATS_SS = 0 if PATS is 6-bit expression,
PATS_SS = 01 if PATS is 4-bit expression, and
PATS_SS = 10 if PATS is invalid
When PATS_SS is changed, input of IEEE1394 is activated, and stream of LAN input, etc. is input without being decoded
Set edit date
ST1554
RETURN

FIG. 53

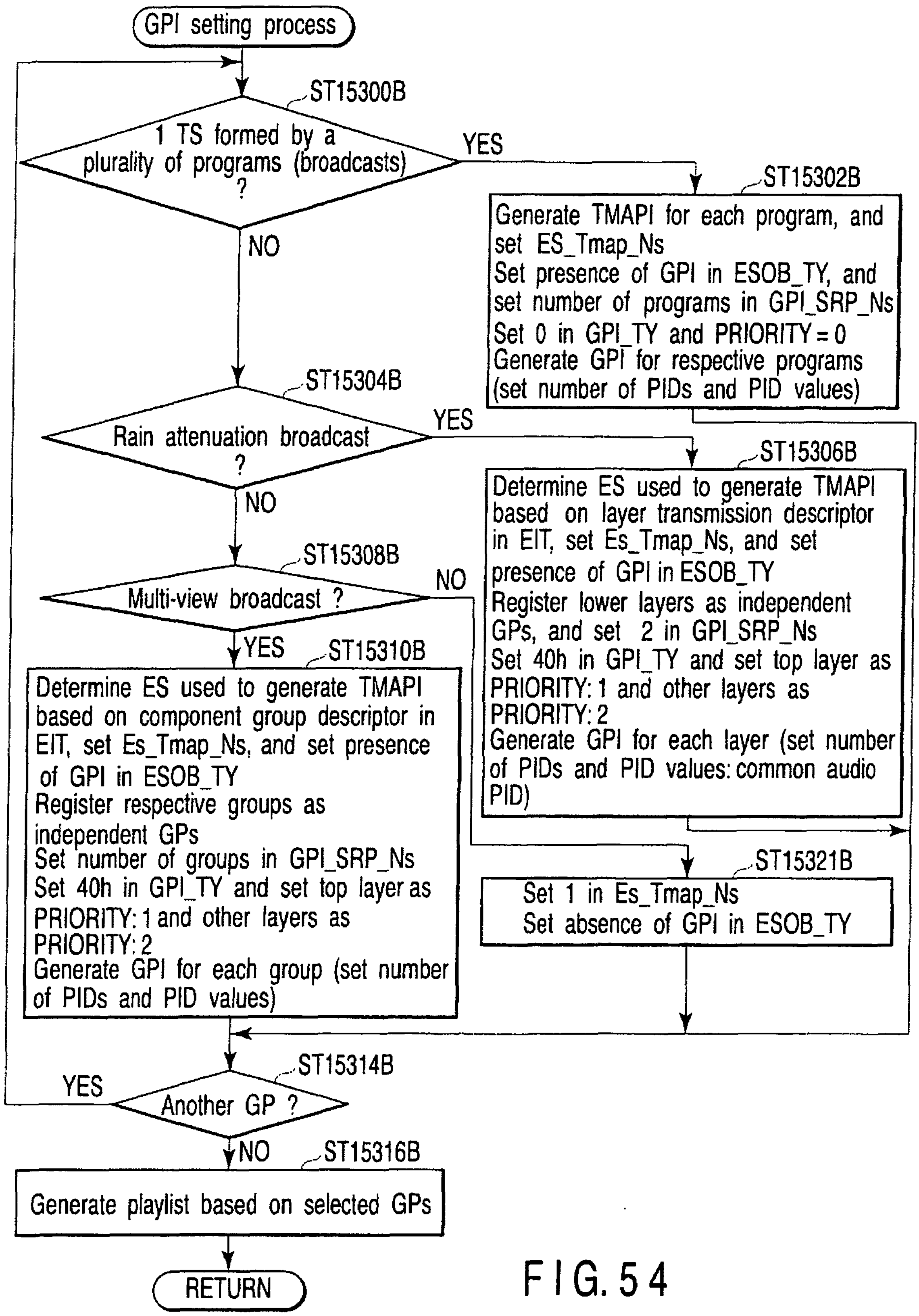
GPI setting process
ST15300B
1 TS formed by a plurality of programs (broadcasts) ?
YES
ST15302B
Generate TMAPI for each program, and set ES_Tmap_Ns
Set presence of GPI in ESOB_TY, and set number of programs in GPI_SRP_Ns
Set 0 in GPI_TY and PRIORITY = 0
Generate GPI for respective programs (set number of PIDs and PID values)
NO
ST15304B
Rain attenuation broadcast ?
YES
ST15306B
Determine ES used to generate TMAPI based on layer transmission descriptor in EIT, set Es_Tmap_Ns, and set presence of GPI in ESOB_TY
Register lower layers as independent GPs, and set 2 in GPI_SRP_Ns
Set 40h in GPI_TY and set top layer as PRIORITY: 1 and other layers as PRIORITY: 2
Generate GPI for each layer (set number of PIDs and PID values: common audio PID)
NO
ST15308B
Multi-view broadcast ?
NO
YES
ST15310B
Determine ES used to generate TMAPI based on component group descriptor in EIT, set Es_Tmap_Ns, and set presence of GPI in ESOB_TY
Register respective groups as independent GPs
Set number of groups in GPI_SRP_Ns
Set 40h in GPI_TY and set top layer as PRIORITY: 1 and other layers as PRIORITY: 2
Generate GPI for each group (set number of PIDs and PID values)
ST15321B
Set 1 in Es_Tmap_Ns
Set absence of GPI in ESOB_TY
ST15314B
YES
Another GP ?
NO
ST15316B
Generate playlist based on selected GPs
RETURN

FIG. 54

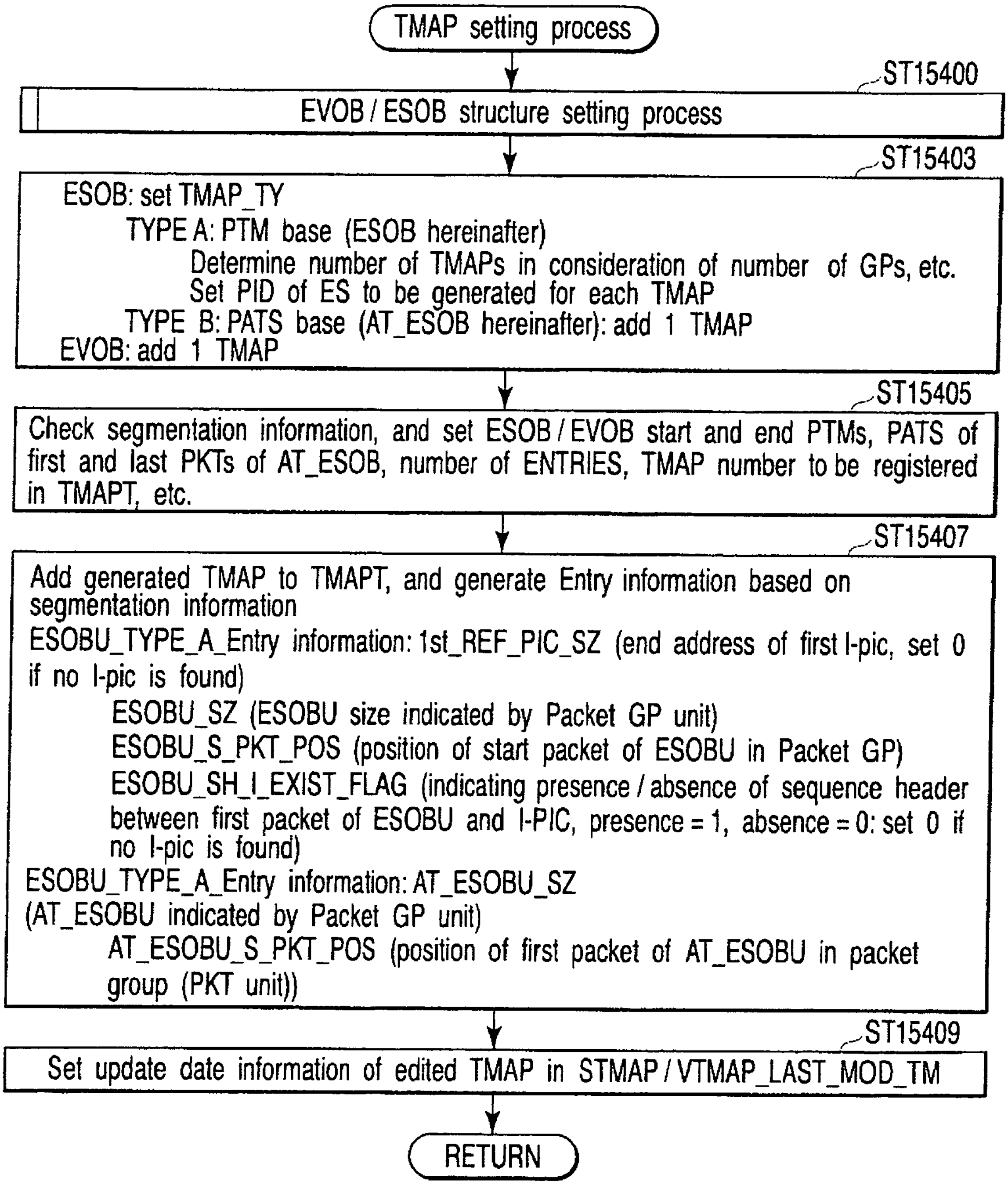
TMAP setting process
ST15400
EVOB / ESOB structure setting process
ST15403
ESOB: set TMAP_TY
TYPE A: PTM base (ESOB hereinafter)
Determine number of TMAPs in consideration of number of GPs, etc.
Set PID of ES to be generated for each TMAP
TYPE B: PATS base (AT_ESOB hereinafter): add 1 TMAP
EVOB: add 1 TMAP
ST15405
Check segmentation information, and set ESOB / EVOB start and end PTMs, PATS of first and last PKTs of AT_ESOB, number of ENTRIES, TMAP number to be registered in TMAPT, etc.
ST15407
Add generated TMAP to TMAPT, and generate Entry information based on segmentation information
ESOBU_TYPE_A_Entry information: 1st_REF_PIC_SZ (end address of first I-pic, set 0 if no I-pic is found)
ESOBU_SZ (ESOBU size indicated by Packet GP unit)
ESOBU_S_PKT_POS (position of start packet of ESOBU in Packet GP)
ESOBU_SH_I_EXIST_FLAG (indicating presence / absence of sequence header between first packet of ESOBU and I-PIC, presence = 1, absence = 0: set 0 if no I-pic is found)
ESOBU_TYPE_A_Entry information: AT_ESOBU_SZ
(AT_ESOBU indicated by Packet GP unit)
AT_ESOBU_S_PKT_POS (position of first packet of AT_ESOBU in packet group (PKT unit))
ST15409
Set update date information of edited TMAP in STMAP / VTMAP_LAST_MOD_TM
RETURN

FIG. 55

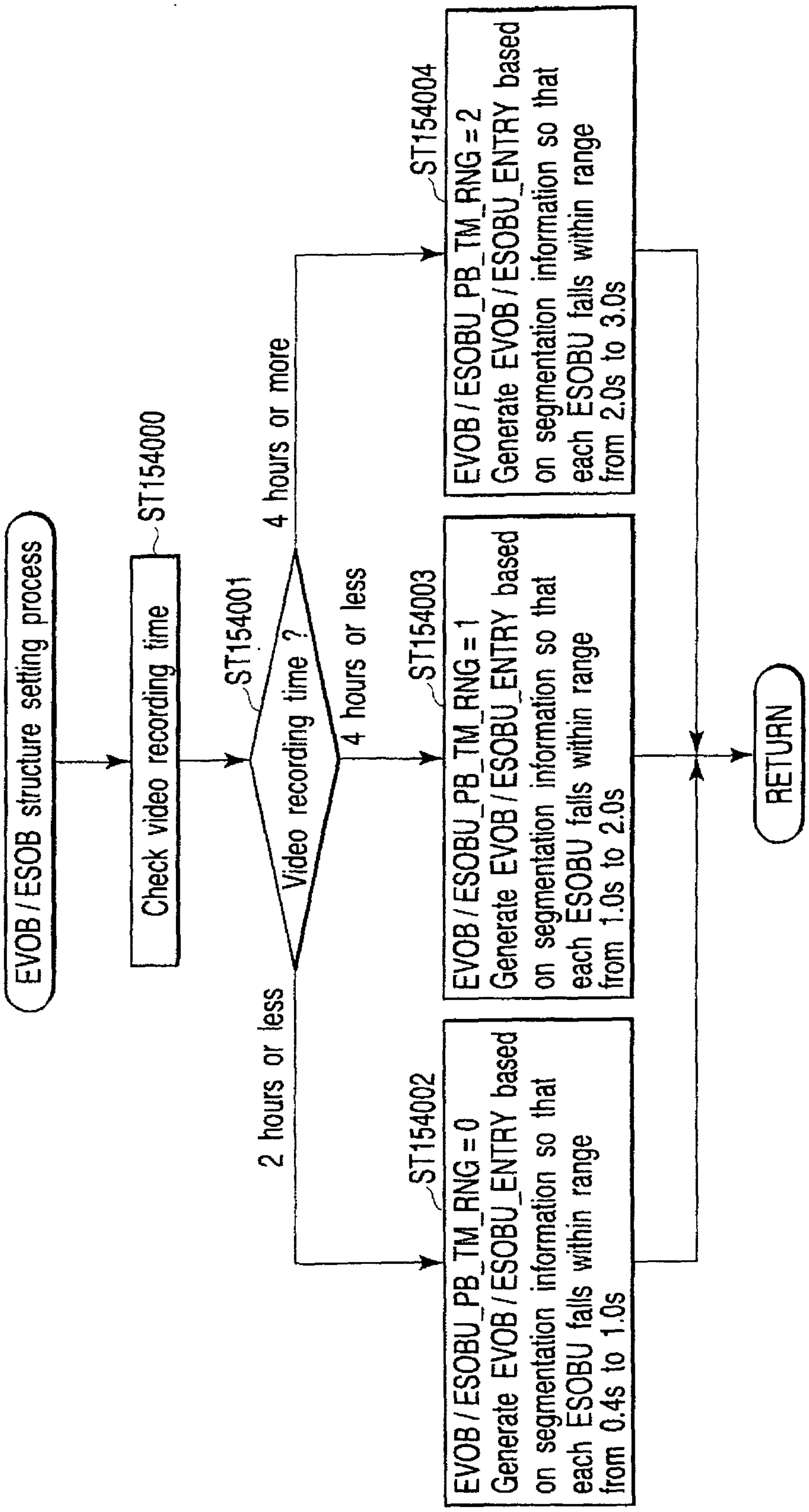
EVOB / ESOB structure setting process
Check video recording time
ST154000
Video recording time ?
ST154001
2 hours or less
4 hours or less
4 hours or more
EVOB / ESOBU_PB_TM_RNG = 0
Generate EVOB / ESOBU_ENTRY based on segmentation information so that each ESOBU falls within range from 0.4s to 1.0s
ST154002
EVOB / ESOBU_PB_TM_RNG = 1
Generate EVOB / ESOBU_ENTRY based on segmentation information so that each ESOBU falls within range from 1.0s to 2.0s
ST154003
EVOB / ESOBU_PB_TM_RNG = 2
Generate EVOB / ESOBU_ENTRY based on segmentation information so that each ESOBU falls within range from 2.0s to 3.0s
ST154004
RETURN

FIG. 56

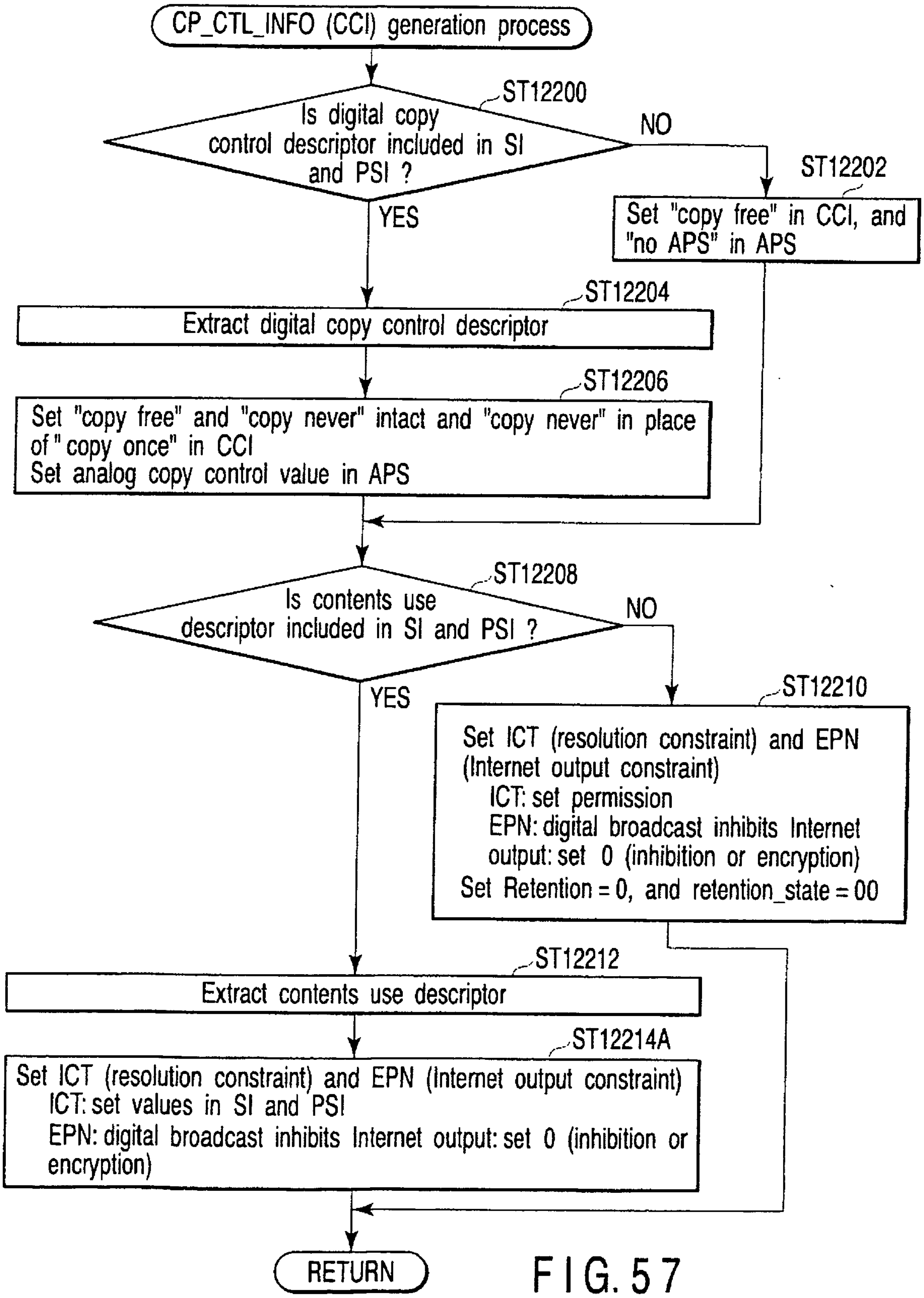
CP_CTL_INFO (CCI) generation process
ST12200
Is digital copy control descriptor included in SI and PSI ?
NO
YES
ST12202
Set "copy free" in CCI, and "no APS" in APS
ST12204
Extract digital copy control descriptor
ST12206
Set "copy free" and "copy never" intact and "copy never" in place of "copy once" in CCI
Set analog copy control value in APS
ST12208
Is contents use descriptor included in SI and PSI ?
NO
YES
ST12210
Set ICT (resolution constraint) and EPN (Internet output constraint)
ICT: set permission
EPN: digital broadcast inhibits Internet output: set 0 (inhibition or encryption)
Set Retention = 0, and retention_state = 00
ST12212
Extract contents use descriptor
ST12214A
Set ICT (resolution constraint) and EPN (Internet output constraint)
ICT: set values in SI and PSI
EPN: digital broadcast inhibits Internet output: set 0 (inhibition or encryption)
RETURN

FIG. 57

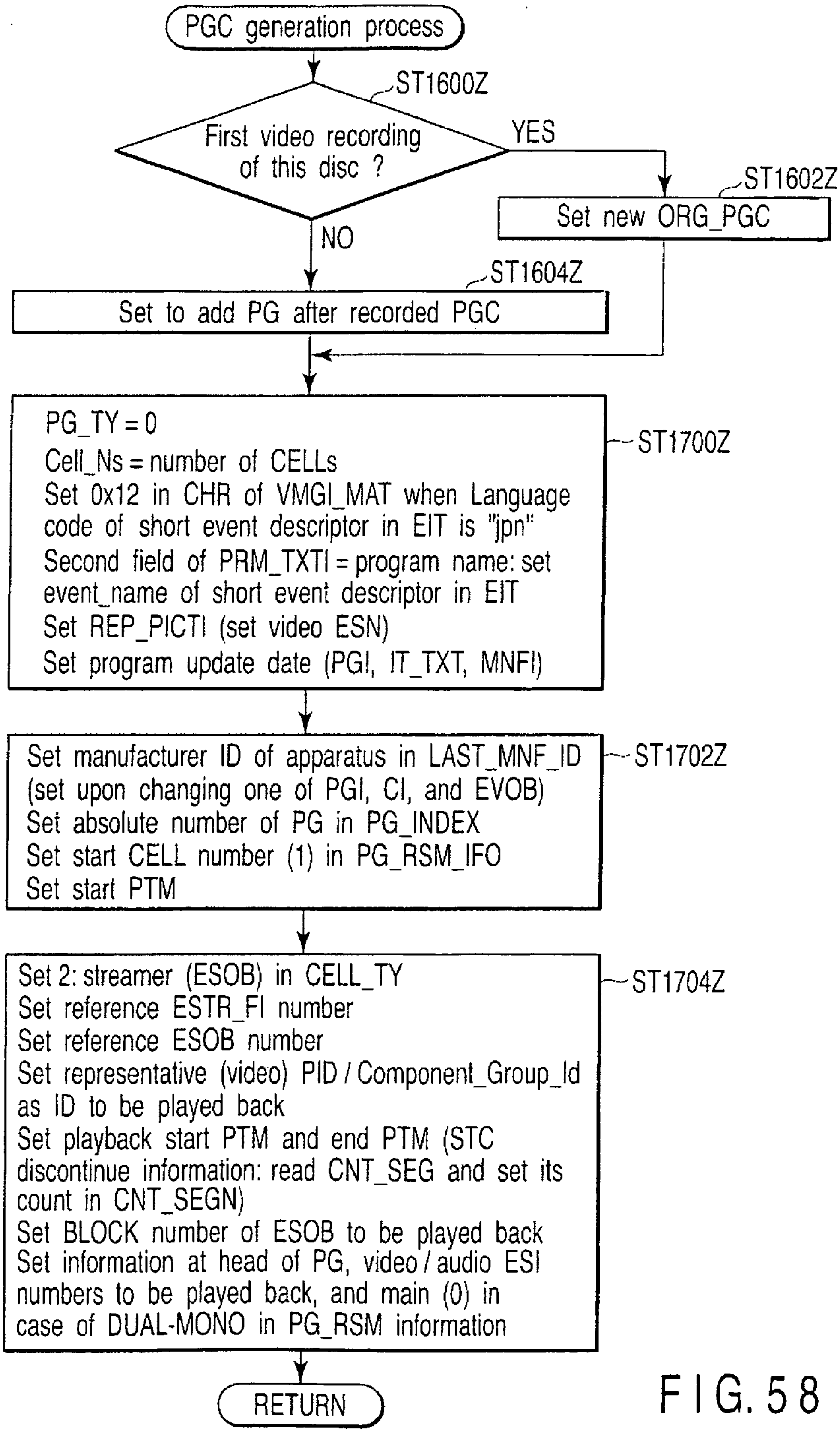
PGC generation process
ST1600Z
First video recording of this disc ?
YES
NO
ST1602Z
Set new ORG_PGC
ST1604Z
Set to add PG after recorded PGC
PG_TY = 0
Cell_Ns = number of CELLs
Set 0x12 in CHR of VMGI_MAT when Language code of short event descriptor in EIT is "jpn"
Second field of PRM_TXTI = program name: set event_name of short event descriptor in EIT
Set REP_PICTI (set video ESN)
Set program update date (PGI, IT_TXT, MNFI)
ST1700Z
Set manufacturer ID of apparatus in LAST_MNF_ID (set upon changing one of PGI, CI, and EVOB)
Set absolute number of PG in PG_INDEX
Set start CELL number (1) in PG_RSM_IFO
Set start PTM
ST1702Z
Set 2: streamer (ESOB) in CELL_TY
Set reference ESTR_FI number
Set reference ESOB number
Set representative (video) PID / Component_Group_Id as ID to be played back
Set playback start PTM and end PTM (STC discontinue information: read CNT_SEG and set its count in CNT_SEGN)
Set BLOCK number of ESOB to be played back
Set information at head of PG, video / audio ESI numbers to be played back, and main (0) in case of DUAL-MONO in PG_RSM information
ST1704Z
RETURN

FIG. 58

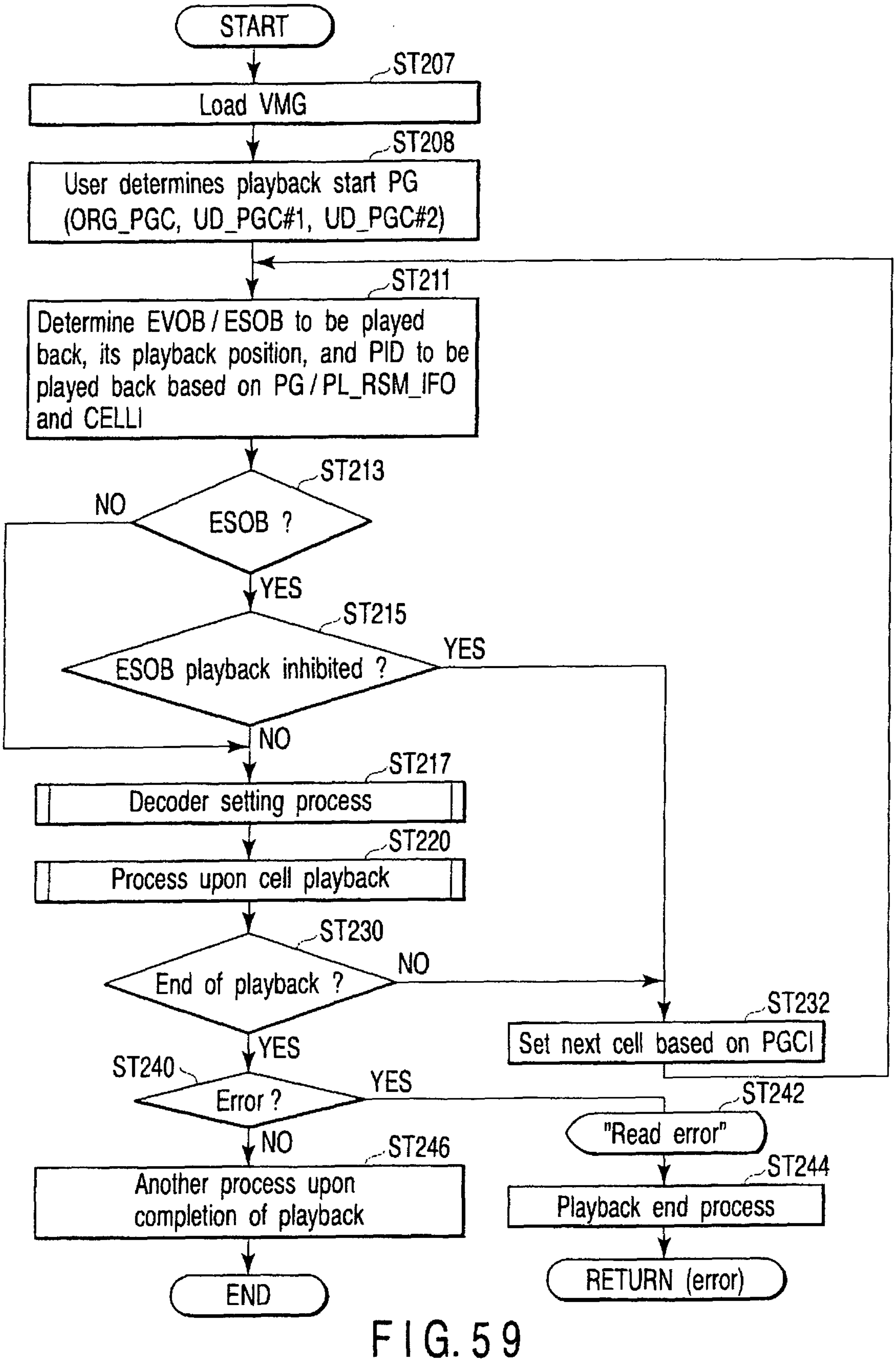
START
ST207
Load VMG
ST208
User determines playback start PG (ORG_PGC, UD_PGC#1, UD_PGC#2)
ST211
Determine EVOB / ESOB to be played back, its playback position, and PID to be played back based on PG / PL_RSM_IFO and CELLI
ST213
ESOB ?
NO
YES
ST215
ESOB playback inhibited ?
YES
NO
ST217
Decoder setting process
ST220
Process upon cell playback
ST230
End of playback ?
NO
YES
ST232
Set next cell based on PGCI
ST240
Error ?
YES
NO
ST242
"Read error"
ST244
Playback end process
RETURN (error)
ST246
Another process upon completion of playback
END

FIG. 59

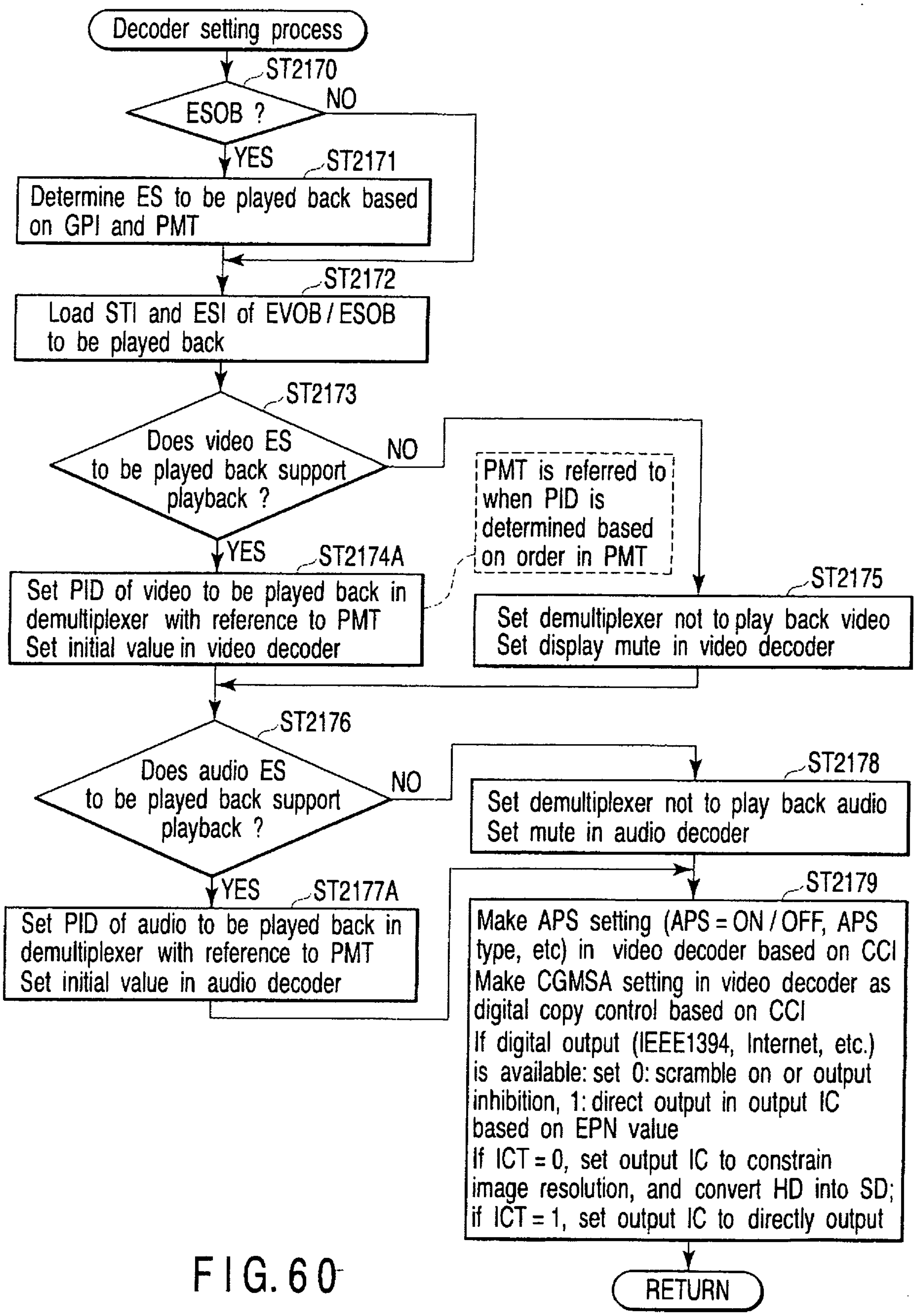
Decoder setting process
ST2170
ESOB ?
NO
YES
ST2171
Determine ES to be played back based on GPI and PMT
ST2172
Load STI and ESI of EVOB / ESOB to be played back
ST2173
Does video ES to be played back support playback ?
NO
YES
ST2174A
Set PID of video to be played back in demultiplexer with reference to PMT
Set initial value in video decoder
PMT is referred to when PID is determined based on order in PMT
ST2175
Set demultiplexer not to play back video
Set display mute in video decoder
ST2176
Does audio ES to be played back support playback ?
NO
YES
ST2177A
Set PID of audio to be played back in demultiplexer with reference to PMT
Set initial value in audio decoder
ST2178
Set demultiplexer not to play back audio
Set mute in audio decoder
ST2179
Make APS setting (APS = ON / OFF, APS type, etc) in video decoder based on CCI
Make CGMSA setting in video decoder as digital copy control based on CCI
If digital output (IEEE1394, Internet, etc.) is available: set 0: scramble on or output inhibition, 1: direct output in output IC based on EPN value
If ICT = 0, set output IC to constrain image resolution, and convert HD into SD; if ICT = 1, set output IC to directly output
RETURN

FIG.60

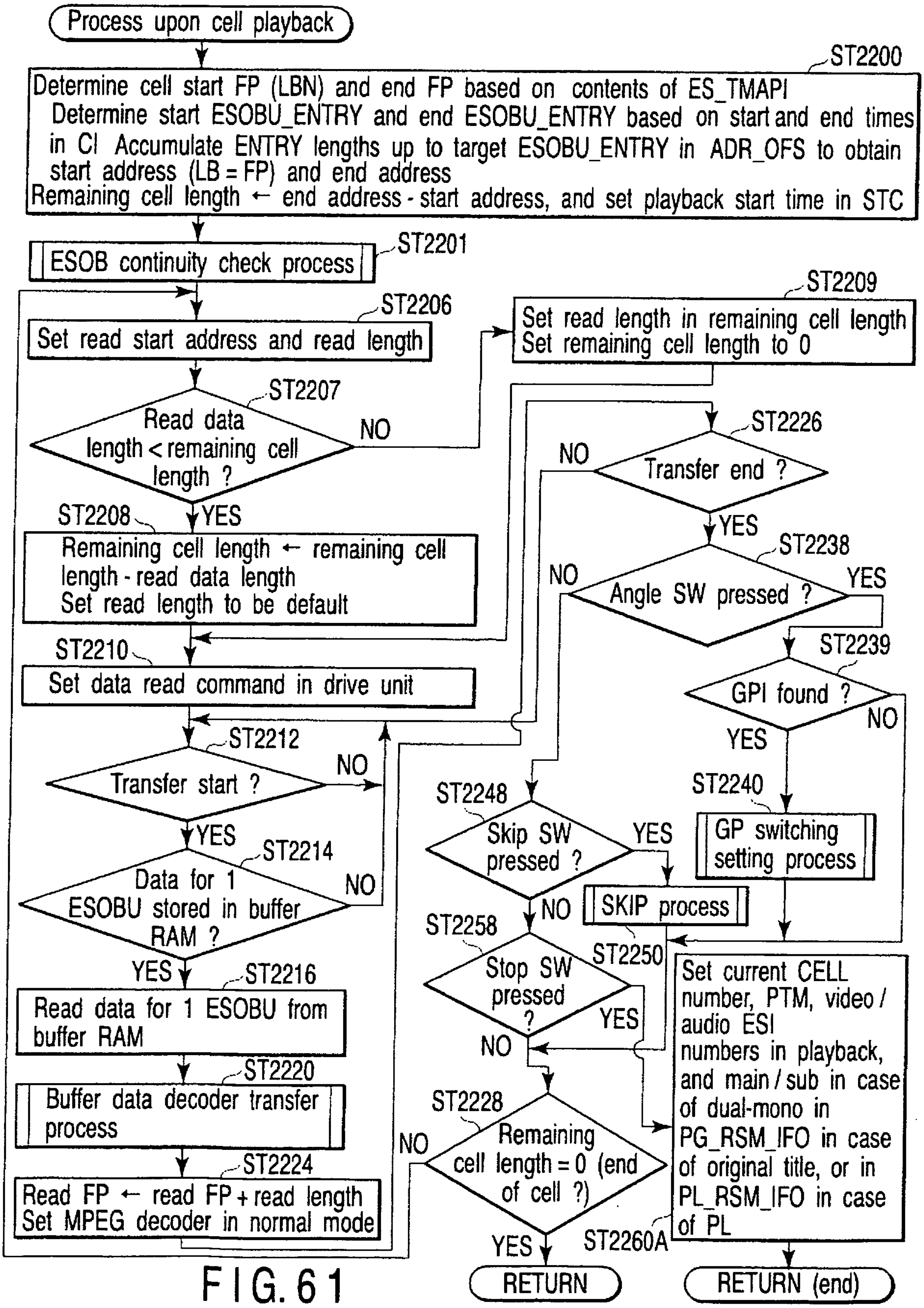
Process upon cell playback
ST2200
Determine cell start FP (LBN) and end FP based on contents of ES_TMAPI
Determine start ESOBU_ENTRY and end ESOBU_ENTRY based on start and end times in CI Accumulate ENTRY lengths up to target ESOBU_ENTRY in ADR_OFS to obtain start address (LB = FP) and end address
Remaining cell length ← end address - start address, and set playback start time in STC
ST2201
ESOB continuity check process
ST2206
Set read start address and read length
ST2207
Read data length < remaining cell length ?
NO
ST2209
Set read length in remaining cell length
Set remaining cell length to 0
ST2208
YES
Remaining cell length ← remaining cell length - read data length
Set read length to be default
ST2210
Set data read command in drive unit
ST2212
Transfer start ?
NO
YES
ST2214
Data for 1 ESOBU stored in buffer RAM ?
NO
YES
ST2216
Read data for 1 ESOBU from buffer RAM
ST2220
Buffer data decoder transfer process
ST2224
Read FP ← read FP + read length
Set MPEG decoder in normal mode
ST2226
Transfer end ?
NO
YES
ST2238
Angle SW pressed ?
NO
YES
ST2239
GPI found ?
YES
NO
ST2240
GP switching setting process
ST2248
Skip SW pressed ?
YES
NO
SKIP process
ST2250
ST2258
Stop SW pressed ?
YES
NO
Set current CELL number, PTM, video / audio ESI numbers in playback, and main / sub in case of dual-mono in PG_RSM_IFO in case of original title, or in PL_RSM_IFO in case of PL
ST2228
Remaining cell length = 0 (end of cell ?)
NO
YES
ST2260A
RETURN
RETURN (end)

F I G. 6 1

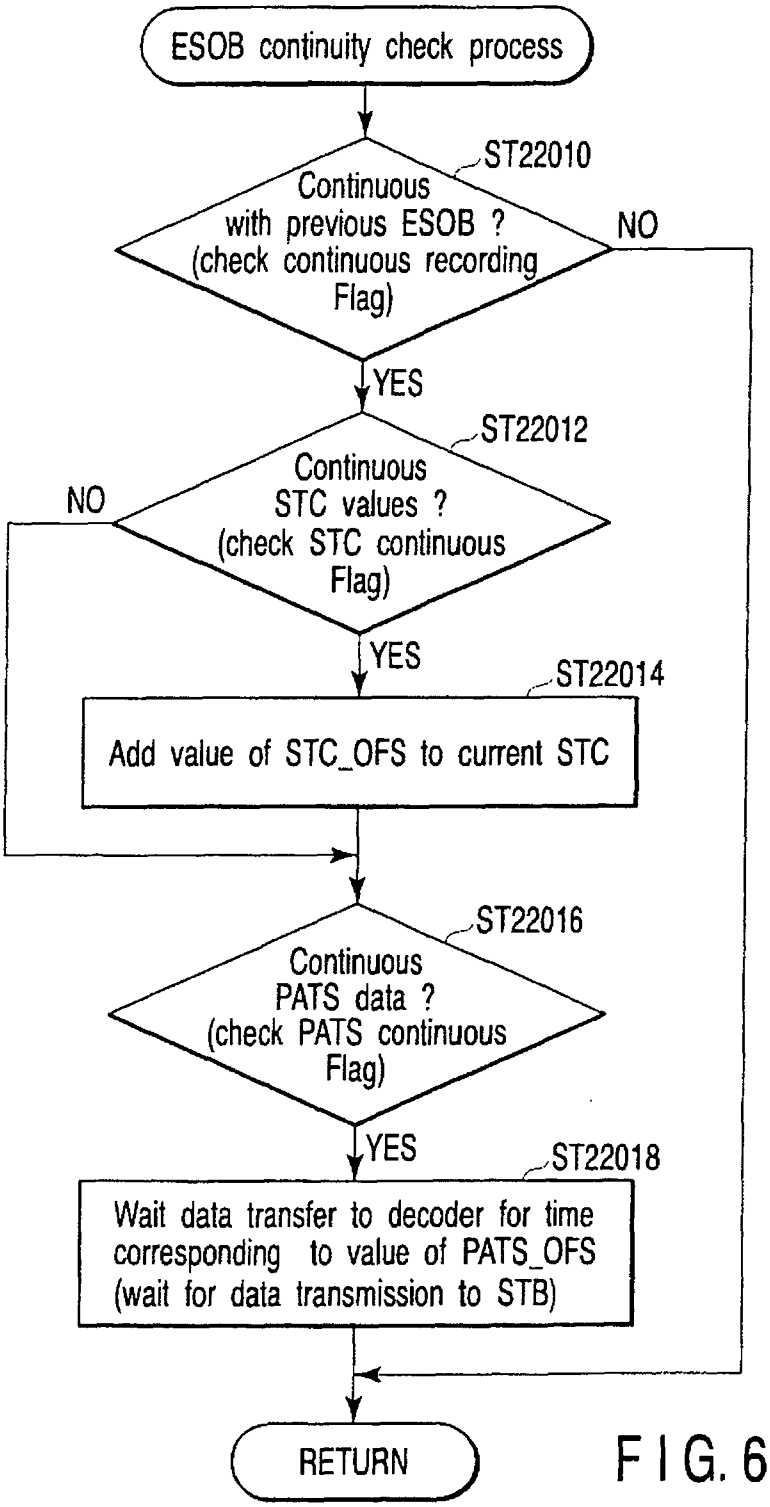
ESOB continuity check process
ST22010
Continuous with previous ESOB ? (check continuous recording Flag)
NO
YES
ST22012
Continuous STC values ? (check STC continuous Flag)
NO
YES
ST22014
Add value of STC_OFS to current STC
ST22016
Continuous PATS data ? (check PATS continuous Flag)
YES
ST22018
Wait data transfer to decoder for time corresponding to value of PATS_OFS (wait for data transmission to STB)
RETURN

FIG. 62

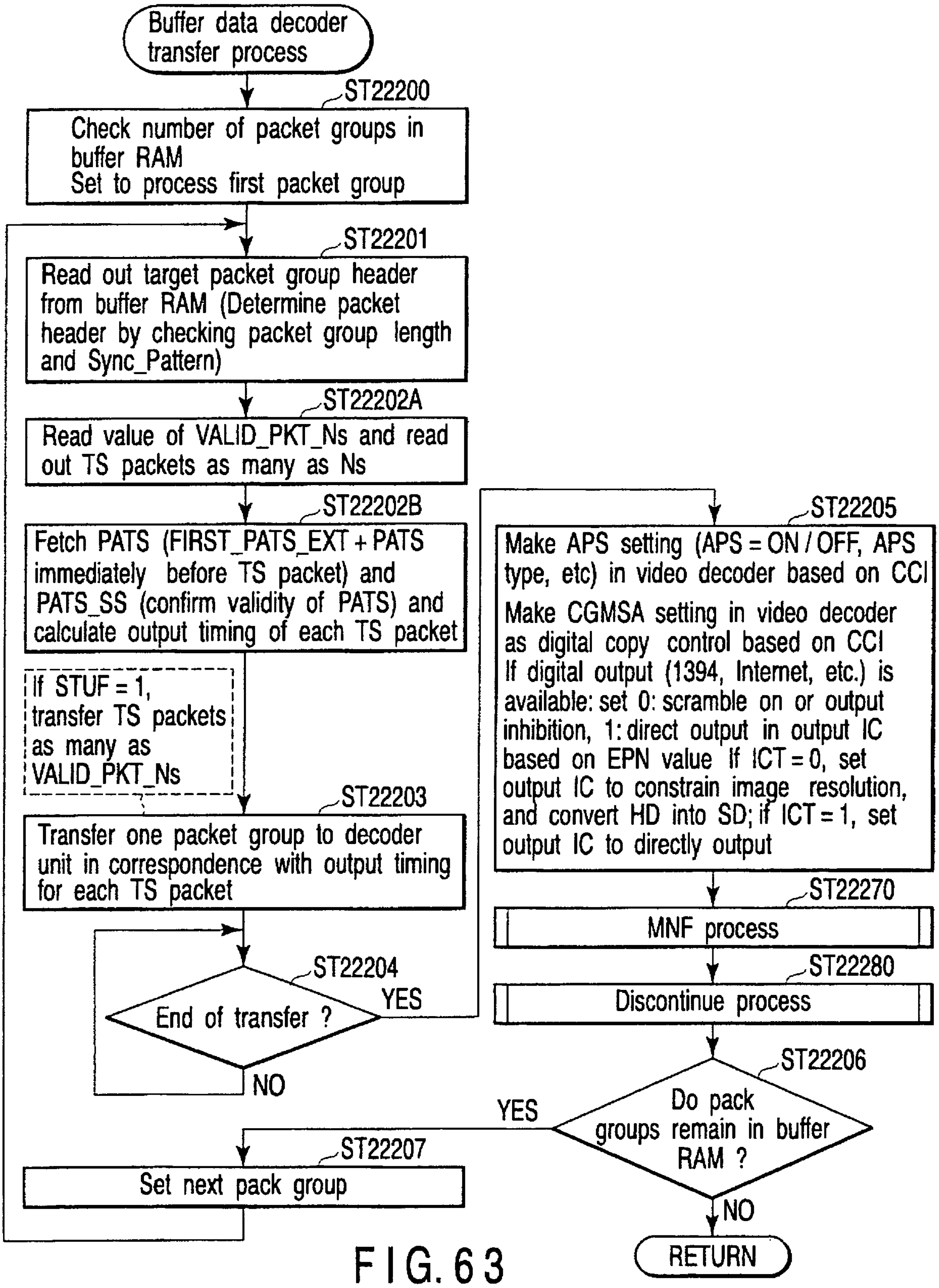
Buffer data decoder transfer process
ST22200
Check number of packet groups in buffer RAM
Set to process first packet group
ST22201
Read out target packet group header from buffer RAM (Determine packet header by checking packet group length and Sync_Pattern)
ST22202A
Read value of VALID_PKT_Ns and read out TS packets as many as Ns
ST22202B
Fetch PATS (FIRST_PATS_EXT + PATS immediately before TS packet) and PATS_SS (confirm validity of PATS) and calculate output timing of each TS packet
If STUF = 1, transfer TS packets as many as VALID_PKT_Ns
ST22203
Transfer one packet group to decoder unit in correspondence with output timing for each TS packet
ST22204
End of transfer ?
YES
NO
ST22205
Make APS setting (APS = ON / OFF, APS type, etc) in video decoder based on CCI
Make CGMSA setting in video decoder as digital copy control based on CCI
If digital output (1394, Internet, etc.) is available: set 0: scramble on or output inhibition, 1: direct output in output IC based on EPN value If ICT = 0, set output IC to constrain image resolution, and convert HD into SD; if ICT = 1, set output IC to directly output
ST22270
MNF process
ST22280
Discontinue process
ST22206
Do pack groups remain in buffer RAM ?
YES
NO
ST22207
Set next pack group
RETURN

FIG. 63

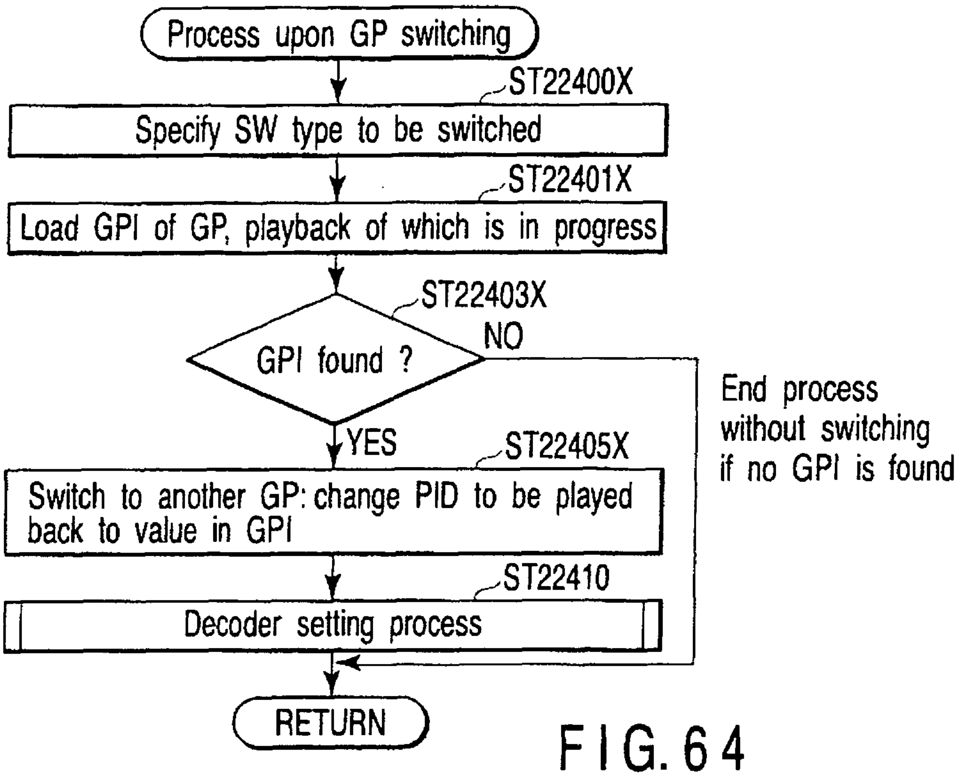
Process upon GP switching
ST22400X
Specify SW type to be switched
ST22401X
Load GPI of GP, playback of which is in progress
ST22403X
GPI found ?
NO
End process without switching if no GPI is found
YES
ST22405X
Switch to another GP: change PID to be played back to value in GPI
ST22410
Decoder setting process
RETURN

FIG. 64

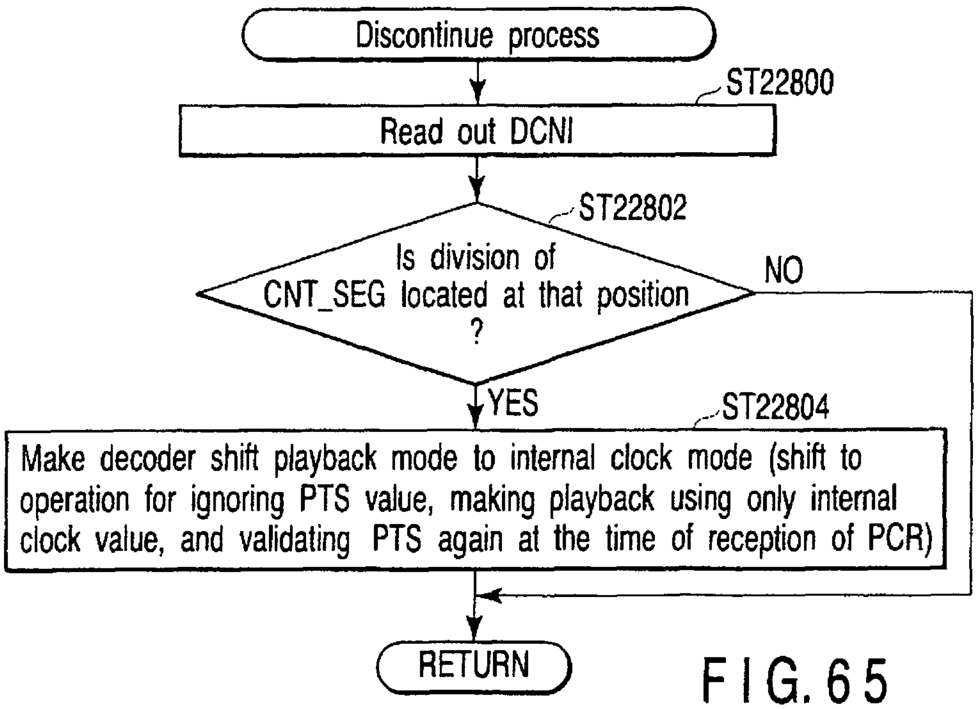
Discontinue process
ST22800
Read out DCNI
ST22802
Is division of CNT_SEG located at that position ?
NO
YES
ST22804
Make decoder shift playback mode to internal clock mode (shift to operation for ignoring PTS value, making playback using only internal clock value, and validating PTS again at the time of reception of PCR)
RETURN

FIG. 65

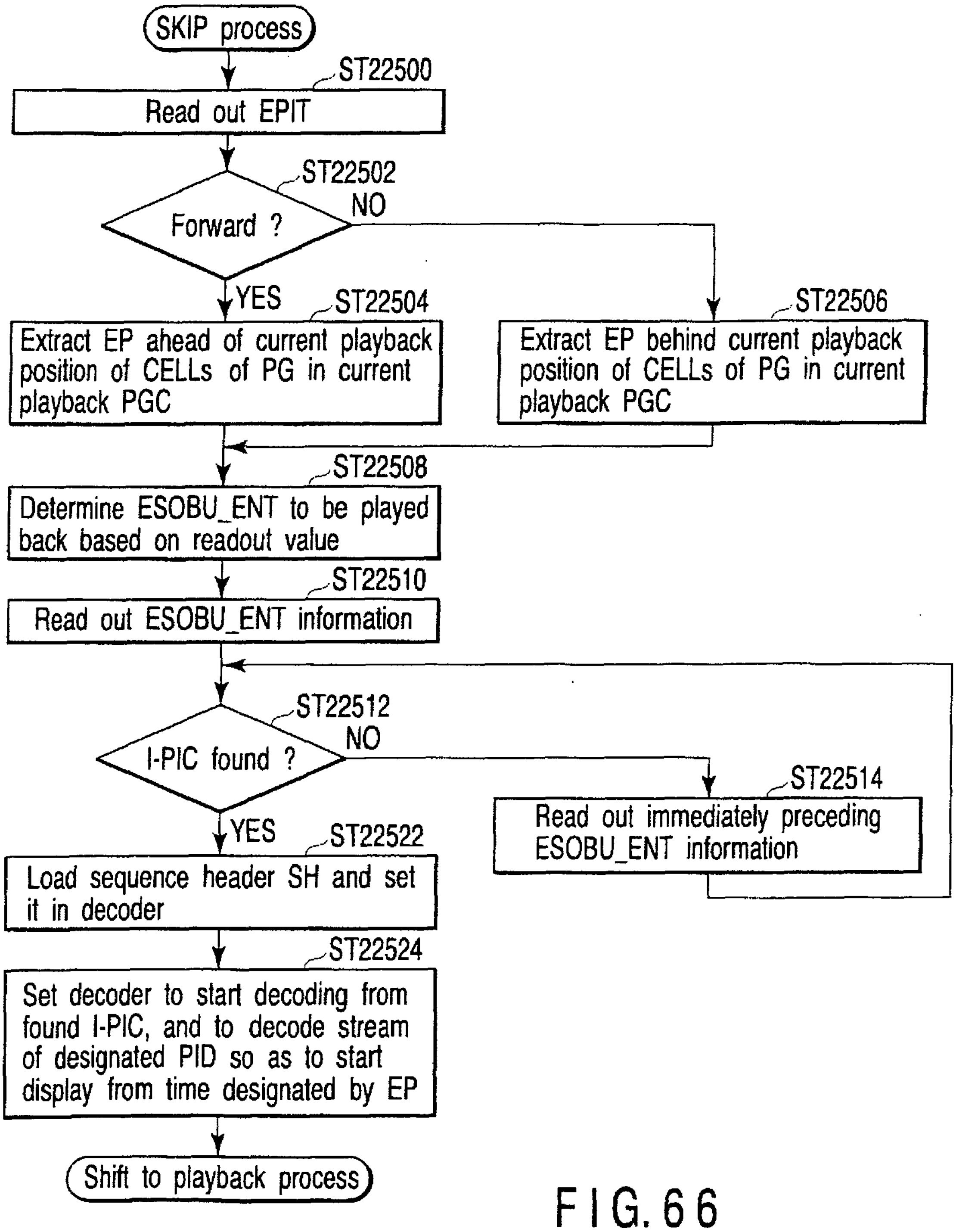
SKIP process
ST22500
Read out EPIT
ST22502
Forward ?
NO
YES
ST22504
Extract EP ahead of current playback position of CELLs of PG in current playback PGC
ST22506
Extract EP behind current playback position of CELLs of PG in current playback PGC
ST22508
Determine ESOBU_ENT to be played back based on readout value
ST22510
Read out ESOBU_ENT information
ST22512
I-PIC found ?
NO
ST22514
Read out immediately preceding ESOBU_ENT information
YES
ST22522
Load sequence header SH and set it in decoder
ST22524
Set decoder to start decoding from found I-PIC, and to decode stream of designated PID so as to start display from time designated by EP
Shift to playback process

FIG. 66

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1367587 A
- US 5859660 A